(19) Europäisches Patentamt
European Patent Office
Office européen des brevets

(11) EP 1 840 177 B1

(12) **EUROPEAN PATENT SPECIFICATION**

(45) Date of publication and mention of the grant of the patent:
**24.03.2010 Bulletin 2010/12**

(51) Int Cl.:
***C09D 11/00*** *(2006.01)* ***C09D 11/10*** *(2006.01)*

(21) Application number: **07006535.4**

(22) Date of filing: **29.03.2007**

(54) **Ink set for ink-jet recording and ink-jet recording method**

Tintensatz für Tintenstrahlaufzeichnung und Tintenstrahlaufzeichnungsverfahren

Jeu d'encre pour enregistrement par jet d'encre et procédé d'enregistrement par jet d'encre

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **31.03.2006 JP 2006100903**

(43) Date of publication of application:
**03.10.2007 Bulletin 2007/40**

(73) Proprietor: **FUJIFILM Corporation**
**Minato-ku**
**Tokyo (JP)**

(72) Inventors:
- **Makuta, Toshiyuki**
  **Ashigarakami-gun**
  **Kanagawa (JP)**
- **Konno, Masaaki**
  **Ashigarakami-gun**
  **Kanagawa (JP)**
- **Maeno, Yutaka**
  **Ashigarakami-gun**
  **Kanagawa (JP)**
- **Umebayasi, Tsutomu**
  **Ashigarakami-gun**
  **Kanagawa (JP)**
- **Tsuchimura, Tomotaka**
  **Ashigarakami-gun**
  **Kanagawa (JP)**
- **Kadomatsu, Tetsuzo**
  **Ashigarakami-gun**
  **Kanagawa (JP)**

(74) Representative: **HOFFMANN EITLE**
**Patent- und Rechtsanwälte**
**Arabellastrasse 4**
**81925 München (DE)**

(56) References cited:
**EP-A- 1 630 213** **EP-A- 1 688 467**
**EP-A- 1 783 184** **US-A1- 2004 244 641**
**US-A1- 2005 287 476** **US-A1- 2006 055 088**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 840 177 B1

## Description

BACKGROUND OF THE INVENTION

Field of the Invention

The present invention relates to an ink set for ink-jet recording and an ink-jet recording method, and specifically relates to a multi-fluid ink set for ink-jet recording excellent in image reproducibility and an ink-jet recording method using the same.

Description of the Related Art

Inkjet systems that eject ink in a liquid droplet form from an ink ejecting port such as a nozzle or the like are small, inexpensive, capable of image formation without contact at a printing medium, and the like, and thus are used in many printers. Of these inkjet systems, a piezo inkjet system of ejecting ink by use of the distortion of a piezoelectric element and a thermal inkjet system of ejecting liquid droplets by use of boiling phenomena of ink by thermal energy have high resolution and are excellent in high-speed printing.

At present, an inkjet printer suffers from the important problems of speeding-up printing when ink is drop jetted on a non-hydrophilic recording medium such as plain paper or plastics and improving image quality.

Ink-jet recording continuously ejects liquid droplets of ink (liquid) in the form of a liquid droplet n1, liquid droplet n2, liquid droplet n3,..., and liquid droplet nx, and forms a line or an image or the like by means of a liquid droplet n1, liquid droplet n2, liquid droplet n3, ..., and liquid droplet nx. In this case, spending much time particularly penetrating liquid droplets after jets of droplets is prone to generate blurs on an image and causes mixing between adjacent ink liquid droplets n1 and n2, thereby presenting substantial problems such as prevention of clear and sharp image formation. Mixing between liquid droplets causes drop jetted, adjacent liquid droplets to be unified and the movement of droplets to take place. Hence, droplets deviate from jetted positions, thereby generating unevenness of line widths when narrow lines are drawn, or generating discoloration or the like when a colored face is drawn.

The methods of restraining unevenness or the like of blurs or line widths of an image include methods of enhancing hardening of ink. As one of these, proposed is a technique of hardening and fixing by radiation, not by evaporation of an ink solvent. Additionally, for the impartation of precise drawing, a two-fluid ink system is used and both inks are allowed to react on a recording medium. The methods that are disclosed include, for example, a method of sticking a liquid having a basic polymer and then ejecting an ink containing an anionic dye (e.g., Japanese Patent Application Laid-Open (JP-A) No. 63-60783), a method of applying a liquid composition containing a cationic substance, and then applying an ink containing an anionic compound and color material (e.g., JP-A No. 8-174997), a method of using an ink containing a photo-curable resin on one side, and an ink containing a photo-polymerizing initiator on the other side (e.g., Japanese Patent No. 3478495), etc.

The methods of restraining unevenness or the like of blurs or line widths of an image include methods of enhancing hardening of ink. As one of these, proposed is a technique of hardening and fixing by radiation, not by evaporation of an ink solvent. Specifically, the disclosed methods that involve reacting two inks on a recording medium in a two-fluid ink system for the maintenance of both storage stability and high-speed drying properties include, for example, a method of sticking a liquid having a basic polymer and then ejecting an ink containing an anionic dye (e.g., Japanese Patent Application Laid-Open (JP-A) No. 63-60783), a method of applying a liquid composition containing a cationic substance, and then applying an ink containing an anionic compound and color material (e.g., JP-A No. 8-174997), a method of using an ink containing a photo-curable resin on one side, and an ink containing a photo-polymerizing initiator on the other side (e.g., Japanese Patent No. 3478495), etc.

However, although these methods have an effect on the restraint of blurs of an image to some extent, they insufficiently solve unevenness of line widths, discoloration and the like, attributable to intermixing of liquid droplets, show slow drying speeds due to inclusion of a water-based solvent, and also has a concern leading to a decrease in image quality since a dye deposited tends to unevenly distribute.

The techniques related to the above include a technique of hardening and fixing ink by radiation using a pigment as a coloring component (e.g., JP-A No. 8-218018). This document describes a technique of forming pixels using either an ink containing a monomer to be solidified or an ink containing pigment dispersions, and forming pixels at the same points as the points of the above image using the other ink, and then hardening the resulting image by means of ultraviolet rays, electron beams or the like.

In addition, a document describes a technique of sticking an aggregation solution containing an aggregating agent generating an aggregate by use of an ink composition containing a reactive monomer, colorant and the like, along with water, and the aggregation solution, and subsequently sticking the above ink composition (e.g., JP-ANo. 2001-348519). Moreover, a document describes a technique of imparting a reaction solution containing a photo-polymerization initiator on the entire medium surface, imparting an ink composition containing a monomer thereto, and then exposing the surface to ultraviolet irradiation (e.g., Japanese Patent No. 3642152).

In addition to the above, a document describes another technique of separating inks into two kinds and drop jetting them so as to overlap with each other on the medium surface (e.g., JP-A No. 2000-135781).

## SUMMARY OF THE INVENTION

However, an ink-jet recording using two fluids contain therein each reaction component such as a polymerization initiator or polymerizing compound as two separate fluids and blend each of the components after jetting each fluid for polymerization, thereby suffering the disadvantage of being prone to be insufficient in polymerization. This tends to lower the adherence and fretting resistance of an ink to a recording medium and worsen the stickiness of an ink on a recording medium. These disadvantages are difficult to sufficiently restrain only by the prior art described above.

As a result of intensive research, the present inventers have found that it is possible to improve adherence and fretting resistance and restrain the stickiness of an ink by using a specific polymerization initiator in an ink-jet recording using two fluids; and the invention has been accomplished on the basis of these findings.

The invention is as follows:

(1) An ink set for ink-jet recording includes at least one first liquid A for forming at least an image and at least one second liquid B different in composition from the above first liquid A, wherein at least the liquid A contains a polymerizing or crosslinking material, at least one the above first liquid A and the second liquid B contains a triarylsulfonium salt polymerization initiator having one or more aryl backbones having an electron-accepting group as a substituent, the first liquid A contains a colorant, and the second liquid B does not contain a colorant.

(2) A feature of the ink-jet recording method is that the above second liquid B is imparted in advance to the same area, on a recorded medium, as the area in which the above first liquid A forms an image, or to a larger area than the image, by use of the ink set according to the invention.

## DETAILED DESCRIPTION OF THE INVENTION

The present invention will be set forth in detail hereinafter.

### <<Ink Set for Ink-jet recording>

An ink set for ink-jet recording of the invention includes at least one first liquid A for forming at least an image and at least one second liquid B different in composition from the above first liquid A, wherein at least the liquid A contains a polymerizing or crosslinking material, and wherein any one liquid of at least the liquids A and B contains a triarylsulfonium salt polymerization initiator having one or more aryl backbones having an electron-accepting group as a substituent.

Additionally, herein, the liquid A or liquid B may simply refer to as an "ink composition."

### <Triarylsulfonium salt polymerization initiator having one or more aryl backbones having an electron-accepting group as a substituent>

In the invention, any one of at least the liquids A and B contains a triarylsulfonium salt polymerization initiator having one or more aryl backbones having an electron-accepting group as a substituent (hereinafter, sometimes referred to as a "specific polymerization initiator").

Particularly preferably, the specific polymerization initiator has a triarylsulfonium salt structure, and is a polymerization initiator in which the sum total of Hammett constants of the substituents bonding to the aryl backbone is larger than 0.46.

#### (Triarylsulfonium salt structure)

A compound having a triarylsulfonium salt structure is capable of being readily synthesized by a method described, for example, in J. Amer. Chem. Soc. Vol. 112 (16), 1990; J. Org. Chem. pp. 6004-6015, 1988; WO02/081439 Pamphlet, pp. 5571-5573; European Patent Application (EP) No. 1113005; etc.

#### (Substituent bonding to an aryl backbone)

A specific polymerization initiator has one or more aryl backbones having an electron-accepting group as a substituent. Herein, an electron-accepting group means a substituent the Hammett constant (Hammett substituent

constant σ) of which is greater than 0. In the invention, from the viewpoint of enhancement of sensitivity, the sum total of the Hammett constants of the substituents bonding to the aryl backbone in a specific polymerization initiator is preferably 0.18 or more, more preferably greater than 0.46, still more preferably greater than 0.60.

In addition, a Hammett constant represents the degree of electron-accepting of a cation having a triarylsulfonium salt structure, and particularly has not an upper limit from the viewpoint of enhancement of sensitivity. However, from the viewpoints of reactivity and stability, a Hammett constant is preferably over 0.46 and less than 4.0, more preferably over0.50 and less than 3.5particularly preferably over 0.60 and less than 3.0.

The Hammett constant in the invention uses numerical values described in "Chemistry Seminar 10 Hammett Rule-Structure and Reactivity- edited by Naoki Inamoto (published by Maruzen Co., Ltd., 1983)

The electron-accepting groups introduced into an aryl backbone include trifluoromethyl groups, halogen atoms, ester groups, sulfoxide groups, cyano groups, amide groups, carboxyl groups, carbonyl groups, and the like. Hammett constants of these substituents include trifluoromethyl groups ($-CF_3$, m: 0.43, p: 0.54), halogen atoms [e.g., -F (m: 0.34, p: 0.06), -Cl (m: 0.37, p: 0.23), -Br (m: 0.39, p: 0.23), -I (m: 0.35, p: 0.18)], ester groups (e.g., $-COCH_3$, o: 0.37, p: 0.45), sulfoxide groups (e.g., $-SOCH_3$, m: 0.52, p: 0.45), cyano groups (-CN, m: 0.56, p: 0.66), amide groups (e.g., $-NHCOCH_3$, m: 0.21, p: 0.00), carboxyl groups (-COOH, m: 0.37, p: 0.45), carbonyl groups (-CHO, m: 0.36, p: (0.43)), and the like. The symbol and numerical value in the parentheses denote an introduced position and its Hammett constant in an aryl backbone; for example, (m: 0.50) indicates that the Hammett constant is 0.50 when the substituent is introduced into a meta-position.

Of these substituents, from the viewpoint of hydrophobicity, non-ionic substituents such as a halogen atom and halogenated alkyl group are preferable; of these, from the viewpoint of reactivity, -Cl is preferable, and from the viewpoint of hydrophobicity, -F, $-CF_3$, -Cl, and -Br are preferable.

These substituents may be introduced into any one of three aryl backbones of a triarylsulfonium salt structure, or may be introduced into two or more of aryl backbones. Moreover, substituents introduced into three respective aryl backbones may be one or plural. In the invention, the sum total of the Hammett constants of the substituents introduced into these aryl backbones preferably exceeds 0.18, more preferably exceeds 0.46. The number of substituents introduced is arbitrary. For example, only one substituent having a particularly large Hammett constant (e.g., the Hammett constant exceeds 0.46 alone) may be introduced into one position of an aryl backbone of a triarylsulfonium salt structure. Furthermore, for example, a plurality of substituents may be introduced when the sum total of the respective Hammett constants exceed 0.46.

As described above, the Hammett constant of a substituent varies depending on its introduction position, so the sum total of Hammett constants in a specific polymerization initiator in the invention is determined by the kind of substituent, the introduction position and the number of introduced substituents.

Although the Hammett rule is normally indicated by an m(meta)-position or p(para)-position, in the invention, as the index of electron-accepting, the substituent effect in an o(ortho)-position is calculated as the same value as the value of a p-position. As a preferred substitution position, from the viewpoint of synthesis, an m- and p-positions are preferable and a p-position is most preferable.

In the invention, a sulfonium salt replaced by halogen atoms at three or more positions is preferred, and a sulfonium salt replaced by chlorine atoms at three positions is most preferred. Specifically, a triarylsulfonium salt structure in which halogen atoms are introduced into the three respective aryl backbones, most preferably -Cl atoms are introduced, is preferred, and a triarylsulfonium salt structure in which -Cl atoms are positioned at p-positions is more preferred.

Counter anions of the specific polymerization initiator include, in terms of stability, sulfonate anions, benzoylformate anions, PF6-, $BF_4^-$, $ClO_4^-$, carboxylate anions, sulfinate anions, sulfate anions, borate anions, halogen anions, polymer type sulfonate anions and polymer type carboxylate anions. In terms of reactivity and stability, sulfonate anions or polymer types thereof and benzoylformate anions or polymer types thereof are preferable, sulfonate anions or polymer types thereof are most preferable.

A specific polymerization initiator in the invention may be a low-molecular weight compound as long as the initiator has a triarylsulfonium salt structure and the aryl backbone to which a substituent is introduced in specific conditions. In addition, as described above, the polymer type anion may also have a plurality of triarylsulfonium salt structures as its counter cations.

Hereinafter, preferred examples of specific polymerization initiators in the invention (Illustrative Compounds (A-1) to (0-6), and (P-1) to (P-17) will be indicated; however, the examples are not limited thereto. Additionally, Illustrative Examples (P-1) to (P-17) are examples of a compound having a polymer type anion.

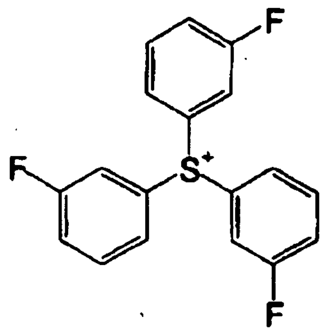

$CF_3SO_3^-$ (A-1)

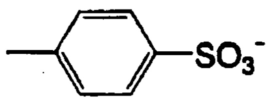 (A-2)

$BF_4^-$ (A-3)

$PF_6^-$ (A4)

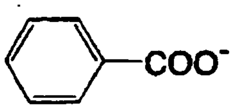 (A-5)

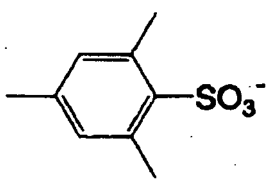 (A-6)

$CH_3COCOO^-$ (A-7)

$CH_3SO_3^-$ (A-8)

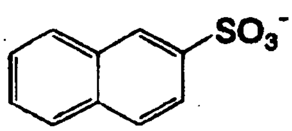 (A-9)

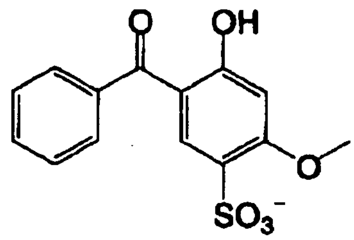 (A-11)

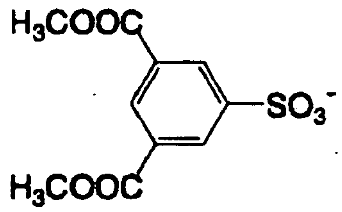 (A-12)

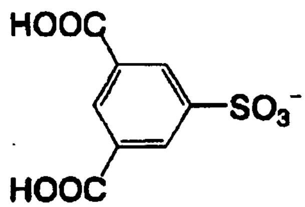 (A-13)

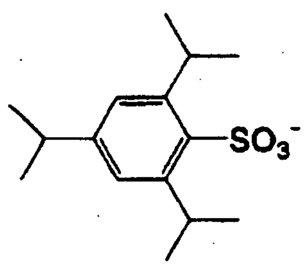 (A-14)

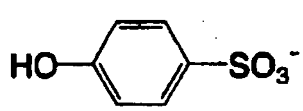 (A-15)

(continued)

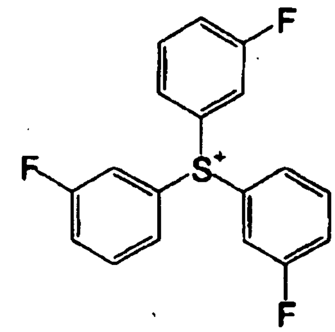

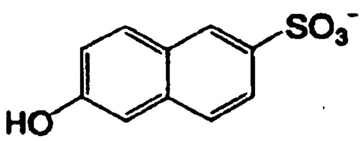

(A-10)

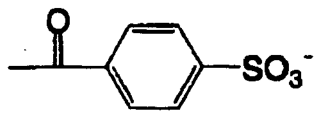

(A-16)

$I^-$ (A-17)

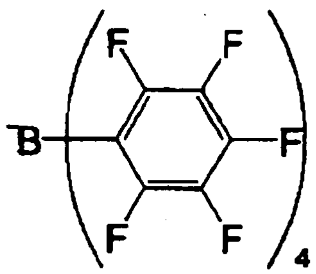

(A-18)

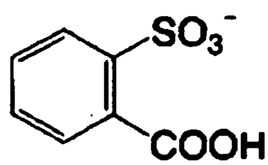

(A-22)

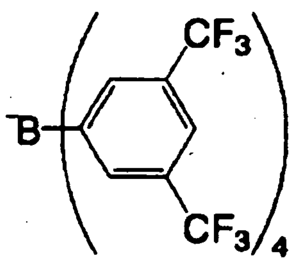

(A-19)

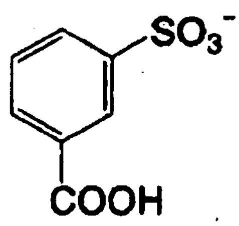

(A-23)

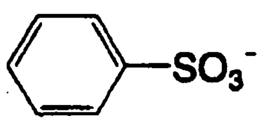

(A-20)

(continued)

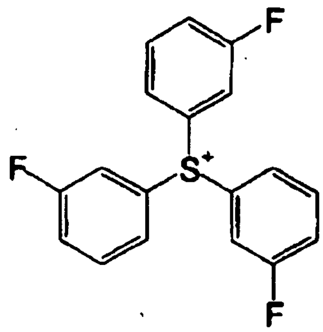

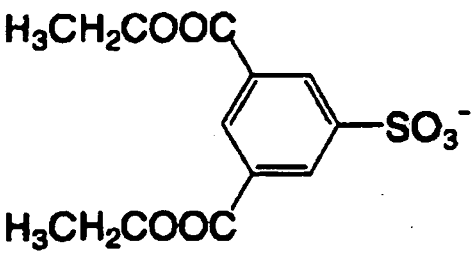
(A-21)

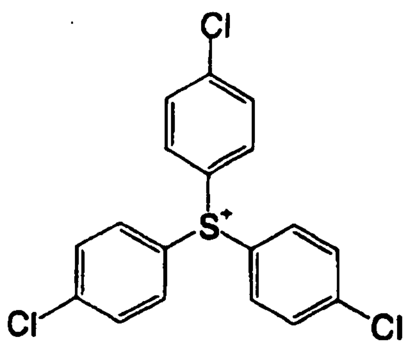

$CF_3SO_3^-$ (B-1)

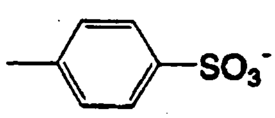
(B-2)

$BF_4^-$ (B-3)

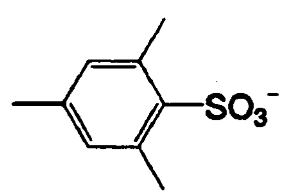
(B-9)

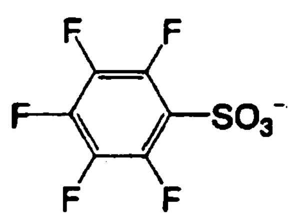
(B-10)

(continued)

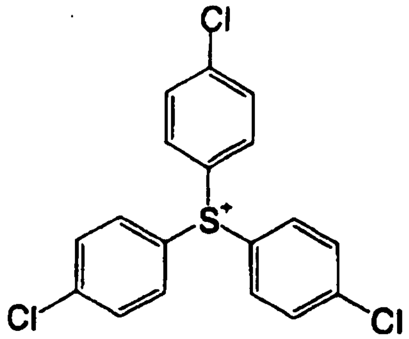

$PF_6^-$ (B-4)

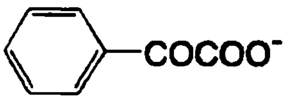 (B-5)

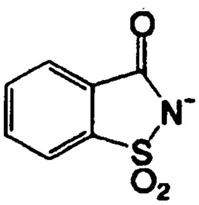 (B-6)

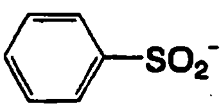 (B-7)

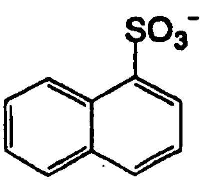 (B-8)

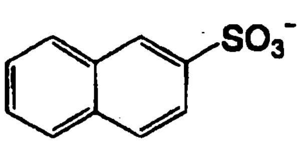 (B-17)

$C_4F_9SO_3^-$ (B-11)

$ClO_4^-$ (B-12)

$CF_3COO^-$ (B-13)

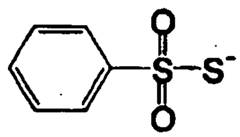 (B-14)

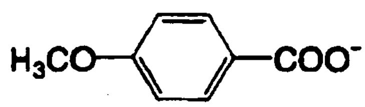 (B-15)

$Br^-$ (B-16)

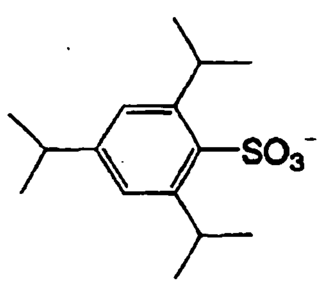 (B-22)

(continued)

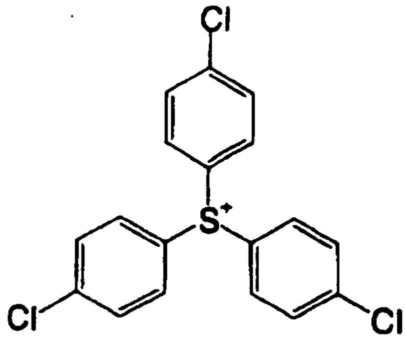

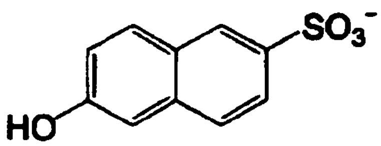
(B-18)

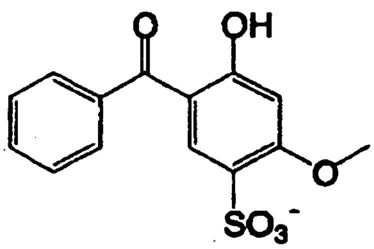
(B-19)

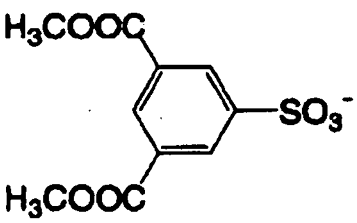
(B-20)

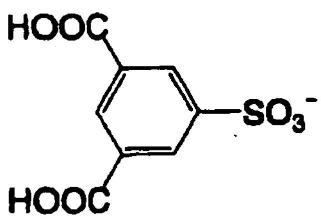
(B-21)

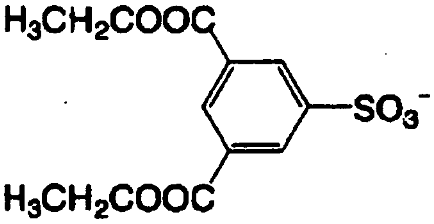
(B-28)

$-SO_3^-$ (B-23)

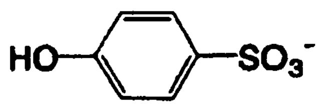
(B-24)

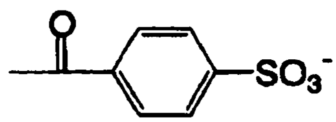
(B-25)

$I^-$ (B-26)

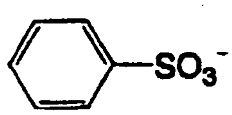
(B-27)

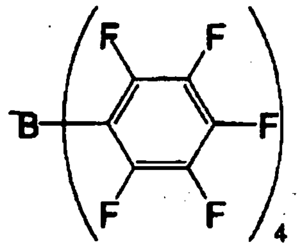
(B-31)

(continued)

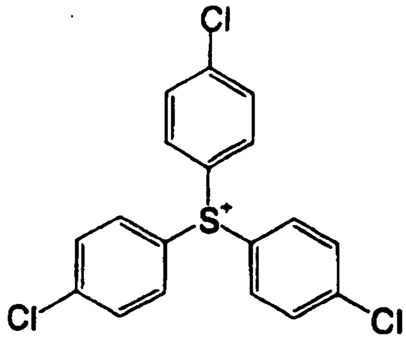

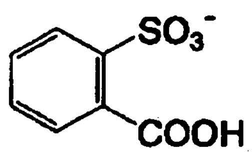

(B-29)

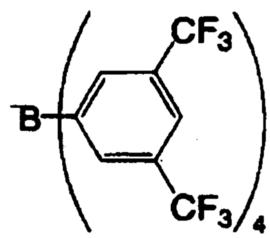

(B-32)

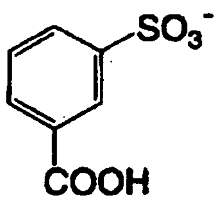

(B-30)

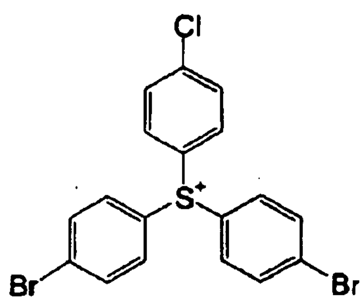

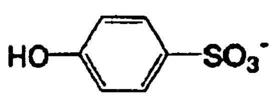 (C-1)

$HSO_4^-$ (C-5)

$PF_6^-$ (C-2)

$CCl_3COO^-$ (C-6)

(continued)

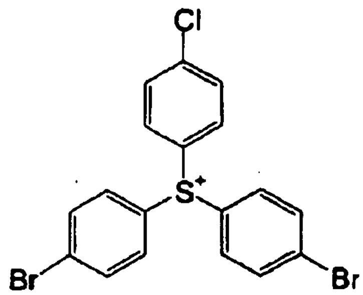

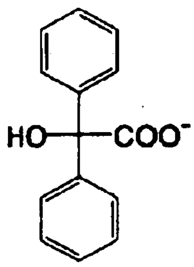

(C-3)

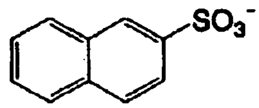

(C-7)

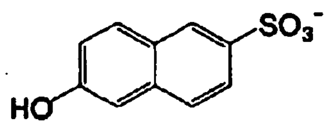

(C-8)

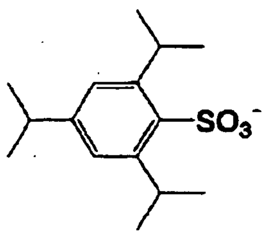

(C-4)

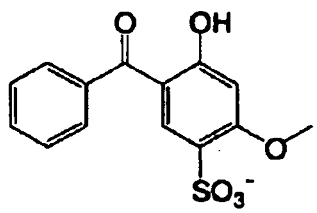

(C-9)

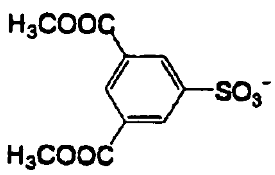

(C-10)

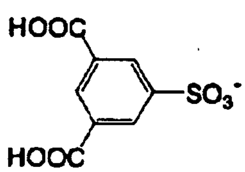

(C-11)

$BF_4^-$ (C-12)

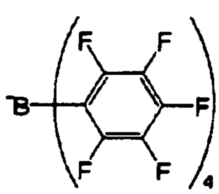

(C-13)

(continued)

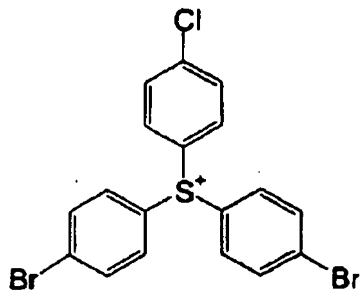

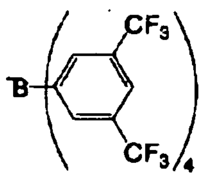

(C-14)

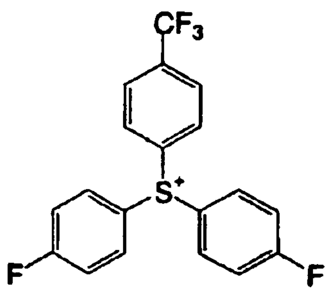

$CF_3SO_3^-$ (D-1)

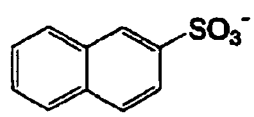

(D-9)

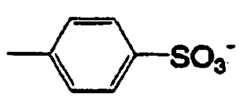

(D-2)

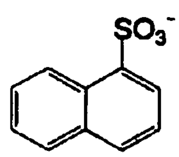

(D-10)

$BF_4^-$ (D-3)

$PF_6^-$ (D-4)

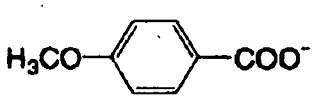

(D-5)

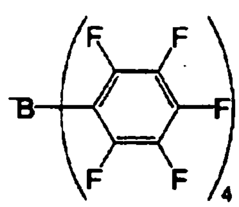

(D-11)

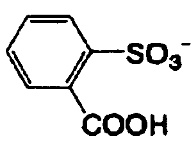

(D-6)

(continued)

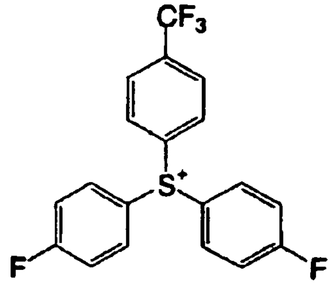

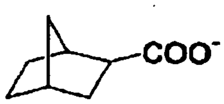 (D-7)

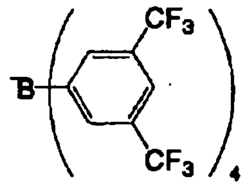 (D-12)

$CH_3SO_3^-$ (D-8)

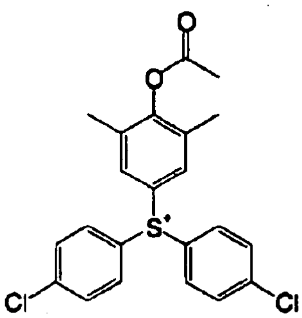

$CF_3SO_3^-$ (E-1)

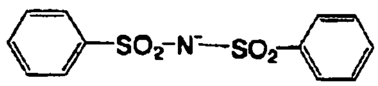

(E-9)

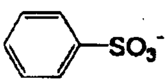 (E-2)

$BF_4^-$ (E-3)

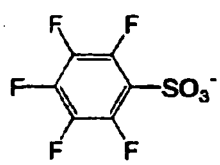 (E-10)

$ClO_4^-$ (E-4)

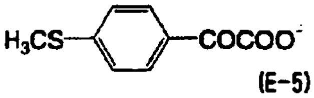

(E-5)

$C_4F_9SO_3^-$ (E-11)

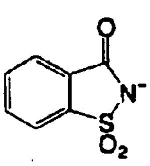 (E-6)

$C_{15}H_{31}COO^-$ (E-12)

$PF_6^-$ (E-13)

(continued)

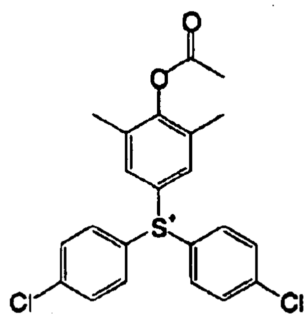

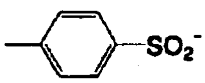 (E-7)

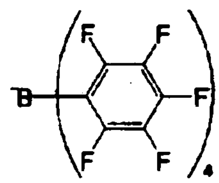 (E-14)

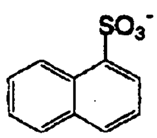 (E-8)

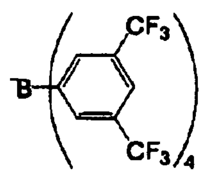 (E-15)

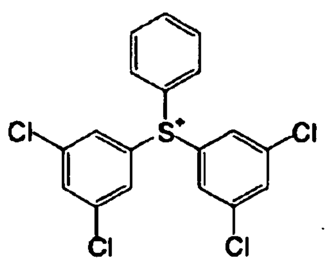

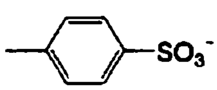 (F-1)

$BF_4^-$ (F-7)

$PF_6^-$ (F-1)

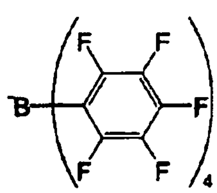 (F-8)

(continued)

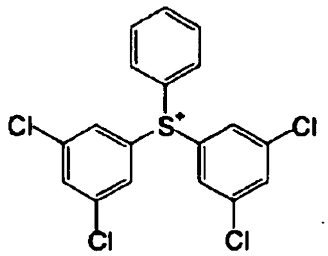

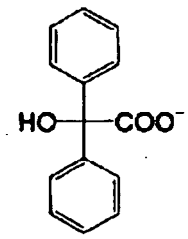

(F-3)

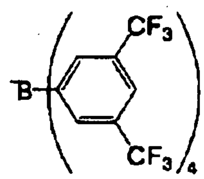

(F-9)

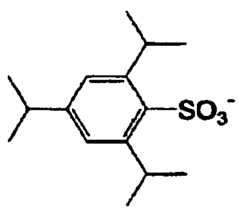

(F-4)

$CF_3SO_3^-$ (F-5)

$CCl_3COO^-$ (F-6)

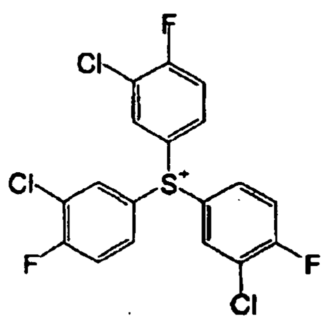

$CF_3SO_3^-$ (G-1)

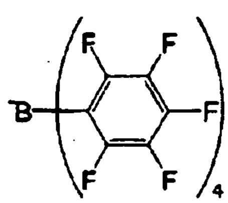

(G-8)

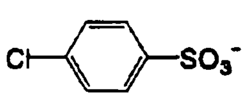

(G-2)

(continued)

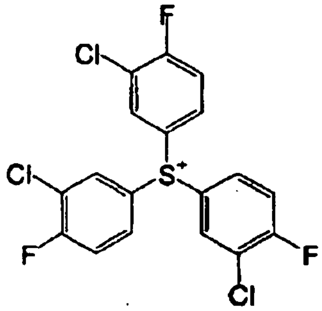

$BF_4^-$ (G-3)

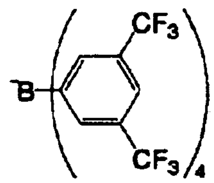

(G-9)

$PF_6^-$ (G-4)

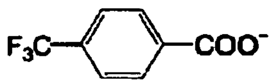

(G-5)

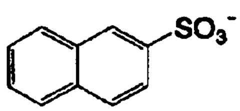

(G-6)

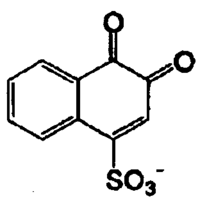

(G-7)

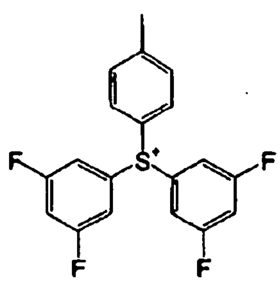

$CF_3SO_3^-$ (H-1)

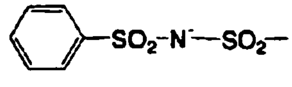

(H-9)

(continued)

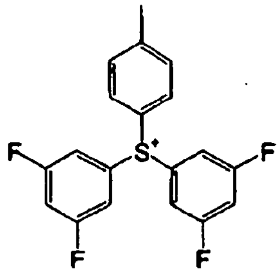

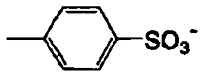 (H-2)

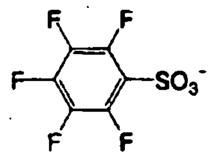 (H-10)

$PF_6^-$ (H-3)

$ClO_4^-$ (H-4)

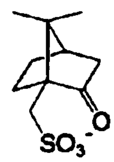 (H-11)

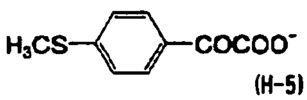
(H-5)

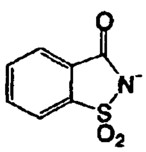 (H-6)

$BF_4^-$ (H-12)

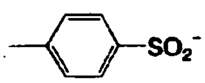 (H-7)

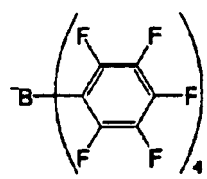 (H-13)

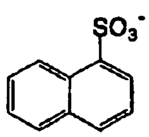 (H-8)

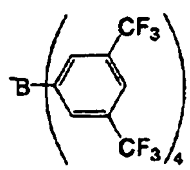 (H-14)

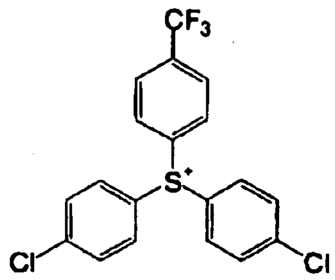

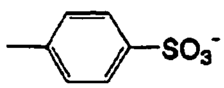 (I-1)

$BF_4^-$ (I-7)

$PF_6^-$ (I-2)

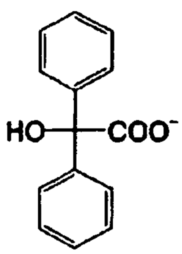 (I-3)

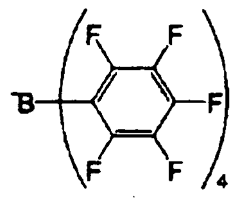 (I-8)

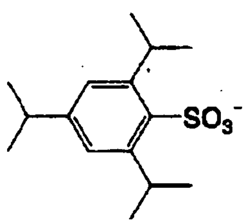 (I-4)

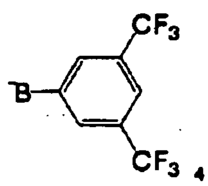 (I-9)

$CF_3SO_3^-$ (I-5)

$CHCl_2COO^-$ (I-6)

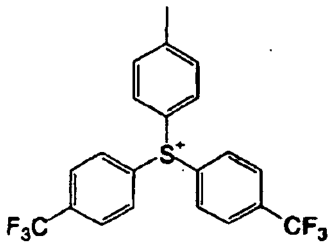

$CF_3SO_3^-$ (J-1)

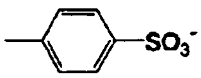

(J-2)

$BF_4^-$ (J-3)

$PF_6^-$ (J-4)

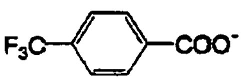

(J-5)

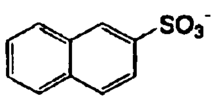

(J-6)

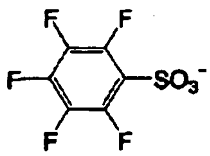

(J-7)

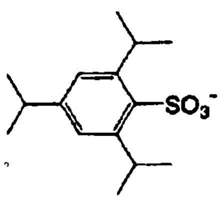

(J-8)

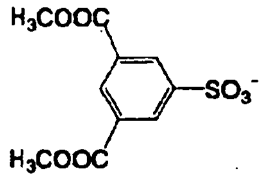

(J-9)

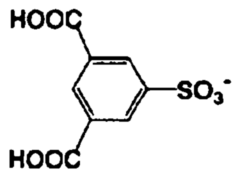

(J-10)

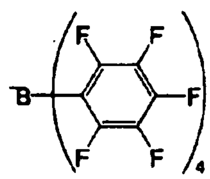

(J-11)

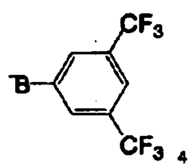

(J-12)

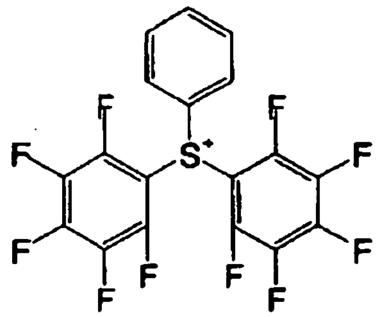

$CF_3SO_3^-$ (K-1)

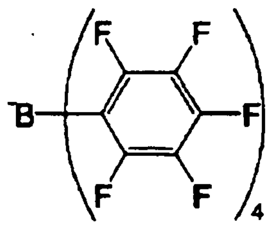 (K-5)

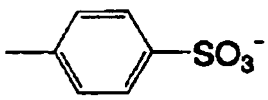 (K-2)

$BF_4^-$ (K-3)

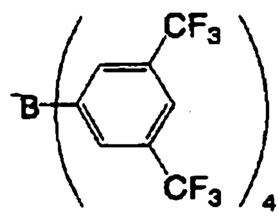 (K-6)

$PF_6^-$ (K-4)

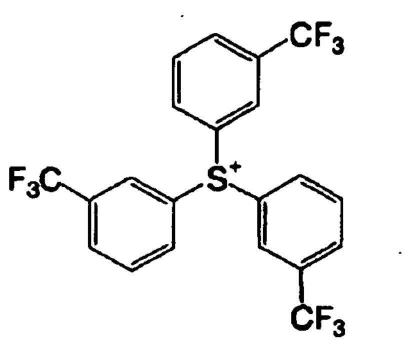

$CF_3SO_3^-$ (L-1)

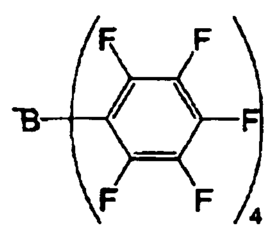 (L-4)

$BF_4^-$ (L-2)

$PF_6^-$ (L-3)

(continued)

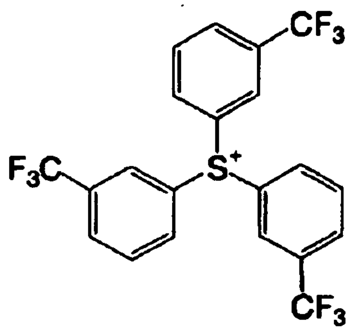

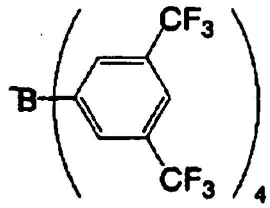

(L-5)

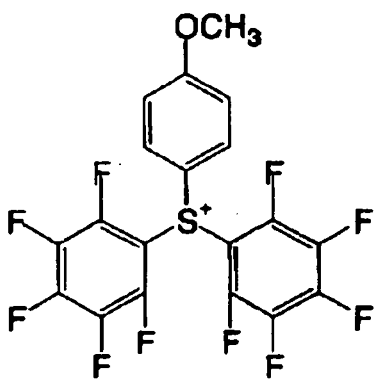

$CH_3SO_3^-$ (M-1)

$BF_4^-$ (M-2)

$PF_6^-$ (M-3)

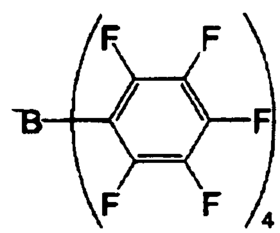

(M-4)

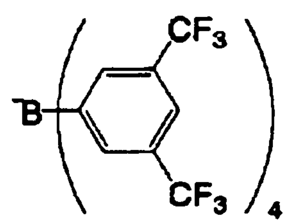

(M-5)

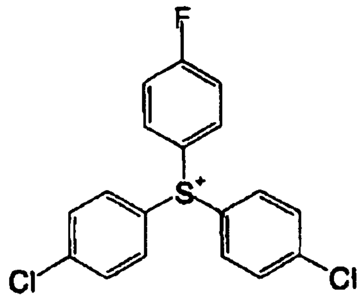

$CF_3SO_3^-$ (N-1)

$PF_6^-$ (N-6)

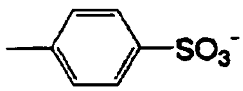

(N-2)

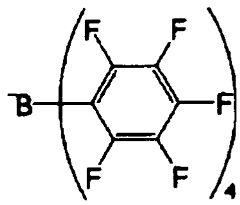

(N-7)

$BF_4^-$ (N-3)

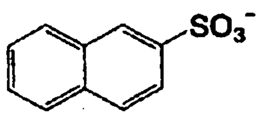

(N-4)

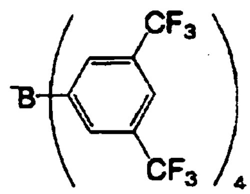

(N-8)

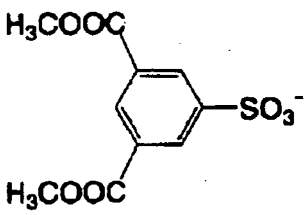

(N-5)

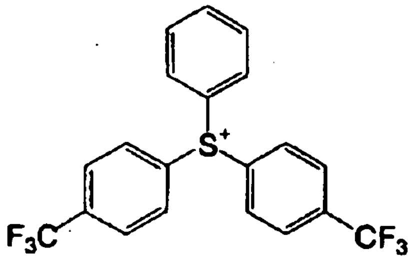

$C_4F_9SO_3^-$ (O-1)

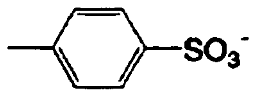 (O-2)

$PF_6^-$ (O-3)

$BF_4^-$ (O-4)

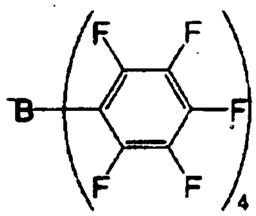 (O-5)

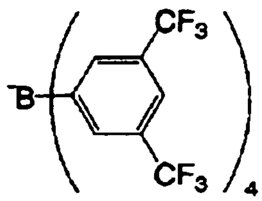 (O-6)

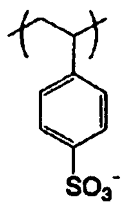

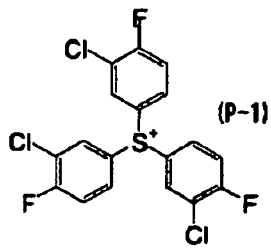

(P-1)

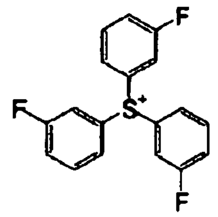

(P-4)

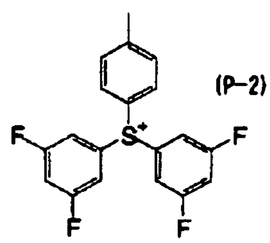

(P-2)

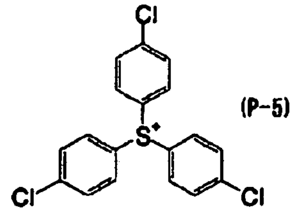

(P-5)

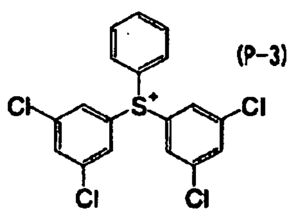

(P-3)

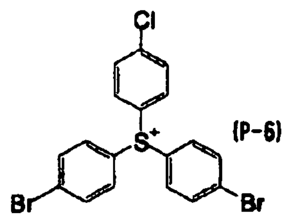

(P-6)

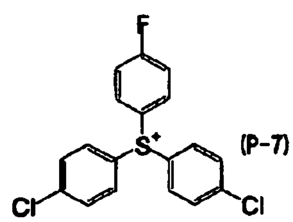

(P-7)

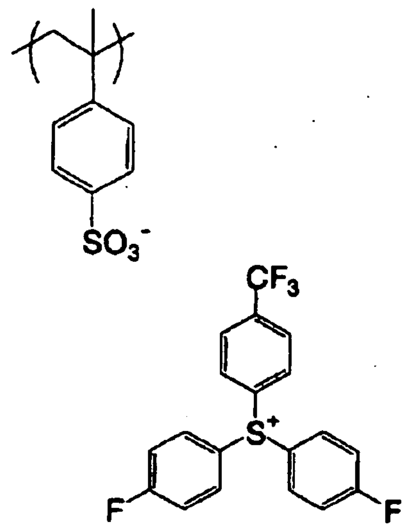

(P-8)

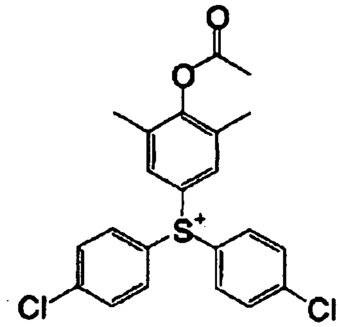

(P-9)

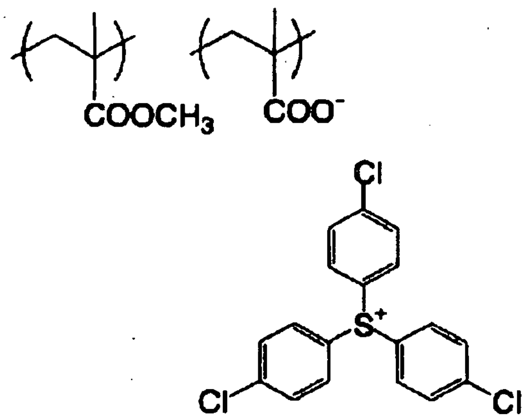

(P-10)

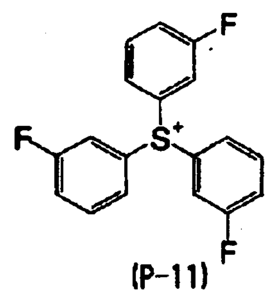

(P-11)

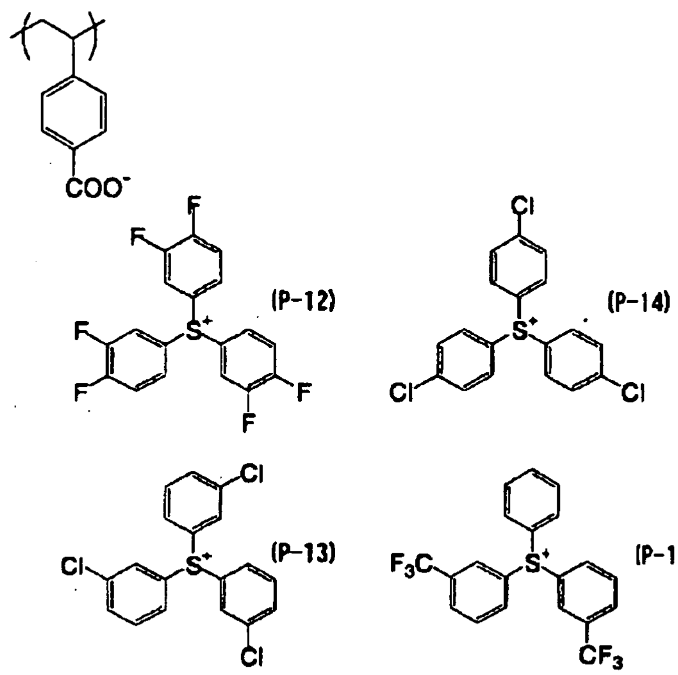

(P-12) (P-14) (P-13) (P-15)

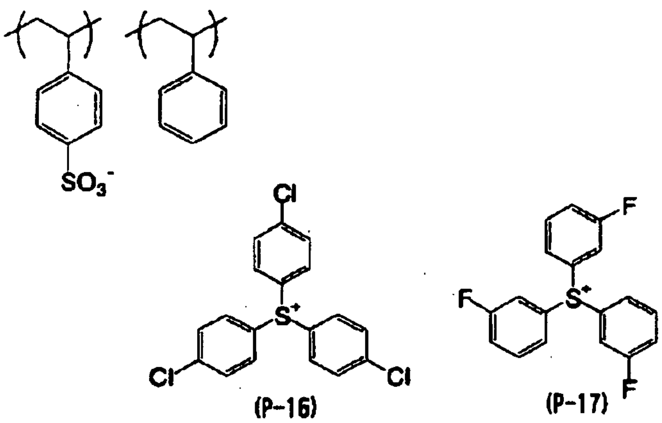

(P-16) (P-17)

A specific polymerization initiator in the invention can be synthesized by a known method, as described above. Hereinafter, specific synthesis examples will be set forth in detail.

[Synthesis Example 1: synthesis of Illustrative Compound (B-4)]

1. Synthesis of tris(4-chlorophenyl)sulfonium bromide

In a nitrogen atmosphere, 16.3 g (0.06 mol) of di(4-chlorophenyl)sulfoxide was dissolved in 250 ml of dichloromethane, and 10.8 g (0.10 ml) of trimethylchlorosilane was added dropwise thereto at 0 to 5˚C; after agitation for 30 minutes at 0˚C, 200 g of tetrahydrofuran (THF) solution of a Grignard reagent prepared from 4-bromochlorobenzene (0.18 mol) by the usual method was added dropwise over 30 minutes while the reaction vessel was cooled in ice water at 0 to 10˚C. After agitation for one hour at 0 to 10˚C and subsequent agitation for one hour at room temperature, the reaction solution was slowly placed in an aqueous solution of 250 ml of an aqueous hydrogen bromide solution (the content of hydrogen bromide is 12%) and ice, and extraction was conducted with 250 ml of dichloromethane, and then the resultant material was dried with sodium sulfate.

The solvent was removed, and 100 ml of methanol was added to the resultant material that was in turn agitated for 30 minutes, and then a solid was deposited. The solid was removed by filtration, and the filtrate was condensed and further cleaned with 100 ml of ethyl acetate twice, and then the material was solidified in ethyl acetate to obtain 12.0 g

(44%) of a white solid (tris(4-chlorophenyl)sulfonium bromide).

2. Synthesis of Illustrative Compound (B-4)

A solution of 10.0 g of tris(4-chlorophenyl)sulfonium bromide, obtained as described above, in 50 ml of methanol was placed in an aqueous solution of 4.95 g of potassium hexafluorophosphate in 100 ml of distilled water, and then the resultant solution was agitated for one hour. The crystal deposited was filtrated and vacuum dried at 40˚C for 6 hours to obtain 8.65 g of a solid (yield 70.2%). The structure of this solid was measured by NMR to confirm that the solid was Illustrative Compound (B-4).

[Synthesis Example 2: synthesis of Illustrative Compound (B-31)]

Illustrative Compound (B-31) was obtained in the same manner as in synthesis of Illustrative Compound (B-4) with the exception that potassium tetrakis(pentafluorophenyl borate) was used instead of potassium hexafluorophosphate in the synthesis of Illustrative Compound (B-4) above. The structure of this solid was measured by NMR to confirm that the solid was Illustrative Compound (B-31).

[Synthesis Example 3: synthesis of Illustrative Compound (B-32)]

Illustrative Compound (B-32) was obtained in the same manner as in Illustrative Compound (B-4) with the exception that sodium tetrakis[3,5-bis(trifluoromethyl)phenyl borate was used instead of potassium hexafluorophosphate in the synthesis of Illustrative Compound (B-4) above. The structure of this solid was measured by NMR to confirm that the solid was Illustrative Compound (B-32).

[Synthesis Example 4]

Illustrative Compound (1-2) is obtained in the same manner as in Illustrative Compound (B-4) with the exception that di(4-trifluoromethylphenyl) was used instead of di(4-chlorophenyl)sulfoxide in the synthesis of Illustrative Compound (B-4) above. The structure of this solid was measured by NMR to confirm that the solid was Illustrative Compound (1-2).

[Synthesis Example 5: synthesis of Illustrative Compound (B-17)]

A solution of 4.46 g of tris(4-chlorophenyl)sulfonium bromide in 50 ml of dichloromethane was placed in an aqueous solution of 4.60 g of sodium 2-naphthalenesulfonate in 100 ml of distilled water, and then the resultant solution was agitated for one hour. The organic phase was extracted and washed with 100 ml of water. After dried the organic phase with sodium sulfate, the organic phase was condensed and the condensed organic phase was placed in 100 ml of ethyl acetate and then the resultant solution was agitated for 30 minutes under reflux. After cooled, the resultant solution was filtrated while cleaning with ethyl acetate, and then the filtrated material was vacuum dried at 40˚C for 6 hours to obtain 5.07 g (yield 88%) of a solid containing 5.7 weight % of ethyl acetate. The structure of this solid was measured by NMR to confirm that the solid was Illustrative Compound (B-17).

Other compounds may be synthesized in a similar manner.

The content of a specific polymerization initiator in an ink composition of the invention is preferably from 30 to 0.5 mass %, more preferably from 20 to 1 mass %, still more preferably from 10 to 2 mass %, based on the total solid amount of ink composition, from the viewpoints of solubility of a polymerization initiator, and compatibility between sensitivity and storage stability in an ink composition.

Specific polymerization initiators may be used alone, or in combination with two or more species.

In an ink composition of the invention, other known polymerization initiators may be used in combination, in addition to a specific polymerization initiator, so long as the effect of the invention is not impaired. Other known polymerization initiators capable of use in combination include, for example, photo-polymerization initiators of known radical polymerization used in an ink composition of a radiation cure type, or of cation polymerization. Another photo-polymerization initiator capable of use in combination in the invention is a compound that passes through an action of light, or an interaction with an electronic excited state of a sensitizing pigment to produce chemical change and generate at least any one of radical, acid or base. A specific photo-polymerization initiator that is known in those skilled in the art may be used without limitation. Specifically, many examples are described in Bruce M. Monroe, et al., Chemical Revue, 93, 435 (1993); R. S. Davidson, Journal of Photochemistry and biology A: Chemistry, 73. 81 (1993); J. P. Faussier, "Photoinitiated Polymerization-Theory and Application": Rapra Review vol. 9, Report, Rapra Technology (1998); and M. Tsunooka et al., Prog. Polym. Sci., 21, 1(1996). Additionally, many chemically amplified photoresists and compounds utilized in photo-cation polymerization are described in "Organic Materials for Imaging", pp. 187-192, edited by The Japanese Research

Association for Organic Electronics Materials, Bun-Shin (1993). Moreover, compound groups described in F. D. Saeva, Topics in Current Chemistry, 156, 59 (1990)., G.G. Maslak, Topics in Current Chemistry, 168, 1 (1993)., H.B. Shuster et al, JACS, 112, 6329 (1990)., I. D. F. Eaton et al, JACS, 102, 3298 (1980); are known that pass through an interaction with an electronic excited state of a sensitizing pigment to oxidatively or reductively undergo bond cleavage.

Preferred photo-polymerization initiators include (a) aromatic ketones, (b) aromatic onium compounds, (c) organic peroxides, (d) hexaarylbiimidazole compounds, (e) ketoxime ester compounds, (f) borate compounds, (g) azinium compounds, (h) metallocene compounds, (i) active ester compounds, (j) compounds having a carbon-halogen bond, and the like.

Preferred examples of (a) aromatic ketones include compounds having a benzoyl or thioxanthone backbone, described in J. P. Fouassier and J. F. Rabek, "RADIATION CURING IN POLYMER SCIENCE AND TECHNOLOGY", pp. 77 to 117, (1993), and the like. More preferred examples of (a) aromatic ketones may include (-thiobenzophenone compounds described in Japanese Patent Application Publication (JP-B) No. 47-6416, benzoin ether compounds described in JP-B No. 47-3981, ((-substituted benzoin compounds described in JP-B No. 47-22326, benzoin derivatives described in JP-B No. 47-23664, aroylphosphonate esters described in JP-A No. 57-30704, dialkoxybenzophenones described in JP-B No. 60-26483, benzoin ethers described in JP-B No. 60-26403 and JP-A No. 62-81345, (-aminobenzophenones described in JP-B No. 1-34242, U.S. Patent No. 4,318,791 and European Patent Application No. 0284561A1, p-di(dimethylaminobenzoyl)benzene described in JP-ANo. 2-211452, thio-substituted aromatic ketones described in JP-ANo. 61-194062, acylphosphine sulfide described in JP-B No. 2-9597, acylphosphine described in JP-B No. 2-9596, thioxanthones described in JP-B No. 63-61950, coumarins described in JP-B No. 59-42864, and the like.

(b) Aromatic onium compounds include the elements of the V, VI and VII groups of the periodic table, specifically N, P, As, Sb, Bi, O, S, Se and Te, or aromatic onium salts of the I group. The examples that are suitably used include iodonium salts described in European Patent Application No. 104143, U.S. Patent No. 4837124 and JP-A Nos. 2-150848 and 2-96514, diazonium salts (benzodiazoniums that may have substituents, and the like) described in European Patent Application Nos. 370693, 233567, 297443, 297442, 279210 and 422570, and U.S. Patent Nos. 3902144, 4933377, 4760013, 4734444 and 283382, diazonium salt resins (formaldehyde resins of diazodiphenylamine, and the like), N-alkoxypyridinium salts and the like (e.g., described in U.S. Patent No. 4,743,528, JP-A Nos. 63-138345, 63-142345 and 63-142346, and JP-B No. 46-42363, and specifically 1-methoxy-4-phenylpyridinium tetrafluoroborate, and the like), and compounds described in JP-B Nos. 52-147277, 52-14278 and 52-14279. These generate radicals and acids as active species.

(c) Organic peroxides include substantially all organic compounds having one or more oxygen-oxygen bonds in one or more molecule, and the examples that are preferred include peroxide ester-based compounds such as 3,3',4,4'-tetra-(t-butylperoxycarbonyl)benzophenone, 3,3' ,4,4' -tetra-(t-amylperoxycarbonyl)benzophenone, 3,3' ,4,4' -tetra-(t-hexylperoxycarbonyl)benzophenone, 3,3',4,4'-tetra-(t-octylperoxycarbonyl)benzophenone, 3,3',4,4'-tetra-(t-cumylperoxycarbonyl)benzophenone, 3,3',4,4'-tetra-(p-isopropylperoxycarbonyl)benzophenone and di-t-butyldiperoxyisophthalate.

(d) Hexaarylbiimidazole compounds include rophin dimmers described in JP-B Nos. 45-37377 and 44-86516, for example, 2,2'-bis(o-chlorophenyl)-4,4',5,5'-tetraphenylbiimidazole, 2,2'-bis(o-bromophenyl)-4,4',5,5'-tetraphenylbiimidazole, 2,2'-bis(o,p-dichlorophenyl)-4,4',5,5'-tetraphenylbiimidazole, 2,2'-bis(o-chlorophenyl)-4,4',5,5'-tetra(m-methoxyphenyl)biimidazole, 2,2'-bis(o,o'-dichlorophenyl)-4,4',5,5'-tetraphenylbiimidazole, 2,2'-bis(o-nitrophenyl)-4,4',5,5'-tetraphenylbiimidazole, 2,2'-bis(o-methylphenyl)-4,4',5,5'-tetraphenylbiimidazole, 2,2'-bis(o-trifluorophenyl)-4,4',5,5'-tetraphenylbiimidazole, and the like.

(e) Ketoxime ester compounds include 3-benzoyloxyiminobutane-2-one, 3-acetoxyiminobutane-2-one, 3-propionyloxyiminobutane-2-one, 2-acetoxyiminopentane-3-one, 2-acetoxyimino-1-phenylpropane-1-one, 2-benzoyloxyimino-1-phenylpropane-1-one, 3-p-toluenesulfonyloxyiminobutane-2-one, 2-ethoxycarbonyloxyimino-1-phenylpropane-1-one, and the like.

(f) Borate compounds include compounds described in U.S. Patent Nos. 3,567,453 and 4,343,891, and European Patent Application Nos. 109,772 and 109,773.

(g) Examples of azinium compounds may include compound groups having an N-O bond described in JP-ANos. 63-138345, 63-142345, 63-142346, 63-143537, and JP-B No. 46-42363.

(h) Examples of metallocene compounds may include titanocene compounds described in JP-A Nos. 59-152396, 61-151197, 63-41484, 2-249 and 2-4705, and iron-arene complexes described in JP-A Nos. 1-304453 and 1-152109. Examples of the above titanocene compounds may include di-cyclopentadienyl-Ti-di-chloride, di-cyclopentadienyl-Ti-bis-phenyl, di-cyclopentadienyl-Ti-bis-2,3,4,5,6-pentafluorophenyl-1-yl, di-cyclopentadienyl-Ti-bis-2,3,5,6-tetrafluorophenyl-1-yl, di-cyclopentadienyl-Ti-bis-2,4,6-trifluorophenyl-1-yl, di-cyclopentadienyl-Ti-bis-2,6-difluorophenyl-1-yl, di-cyclopentadienyl-Ti-bis-2,4,-difluorophenyl-1-yl, di-methylcyclopentadienyl-Ti-bis-2,3,4,5,6-pentafluorophenyl-1-yl, di-methylcyclopentadienyl-Ti-bis-2,3,5,6-tetrafluorophenyl-1-yl, bis(cyclopentadienyl)-bis(2,6-difluoro-3-(pyri-1-yl)phenyl)titanium, bis(cyclopentadienyl)bis[2,6-difluoro-3-(methylsulfoneamide)phenyl]titanium,

bis(cyclopentadienyl)bis[2,6-difluoro-3-(N-butylbiaroyl-amino)phenyl]titanium, and the like.

(i) Examples of active ester compounds nitrobenzyl ester compounds described in European Patent Application Nos. 0290750, 046083, 156153, 271851 and 0388343, U.S. Patent Nos. 3901710 and 4181531, and JP-ANos. 60-198538 and 53-133022, iminosulfonate compounds described in European Patent Application Nos. 0199672, 84515, 199672, 044115 and 0101122, U.S. Patent Nos. 4618564, 4371605 and 4431774, and JP-ANos. 64-18143, 2-245756 and 4-365048, compounds described in JP-B Nos. 62-6223 and 63-14340, and JP-A No. 59-174831, and the like.

(j) Preferred examples of compounds having a carbon-halogen bond include compounds described in Wakabayashi et al., Bull. Chem. Soc. Japan, 42, 2924 (1969), compounds described in U.K. Patent No. 1388492, compounds described in JP-A No. 53-133428, compounds described in German Patent No. 3337024, and the like.

Additionally, the examples may include compounds described in F. C. Schaefer et al., J. Org. Chem. 29, 1527 (1964), compounds described in JP-ANo. 62-58241, compounds described in JP-A No. 5-281728, and the like. The examples may also include compounds as described in German Patent No. 2641100, compounds described in German Patent No. 3333450, compound groups described in German Patent No. 3021590, or compound groups described in German Patent No. 3021599, and the like.

Preferred examples of compounds represented by (a) to (j) above include the compounds indicated below.

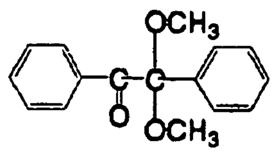
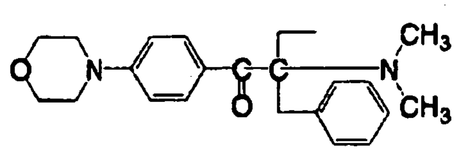

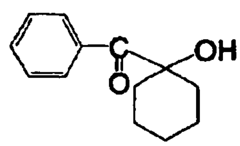
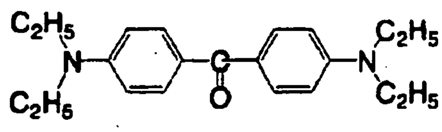

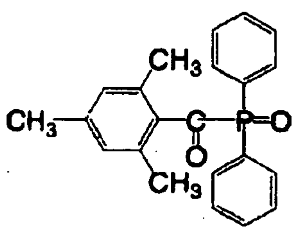
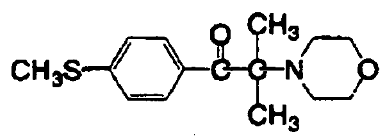

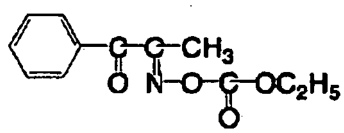

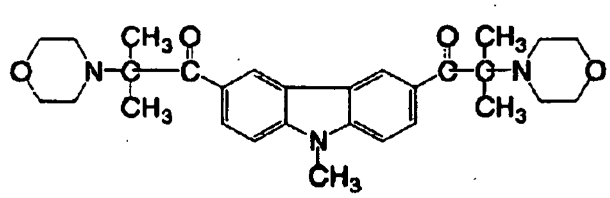

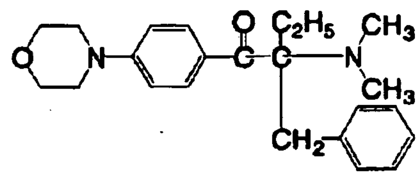

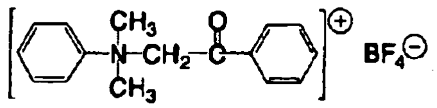

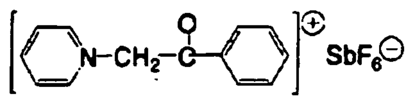

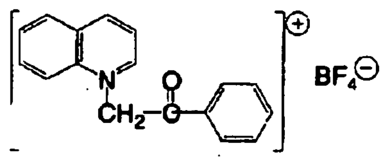

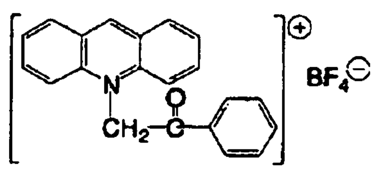

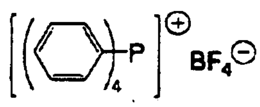

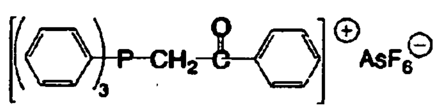

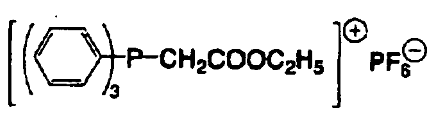

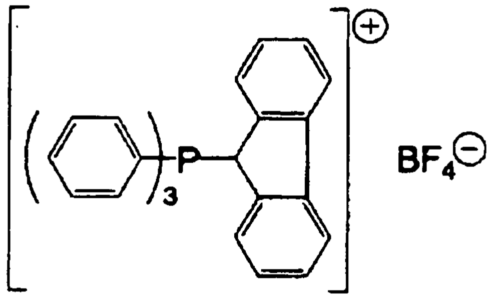

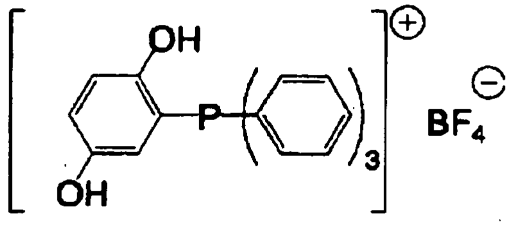

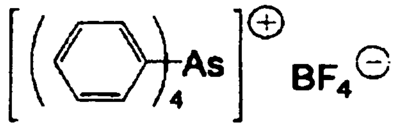

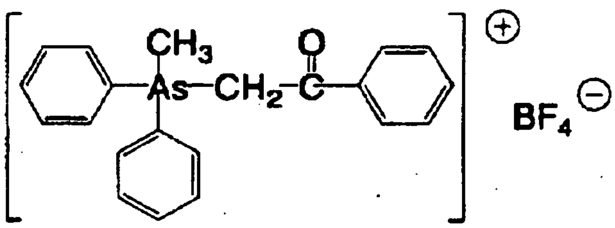

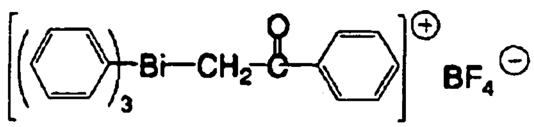

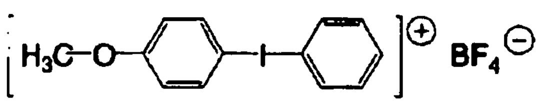

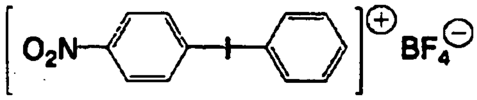

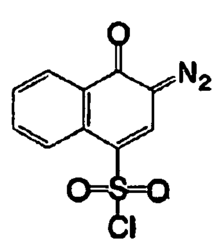

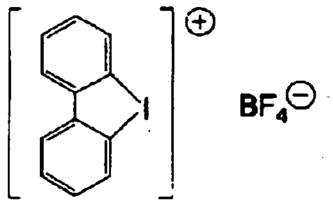

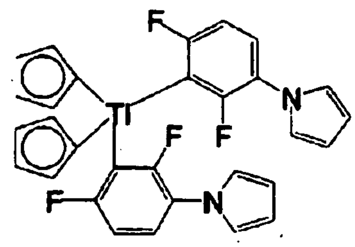

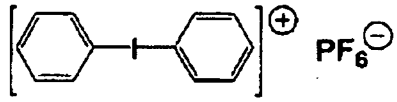

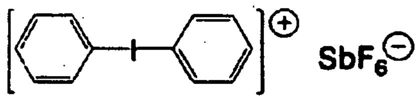

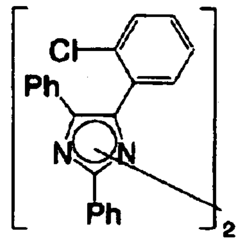

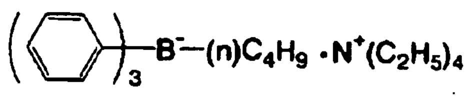

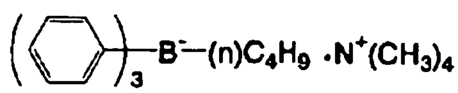

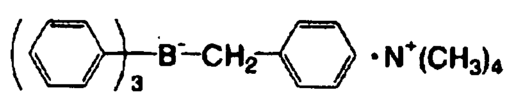

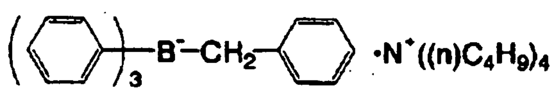

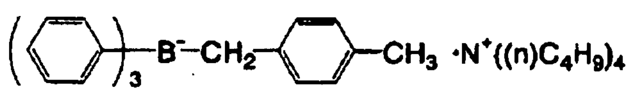

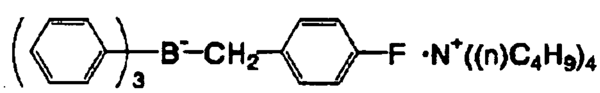

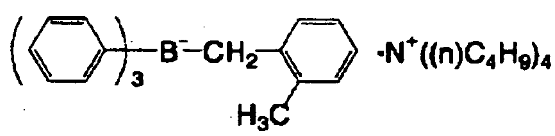

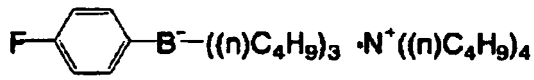

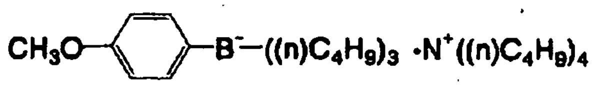

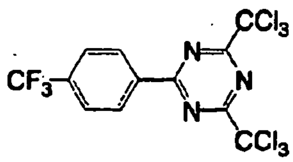

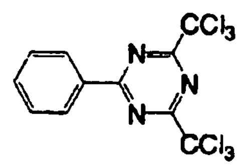

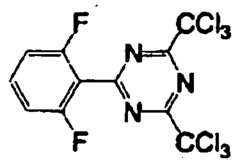

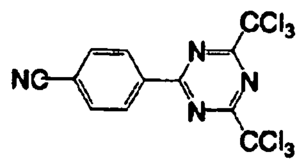

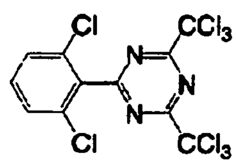

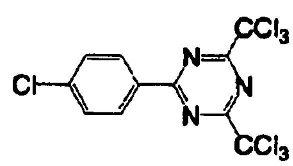

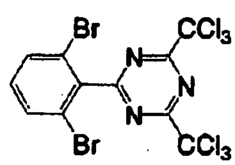

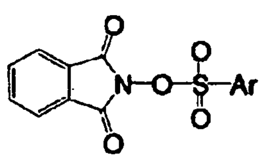

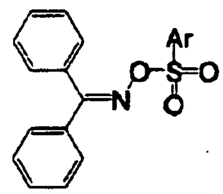

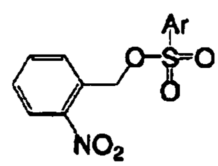

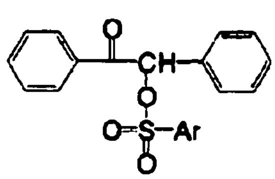

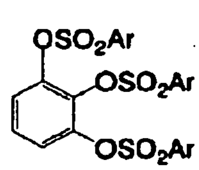

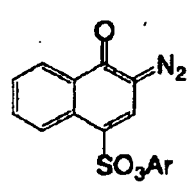

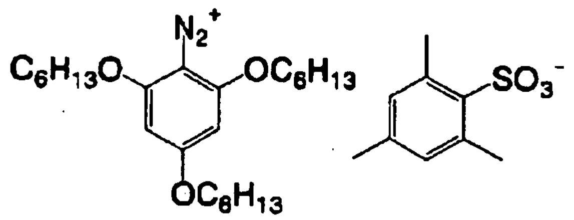

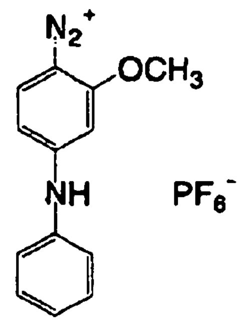

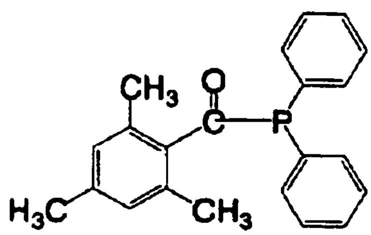

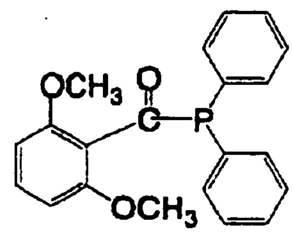

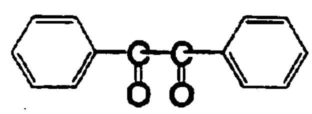

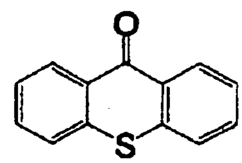

When the other above-mentioned polymerization initiators are used in combination, the content thereof is preferably from 0.1 to 20 mass % based on the total of solid components of an ink composition.

<sp value>

The sp value in the invention is defined for a variety of solvents and solutes, and is a value indicating the ease of being soluble between solvents or a solvent and solute. This value is calculated from the change of energy in the case of dissolution of a solute in a solvent when the solvent and solute are admixed. The sp value used in the invention is obtained, specifically by a calculation by means of the sp value calculation program by R. L. Smith at the Tohoku University. For calculation, the sp value is calculated at a standard temperature of 25˚C with the exception of a compound containing a carbon atom and calculated as a saturated repeating unit (e.g., for styrene $-CH_2-CH(C_6H_5)-$) having a valence for constitutional units such as polymer and polyethylene chains, with water having a value of 47.8.

In the invention, preferably, the sp value of the second liquid B imparted in advance prior to impartment of the first liquid A is 35 or less, and also the difference in the sp value between the first liquid A and second liquid B is 10 or less.

When the sp value is 35 or less, as described below, the second liquid B is increased in affinity between the second liquid B and the first liquid A containing a polymerizing or crosslinking material (liquid droplet a1, liquid droplet a2, ...), so mixing between liquid droplets is capable of being restrained when the liquid droplets a1 and a2 of the first liquid A are imparted in states of having overlaps, thereby being capable of effectively preventing the occurrence of line width variations such as blurs of an image and narrow lines in an image. Additionally, the liquid droplets a1 and a2 will be set forth in detail in the description of an ink-jet recording method described below.

In the second liquid, the above sp value is preferably 30 or less, particularly preferably 25 or less. The difference in the sp value between the first liquid A and second liquid B is more preferably 5 or less.

When the difference in the sp value between the first liquid A and second liquid B is within the above range, they are readily soluble in each other. Because the contact area between the liquid droplet B and the liquid droplet a1 or a2 is larger than the contact area between the liquid droplets a1 and a2, the affinity between the second liquid B and the liquid droplets a1 and a2 becomes good, so for example when the liquid droplet a1, liquid droplet a2,... that have overlaps and are imparted contain a coloring agent, the difference within the above range has effects on avoidances of causing color blurs between the liquid droplets a1 and a2 and the line width variations of colored image lines.

The adjustment of the sp value is suitably possible through the use of a lipophilic solvent, a polymerizing material, or the like, and for example an increase in the ratio of a lipophilic solvent in a liquid droplet enables a decrease

in the sp value.

<Surface Tension>

The surface tension in the invention means a value determined by a SURFACE TENSIONMETER (manufactured by Kyowa Interface Science Co., Ltd.).

The liquids A and B contained in an ink set for ink-jet recording of the invention preferably satisfy all of the following conditions (A), (B) and (C) from the viewpoints of forming a recording liquid dot of a target size on a recorded medium.

(A) The surface tension of the liquid B is smaller than any of the liquid A contained in an ink set for ink-jet recording.
(B) At least one species of the surfactants contained in the liquid B satisfies the following relation:

$$\gamma s\,(0) - \gamma s\,(\text{saturated}) > 1\ \text{mN/m}.$$

(C) The surface tension of the liquid B satisfies the following relation:

$$\gamma s < (\gamma s\,(0) + \gamma s\,(\text{saturated})\ \text{maximum})/2.$$

wherein γs denotes a value of the surface tension of the liquid B, γs (0) denotes a value of the surface tension of a liquid with the exception of all the surfactants of the liquid B, γs (saturated) denotes a value of the surface tension of a liquid saturated with one surfactant when the one surfactant of all the surfactants contained in the liquid B is added to the above "liquid with the exception of all the surfactants," and the concentration of the surfactant is increased, and the γs (saturated) maximum denotes the maximum value of γs's (saturated) evaluated on all the surfactants satisfying the above conditions (B), of the surfactants contained in the liquid B.

<Conditions (A)>

In the invention, as described above, for the formation of a recording liquid dot of a target size on a recorded medium, the surface tension ys of the liquid B is preferably made to be smaller than the surface tension γk of the liquid A contained in an ink set for ink-jet recording.

Moreover, from the viewpoint of effective prevention of the spreading of a recording liquid dot between the drop injection and the light exposure, γs < γk - 3 (mN/m) is more preferable, γs < γk - 5 (mN/m) is particularly preferable.

For the printing of a full color image, from the viewpoint of improvement of sharpness of the image, the surface tension ys of the liquid B is preferably at least smaller than the surface tension of a recording liquid containing a colorant of high visual sensitivity, more preferably smaller than the surface tensions of all the recording liquids contained in an ink set for ink-jet recording. Besides, the colorants of high visual sensitivity include colorants exhibiting color of magenta, or black, or cyan.

Additionally, even though the values of the surface tensions ys of the liquids A and B satisfy the above relations, when both the values are less than 15 mN/m, the formation of a liquid droplet during inkjet jetting of drops is difficult, thereby causing no ejection in some cases. On the other hand, the values exceed 50 mN/m, the wettability with an inkjet head is worsened, and thus sometimes poses the problem of no jetting. Hence, from the viewpoint of appropriate ejection, the surface tensions γs of the liquids A and B are preferably 15 mN/m or more and 50 mN/m or less, more preferably 18 mN/m or more and 40 mN/m or less, particularly preferably 20 mN/m or more and 38 mN/m or less.

Herein, the above surface tension is a value determined by the Wilhelmie method by means of a generally used surface tension balance (e.g., trade name: SURFACE TENSIONMETER CBVP-Z, manufactured by Kyowa Interface Science Co., Ltd., or the like) at a liquid temperature of 20˚C.

<Conditions (B) and (C)>

In the invention, for the formation of an ink dot of a target size on a recorded medium, the liquid B preferably contains at least one surfactant. In this case, at least one kind of the surfactants contained in the liquid B preferably satisfies the following condition (B):

$$\gamma s\ (0) - \gamma s\ (\text{saturated}) > 1\ \text{mN/m} \qquad \text{condition (B)}$$

Furthermore, the surface tension of the liquid B satisfies the following condition C):

$$\gamma s < (\gamma s\ (0) + \gamma s\ (\text{saturated})\ \text{maximum})/2 \qquad (C)$$

As already described above, ys is a value of the surface tension of the liquid B. γs (0) is a value of the surface tension of a liquid with the exception of all the surfactants of the liquid B. γs (saturated) is a value of the surface tension of a liquid saturated with one surfactant when the one surfactant of all the surfactants contained in the liquid B is added to the above "liquid with the exception of all the surfactants," and the concentration of the surfactant is increased. The γs (saturated) maximum is the maximum value of γs's (saturated) evaluated on all the surfactants satisfying the above conditions (B), of the surfactants contained in the liquid B.
The above γs (0) is obtained by the measurement of the surface tension value of a liquid with the exception of all the surfactants of the liquid B. The above γs (saturated) is obtained by the measurement of the surface tension of the liquid with one surfactant when the one surfactant of all the surfactants contained in the liquid B is added to the above "liquid with the exception of all the surfactants," and the variation of the surface tension is 0.01 mN/m or less when the concentration of the surfactant is incremented with 0.01 mass %.
Hereinafter, the above γs (0), γs (saturated), and γs (saturated) maximum will be specifically described.
For example, where components constituting the liquid B (Example 1) are a high boiling point solvent (diethyl phthalate, manufactured by Wako Pure Chemical Industries Ltd.), polymerization initiator (TPO-L, initiator-1 below), fluorine-based surfactant (trade name: Megafack F475, manufactured by Dainippon Ink And Chemicals, Inc.) and hydrocarbon-based surfactant (sodium di-2-ethylhexyl sulfosuccinate), γs (0), γs $(\text{saturated})^1$ (when a fluorine-based surfactant is added), γs $(\text{saturated})^2$ (when a hydrocarbon-based surfactant is added), γs (saturated), andγs (saturated) maximum are in the following.

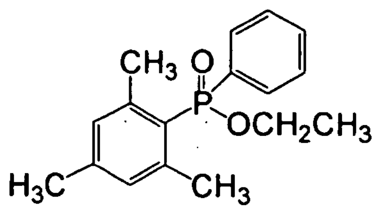

initiator-1

In other words, γs (0) is a value of the surface tension of a liquid with the exception of all the surfactants of the liquid B, with the value being 36.7 mN/m. When a fluorine-based surfactant is added to the liquid and the saturated value of the surface tension of the liquid at the time of an increase in concentration is γs $(\text{saturated})^1$, the value is 20.2 mN/m. In a similar manner, when a hydrocarbon-based surfactant is added to the liquid and the saturated value of the surface tension of the liquid at the time of an increase in concentration is γs $(\text{saturated})^2$, the value is 30.5 mN/m.
The above liquid B (Example 1) contains two species of the surfactants satisfying the above condition (B), soγs (saturated) may possibly take two values in the cases where a fluorine-based surfactant is added thereto γs $(\text{saturated})^1$ and where a hydrocarbon-based surfactant is added theretoγs $(\text{saturated})^2$. As a result, since γs (saturated) maximum is the large value of the above γs $(\text{saturated})^1$ and γs $(\text{saturated})^2$, it is a value of γs $(\text{saturated})^2$.
Consequently, these are summarized in the following:

γs (0) = 36.7 mN/m,
γs $(\text{saturated})^1$ = 20.2 mN/m (when a fluorine-based surfactant is added),
γs $(\text{saturated})^2$ = 30.5 mN/m (when a hydrocarbon-based surfactant is added), and
γs (saturated) maximum = 30.5 mN/m.

As a consequent, the surface tension γs of the liquid B preferably satisfies the relation:

$$\gamma s < (\gamma s\,(0) + \gamma s\,(\text{saturated})\ \text{maximum})/2 = 33.6\text{mN/m}.$$

Additionally, for the above condition (C), from the viewpoint of effective prevention of the spreading of an ink drop between the drop injection and the light exposure, the surface tension of the liquid B preferably satisfies the relation:

$$\gamma s < (\gamma s(0) - 3\{\gamma s\,(0) - \gamma s\,(\text{saturated})\}/4,$$

particularly preferably satisfies the relation:

$\gamma s \leqq \gamma s$ (saturated).

Herein, the above surface tension is a value determined by the Wilhelmie method by means of a generally used surface tension balance (e.g., trade name: SURFACE TENSIONMETER CBVP-Z, manufactured by Kyowa Interface Science Co., Ltd., or the like) at a liquid temperature of 20˚C.

(Surfactants)

In the invention, as described above, for the formation of an ink dot of a target size on a recorded medium, the liquid B preferably contains at least one surfactant.

Surfactants meant by the invention include substances having strong surface-activity for at least one solvent of hexane, cyclohexane, p-xylene, toluene, ethyl acetate, methyl ethyl ketone, butyl carbitol, cyclohexane, triethylene glycol monobutyl ether, 1,2-hexanediol, propylene glycol monomethyl ether, isopropanol, methanol, water, isobornyl acrylate, 1,6-hexanediacrylate and polyethylene glycol diacrylate, preferably substances having strong surface-activity for at least one solvent of hexane, toluene, propylene glycol monomethyl ether, isobornyl acrylate, 1,6-hexanediacrylate and polyethylene glycol diacrylate, more preferably substances having strong surface-activity for at least one solvent of propylene glycol monomethyl ether, isobornyl acrylate, 1,6-hexanediacrylate and polyethylene glycol diacrylate, particularly preferably substances having strong surface-activity for at least one solvent of isobornyl acrylate, 1,6-hexanediacrylate and polyethylene glycol diacrylate.

Whether or not a certain substance has strong surface activity for the solvents listed above may be determined in the following procedure.

(Procedure)

One solvent is selected from the solvents listed above and the surface tension $\gamma(0)$ of the solvent is measured. The substance is added to the same solvent as the solvent for which the above $\gamma(0)$ solvent is evaluated. The concentration of the compound is incremented with 0.01 mass % and the surface tension$\gamma$ (saturated) solvent is measured when the variation of the surface tension is 0.01 mN/m or less. If the relationship between the above $\gamma(0)$ solvent and the above $\gamma$(saturated) solvent is:

$$\gamma\,(0)\ \text{solvent} - \gamma\,(\text{saturated})\ \text{solvent} > 1\ \text{mN/m},$$

the compound is determined to be a substance having strong surface activity for the solvent.

Examples of the surfactant include anionic surfactants such as dialkylsulfosuccinate salts, alkylnaphthalenesulfonate salts and fatty salts, nonionic surfactants such as polyoxyethylene alkyl ethers, polyoxyethylene alkyl aryl ethers, acetylene glycols and polyoxyethylene/polyoxy propylene block copolymers, cationic surfactants such as alkylamine salts and quaternary ammonium salts, fluorine-based surfactants, and the like. The other surfactants include, for example, surfactants described in JP-A Nos. 62-173463 and 62-183457.

The amount of addition of this surfactant is preferably from 0.2 weight % to 10 weight %, more preferably from 0.5 weight % to 8 weight %, particularly preferably from 1 weight % to 5 weight %. Additionally, the amount of addition to the liquid A is preferably smaller than the amount of addition to the liquid B.

<First liquid A (first liquid droplet a1, liquid droplet a2...)>

The first liquid A in the invention (the first liquid droplet a1, liquid droplet a2...) constructs a record image by

drop jetting on the second liquid B imparted in advance on a recorded medium.

The first liquid A contains a polymerizing or crosslinking material. Besides, the first liquid A may be prepared by use of, as required, a colorant, polymerization initiator, intensifying dyestuff, co-intensifier, lipophilic solvent and other components. Hereinafter, each of these components will be described.

(Polymerizing or crosslinking material)

A polymerizing or crosslinking material in the invention causes polymerization or crosslinking reaction by means of an initiation species such as a radical occurring from a polymerization initiator, or the like as described later, and has a function of curing.

Polymerizing or crosslinking materials that may be applied include known polymerizing or crosslinking materials by radical polymerization reaction, cation polymerization reaction, dimmerization reaction or the like (hereinafter, collectively, may be referred to as polymerizing materials).

A polymerizing or crosslinking material in the invention is not particularly limited so long as it causes polymerization reaction to cure by any energy addition. Any species such as a monomer, oligomer or polymer may be used. In particular, a variety of known polymerizing monomers known as cation polymerizing monomers or radical polymerizing monomers that cause polymerization reaction by an initiation species generated from a desirably added polymerization initiator are preferred.

Polymerizing materials may be used alone or in a mixture of plurality of species for the purpose of the adjustment of the reaction rate, physical properties of an ink or cured film, or the like. Additionally, the polymerizing material may be a monofunctional or multifunctional compound.

-Cation polymerizing monomer-

Photo-cationic polymerizing monomers used as polymerizing or crosslinking materials in the invention include, for example, epoxy compounds, vinyl ether compounds, oxetane compounds and the like described in each of JP-A Nos. 6-9714, 2001-31892, 2001-40068, 2001-55507, 2001-310938, 2001-310937, 2001-220526, etc.

Epoxy compouns include aromatic epoxides, alicyclic epoxide, and the like.

Examples of monofunctional epoxy compounds that may possibly used in the invention include phenyl glycidyl ether, p-tert-butyl phenyl glycidyl ether, butyl glycidyl ether, 2-ethylhexyl glycidyl ether, ally glycidyl ether, 1,2-butylene oxide, 1,3-butanediene monoxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, 3-vinylcyclohexene oxide, and the like.

Examples of multifunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-meta-dioxane, bis(3,4-epoxycyclohexylmethyl)azipate, vinylcyclohexene oxide, 4-vinylepoxycyclohexane, bis(3,4-epoxy-6-methylcyclohexylmethyl)azipate, 3,4-epoxy-6-methylcyclohexyl-3',4'-epoxy-6'-methylcyclohexanecarboxylate, methylenebis(3,4-epoxycyclohexane), dicyclopentanedienediepoxide, di(3,4-epoxycyclohexylmethyl) ether of ethylene glycol, ethylenebis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ethers, 1,3-tetradecadiene dioxide, limonene dioxide, 1,2,7,8-diepoxyoctane, 1,2,5,6-diepoxycyclooctane, 1-methyl-4-(2-methyloxyranyl)-7-oxabicyclo[4.1.0]heptane, and the like.

Of these epoxy compounds, aromatic epoxides and alicyclic epoxides are preferred since the curing rates are excellent, and alicyclic epoxides are particularly preferable.

Examples of monofunctional vinyl ethers that may possibly be used in the invention include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexyl methyl vinyl ether, 4-methylcyclohexyl vinyl ether, benzyl vinyl ether, dicyclopentenyl vinyl ether, 2-dicyclopentenoxy ethyl vinyl ether, methoxy ethyl vinyl ether, ethoxy ethyl vinyl ether, buthoxy ethyl vinyl ether, methoxyethoxy ethyl vinyl ether, ethoxyetoxy ethyl vinyl ether, methoxy polyethylene glycol vinyl ether, tetrahydrofurfuryl vinyl ether, 2-hydroxy ethyl vinyl ether, 2-hydroxypropyl vinyl ether, 4-hydroxy butyl vinyl ether, 4-hydroxy methylcyclohexyl methyl vinyl ether, diethylene glycol monovinyl ether, polyethylene glycol vinyl ether, chloroethyl vinyl ether, chlorobuthyl vinyl ether, chloroethoxyethyl vinyl ether, phenyl ethyl vinyl ether, pheoxy polyethylene glycol vinyl ether, and the like.

Examples of multifunctional vinyl ether include divinyl ethers such as ethylene glycol divinyl ether, diethylene glycol divinyl ether, polyethylene glycol divinyl ether, propylene glycol divinyl ether, butylene glycol divinyl ether, hexanediol divinyl ether, bisphenol A alkyleneoxide divinyl ether and bisphenol F alkyleneoxide divinyl ether, multifunctional vinyl ethers such as trimethylolethane trivinyl ether, trimethylolpropane trivinyl ether, ditrimethylolpropane tetravinyl ether, glycerin trivinyl ether, pentaerythrol tetravinyl ether, dipentaerythrol tetravinyl ether, dipentaerythrol hexavinyl ether, ethylene oxide-added trimethylolpropane trivinyl ether, propylene oxide-added trimethylolpropane trivinyl ether, ethylene oxide-added ditrimethylolpropane tetravinyl ether, propylene oxide-added ditrimethylolpropane tetravinyl ether, ethylene oxide-added pentaerythrol tetravinyl ether, propylene oxide-added ditrimethylolpropane tetravinyl ether, ethylene oxide-added pentaerythrol tetravinyl ether, propylene oxide-added pentaerythrol tetravinyl ether, ethylene oxide-added dipentaerythrol hexavinyl ether, propylene oxide-added dipentaerythrol hexavinyl ether.

As vinyl ether compounds, di- and trivinyl ether compounds are preferred from the viewpoints of curing properties, adhesion with a recorded medium, surface hardness of a formed image, etc., and divinyl ether compounds are particularly preferable.

Oxetane compounds in the invention refers to compounds having an oxetane ring, and known oxetane compounds such as described in each of JP-A Nos. 2001-220526, 2001-310937and 2003-341217 may be arbitrarily selected for use.

A compound having an oxetane ring that may possibly be used in an ink composition of the invention is preferably a compound having 1 to 4 oxetane rings within its structure. Use of such a compound renders easy the maintenance of the viscosity of an ink composition in a good range of handling properties, and also is capable of obtaining high adhesion with a recorded medium of an ink after curing.

Examples of monofunctional oxetanes used in the invention include 3-ethyl-3-hydroxymethyloxetane, 3-(meth) acryloxymethyl-3-ethyloxetane, (3-ethyl-3-oxetanylmethoxy)methylbenzene, 4-fluoro-[1 -(3 -ethyl-3 -oxetanylmethoxy) methyl] benzene, 4-methoxy-[1-(3-ethyl-3-oxetanylmethoxy)methyl]benzene, [1-(3-ethyl-3-oxetanylmethoxy)ethyl]phenyl ether, isobutoxymethyl(3-ethyl-3-oxetanylmethyl) ether, isobornyloxyethyl(3-ethyl-3-oxetanylmethyl) ether, isobornyl (3-ethyl-3-oxetanylmethyl) ether, 2-ethylhexyl(3-ethyl-3-oxetanylmethyl) ether, ethyldiethylene glycol(3-ethyl-3-oxetanylmethyl) ether, dicyclopentadiene(3-ethyl-3-oxetanylmethyl) ether, dicyclopentenyloxyethyl(3-ethyl-3-oxetanylmethyl) ether, dicyclopentenyl(3-ethyl-3-oxetanylmethyl) ether, tetrahydrofurfuryl(3-ethyl-3-oxetanylmethyl) ether, tetrabromophenyl(3-ethyl-3-oxetanylmethyl) ether, 2-tetrabromophenoxyethyl(3-ethyl-3-oxetanylmethyl) ether, tribromophenyl(3-ethyl-3-oxetanylmethyl) ether, 2-tribromophenoxyethyl(3-ethyl-3-oxetanylmethyl) ether, 2-hydroxyethyl(3-ethyl-3-oxetanylmethyl) ether, 2-hydroxypropyl(3-ethyl-3-oxetanylmethyl) ether, butoxyethyl(3-ethyl-3-oxetanylmethyl) ether, pentachlorophenyl(3-ethyl-3-oxetanylmethyl) ether, pentabromophenyl(3-ethyl-3-oxetanylmethyl) ether, bornyl(3-ethyl-3-oxetanylmethyl) ether, and the like.

Examples of multifunctional oxetanes include multifunctional oxetanes such as 3,7-bis(3-oxetanyl)-5-oxa-nonane, 3,3'-(1,3-(2-methylenyl)propanediylbis(oxymethylene))bis-(3-ethyloxetane), 1,4-bis[(3-ethyl-3-oxetanylmethoxy) methyl]benzene, 1,2-bis[(3-ethyl-3-oxetanylmethoxy)methyl]ethane, 1,3-bis[(3-ethyl-3-oxetanylmethoxy)methyl]propane, bis{[1-ethyl(3-oxetanyl)]methyl} ether, ethylene glycol bis(3-ethyl-3-oxetanylmethyl) ether, dicyclopentenylbis(3-ethyl-3-oxetanylmethyl) ether, triethylene glycol bis(3-ethyl-3-oxetanylmethyl) ether, tetraethylene glycol bis(3-ethyl-3-oxetanylmethyl) ether, tricycldecanediyldimethylene(3-ethyl-3-oxetanylmethyl) ether, trimethylolpropanetris(3-ethyl-3-oxetanylmethyl) ether, 1,4-bis(3-ethyl-3-oxetanylmethoxy)butane, 1,6-bis(3-ethyl-3-oxetanylmethoxy)hexane, pentaerythroltris(3-ethyl-3-oxetanylmethyl) ether, pentaerythroltetrakis(3-ethyl-3-oxetanylmethyl) ether, polyethylene glycol bis (3-ethyl-3-oxetanylmethyl) ether, dipentaerythrolhexakis(3-ethyl-3-oxetanylmethyl) ether, dipentaerythrolpentakis(3-ethyl-3-oxetanylmethyl) ether, dipentaerythroltetrakis(3-ethyl-3-oxetanylmethyl) ether, caprolactone-modified dipentaerythrolhexakis(3-ethyl-3-oxetanylmethyl) ether, caprolactone-modified dipentaerythrolpentakis(3-ethyl-3-oxetanylmethyl) ether, ditrimethylolpropanetetrakis(3-ethyl-3-oxetanylmethyl) ether, EO-modified bisphenol A bis(3-ethyl-3-oxetanylmethyl) ether, PO-modified bisphenol A bis(3-ethyl-3-oxetanylmethyl) ether, EO-modified hydrogenated bisphenol A bis(3-ethyl-3-oxetanylmethyl) ether, PO-modified hydrogenated bisphenol A bis(3-ethyl-3-oxetanylmethyl) ether, EO-modified bisphenol F (3-ethyl-3-oxetanylmethyl) ether.

These compounds having an oxetane ring are described in detail in the above LP-A No. 2003-341217, and the paragraph numbers [0021] to [0084], and the compounds described in those may possibly be used in the invention as well.

Of the oxetane compounds used in the invention, the compounds having 1 to 2 oxetane rings are preferably used from the viewpoints of the viscosity and adhesion of an ink composition.

In an ink composition of the invention, these polymerizing or crosslinking materials may be used alone or in combination of two or more species, and from the viewpoints of the effective restraint of shrinkage during ink curing, at least one oxetane compound and at least one compound selected from the vinyl ether compounds are preferably used in combination.

-Radical polymerizing monomer-

In the invention, various known radical polymerizing monomers that cause polymerization reaction by means

of an initiation species generated from a photo-radical initiator are also preferably used as polymerizing or crosslinking materials.

The radical polymerizing monomers include (meth)acrylates, (meth)acrylamides, aromatic vinyls, and the like. Besides, herein, both or either of "acrylate" and "methacrylate" may be referred to as "(meth)acrylate," and both or either of "acryl" and "methacryl" may be referred to as "(meth)acryl."

(Meth)acrylates used in the invention include, for example, the following substances.

The monofunctional (meth)acrylates hexyl (meth)acrylate, 2-ethylhexyl (meth)acrylate, tert-octyl (meth)acrylate, isoamyl (meth)acrylate, decyl (meth)acrylate, isodecyl (meth)acrylate, stearyl (meth)acrylate, isostearyl (meth) acrylate, cyclohexyl (meth)acrylate, 4-n-butylcyclohexyl (meth)acrylate, bornyl (meth)acrylate, isobornyl (meth)acrylate, benzyl (meth)acrylate, 2-ethihexyl diglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, alkoxymethyl (meth)acrylate, alkoxyethyl (meth)acrylate, 2-(2-metoxyethoxy)ethyl (meth)acrylate, 2-(2-butoxyethoxy)ethyl (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, hydroxyalkyl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, 3-hydroxypropyl (meth)acrylate, dimethylaminoethyl (meth)acrylate, diethylaminoethyl (meth)acrylate, dimethylaminopropyl (meth)acrylate, diethylaminopropyl (meth) acrylate, trimethoxysilylpropyl (meth)acrylate, trimethylsilylpropyl (meth)acrylate, polyethylene oxide monomethyl ether (meth)acrylate, oligoethyleneoxide monomethyl ether (meth)acrylate, polyethylene oxide (meth)acrylate, oligoethylene oxide (meth)acrylate, oligoethylene oxide monoalkyl ether (meth)acrylate, polyethylene oxide monoalkyl ether (meth) acrylate, dipropylene glycol (meth)acrylate, polypropylene oxide monoalkyl ether (meth)acrylate, oligopropylene oxide monoalkyl ether (meth)acrylate, 2-methacryloyloxylsuccinic acid, 2-methacryloyloxylhexahydrophthalic acid, 2-methacryloyloxyl-2-hydroxypropylphthalate, butoxydiethylene glycol (meth)acrylate, trichloroethyl (meth)acrylate, perfluorooctylethyl (meth)acrylate, 2-hydroxy-3-phenoxypropyl (meth)acrylate, EO-modified phenol (meth)acrylate, EO-modified cresol (meth)acrylate, EO-modified nonylphenol (meth)acrylate, PO-modified nonylphenol (meth)acrylate and EO-modified-2-ethylhexyl (meth)acrylate.

Specific examples of difunctional (meth)acrylates include 1,6-hexanediol di(meth)acrylate, 1,10-decanediol di (meth)acrylate, neopentyl glycol di(meth)acrylate, 2,4-dimethyl-1,5-pentanediol di(meth)acrylate, butylethylpropanediol di(meth)acrylate, ethoxylated cyclohexane methanol di(meth)acrylate, polyethylene glycol di(meth)acrylate, oligoethylene glycol di(meth)acrylate, ethylene glycol di(meth)acrylate, 2-ethyl-2-butyl-butanediol di(meth)acrylate, neopentyl hydroxybivarinic acid glycol di(meth)acrylate, EO-modified bisphenol A di(meth)acrylate, bisphenol F polyethoxy di(meth) acrylate, polypropylene glycol di(meth)acrylate, oligopropylene glycol di(meth)acrylate, 1,4-butanediol di(meth)acrylate, 2-ethyl-2-butylpropanediol di(meth)acrylate, 1,9-nonane di(meth)acrylate, propoxylated ethoxylated bisphenol A di (meth)acrylate, tricyclodecane di(meth)acrylate, and the like.

Specific examples of trifunctional (meth)acrylates may include trimethylolpropane tri(meth)acrylate, trimethylolethane tri(meth)acrylate, alkyleneoxide-modified tri(meth)acrylate of trimethylolpropane, pentaerithrytol tri(meth)acrylate, dipentaerithrytol tri(meth)acrylate, trimethylolpropane tri(meth)acryloyloxypropyl) ether, isocyanuralkyleneoxide-modified tri(meth)acrylate, dipentaerithrytol propionate tri(meth)acrylate, tri((meth)acryloyloxyethyl)isocyanulate, hydroxybivalaldehyde-modified dimethylolpropane tri(meth)acrylate, sorbitol tri(meth)acrylate, propoxylated trimethylolpropane tri(meth)acrylate, ethoxylated glycerin triacrylate, and the like.

Specific examples of tetrafunctional (meth)acrylates may include pentaerithrytol tetra(meth)acrylate, sorbitol tetra(meth)acrylate, ditrimethylolpropane tetra(meth)acrylate, dipentaerithrytol propionate tetra(meth)acrylate and ethoxylated pentaerithrytol tetra(meth)acrylate, and the like.

Specific examples of pentafunctional (meth)acrylates may include sorbitol penta(meth)acrylate and dipentaerithrytol penta(meth)acrylate. Specific examples of hexafunctional (meth)acrylates may include dipentaerithrytol hexa (meth)acrylate, sorbitol hexa(meth)acrylate, alkylene oxide-modified hexa(meth)acrylate of a phosphazene, captolactone-modified dipentaerithrytol hexa(meth)acrylate, and the like.

Examples of (meth)acrylamides used in the invention include (meth)acrylamide, N-methyl (meth)acrylamide, N-ethyl (meth)acrylamide, N-propyl (meth)acrylamide, N-n-butyl (meth)acrylamide, N-t-butyl (meth)acrylamide, N-butoxymethyl (meth)acrylamide, N-isopropyl (meth)acrylamide, N-methylol (meth)acrylamide, N,N-dimethyl (meth)acrylamide, N,N-diethyl (meth)acrylamide and (meth)acryloyl morpholine.

Specific examples of aromatic vinyls used in the invention include styrene, methylstyrene, dimethystyrene, trimethystyrene, ethylstyrene, isopropylstyrene, chloromethyl styrene, methoxystyrene, acetoxystyrene, chlorostyrene, dichlorostyrene, bromostyrene, methyl vinylbenzoate ester, 3-methylstyrene, 4-methylstyrene, 3-ethylstyrene, 4-ethylstyrene, 3-propylstyrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allylstyrene, isopropenylstyrene, butenylstyrene,

octenylstyrene, 4-t-butoxycarbonylstyrene, 4-methoxystyrene, 4-t-butoxystyrene, and the like.

Radical polymerizing monomers in the invention vinyl esters [vinyl acetate, vinyl propionate, vinyl versatate, and the like], allyl esters [allyl acetate and the like], halogen-containing monomers [vinyliden chloride, vinyl chloride and the like], vinyl ethers [methyl vinyl ether, butyl vinyl ether, hexyl vinyl ether, methoxy vinyl ether, 2-ethyl hexyl vinyl ether, methoxy ethyl vinyl ether, cyclohexyl vinyl ether, chloroethyl vinyl ether, and the like], cyanated vinyls [(meth)acrylonitrile and the like], olefins [ethylene, propylene, and the like], and the like.

Of these, radical polymerizing monomers in the invention preferably include (meth)acrylates and (meth)acrylamides in terms of curing rate, particularly (meth)acrylates in terms of curing rate. Moreover, the above multifunctional (meth)acrylates are preferably used with monofunctional or difunctional (meth)acrylate and (meth)acrylamide.

Polymerizing materials may be used alone or in combination with two or more species.

The content of polymerizing material, in the first liquid or as required in the second liquid, ranges from 50 to 99.6 mass %, more preferably from 70 to 99.0 mass %, still more preferably from 80 to 99.0 mass %, based on the total solids (mass) of each liquid droplet.

Besides, the content in a liquid droplet is preferably in the range of from 20 to 98 mass %, more preferably from 40 to 95 mass %, particularly preferably from 50 to 90 mass %, based on the total mass of each liquid droplet.

(Colorants)

The first liquid A contains at least one colorant, and is made to be a composition capable of recording a monochromatic or multi-chromatic visible image.

The content in the first liquid A is preferably from 1 to 30 mass %, more preferably from 1.5 to 25 mass %, particularly preferably from 2 to 15 mass %.

The colorant that is capable of being used here is not particularly limited, and according to application a variety of known pigments or dyes may be selected, as appropriate, for use.

Pigments preferably used in the invention will be described.

The pigment is not particularly limited, and generally commercially available all organic and inorganic pigments or materials prepared by coloring of resin particles with a dye, or the like may be used. Additionally, commercially available pigment dispersions and pigments that are surface treated, for example, materials prepared by dispersion of an pigment in an insoluble resin or the like as a dispersing medium, or materials prepared by grafting of a resin onto a pigment surface, or the like maybe employed so long as the effects of the invention are not lost.

These pigments include, for example, pigments describe in "Dictionary of Pigments", edited by Seijiro Ito, published in 2000, W. Herbst and K. Hunger, "Industrial Organic Pigments", JP-A Nos. 2002-12607, 2002-188025, 2003-26978 and 2003-342503.

Specific examples of organic and inorganic pigments capable of being used in the invention include pigments exhibiting yellow such as C. I. Pigment Yellow 1 (First yellow G, and the like), monoazo pigments like C. I. Pigment Yellow 74, C.I. Pigment Yellow 12 (Disazo Yellow AAA, and the like), disazo pigments like C. I. Pigment Yellow 17, non-benzidine-base azo pigments like C. I. Pigment Yellow 180, azo lake pigments like C. I. Pigment Yellow 100 (Tartrazine Yellow Lake, and the like), condensed azo pigments like C. I. Pigment Yellow 95 (condensed Azo Yellow GR, and the like), acidic dye lake pigments like C. I. Pigment Yellow 115 (Quinoline Yellow Lake, and the like), basic dye lake pigments like C. I. Pigment Yellow 18 (Thioflavine Lake, and the like), anthraquinone-based pigments like Flavantrone Yellow (Y-24), isoindolinone pigments like Isoindolinone Yellow 3RLT (Y-110), quinophthalone pigments like Quinophthalone Yellow (Y-138), isoindoline pigments like Isoindoline Yellow (Y-139), nitroso pigments like C. I. Pigment Yellow 153 (Nickel Nitroso Yellow, and the like), metal complex salt azomethine pigments like C. I. Pigment Yellow 117 (Copper Azomethine Yellow, and the like), and the like.

Examples of pigments exhibiting red or magenta color include monoazo-based pigments like C. I. Pigment Red 3 (Toluidine Red and the like), disazo pigments like C. I. Pigment Red 38 (Pyrazolone Red B and the like), azo lake pigments like C. I. Pigment Red 53:1 (Lake Red C and the like) and C. I. Pigment Red 57:1 (Brilliant Carmin 6B), condensed azo pigments like C. I. Pigment Red 144 (condensed Azo Red BR and the like), acidic dye lake pigments like C. I. Pigment Red 174 (Phloxine B Lake and the like), basic dye lake pigments like C. I. Pigment Red 81 (rhodamine 6G' Lake and the like), anthraquinone-based pigments like C. I. Pigment Red 88 (Thioindigo Bordeaux and the like), perynone dyes like C. I. Pigment Red 194 (Perynone Red and the like), perylene pigments like C. I. Pigment Red 149 (Perylene Scarlet and the like), quinacridone pigments like C. I. Pigment C. I. Pigment Violet 19 (unsubstituted quinacridone) and C. I. Pigment Red 122 (quinacridone magenta), isoisoindolinone pigments like C. I. Pigment Red 180 (Isoisoindolinone Red 2BLT and the like), alizarin lake pigments like C. I. Pigment Red 83 (Madar Lake and the like) like C. I. Pigment Red 83, and the like.

Pigments exhibiting blue or cyano color include disazo-based pigments like C. I. Pigment Blue 25 (Dicyanidin Blue and the like), phthalocyanine pigments like C. I. Pigment Blue 15 (Phthalocyanine Blue and the like) such as PB 15:3, acidic dye lake pigments like C. I. Pigment Blue 24 (Peacock Blue Lake, and the like), basic dye lake pigments

like C. I. Pigment Blue 1 (Bictoria Pure Blue BO Lake and the like), anthraquinone-based pigments like C. I. Pigment Blue 60 (Indanthrone Blue and the like), alkali blue pigments like C. I. Pigment Blue 18 (Alkali Blue V-5:1), and the like.

Pigments exhibiting green include phthalocyanine pigments like C. I. Pigment Green 7 (Phthalocyanine Green) and C. 1. Pigment Green 36 (Phthalocyanine Green), azo metal complex pigments like C. I. Pigment Green 8 (Nitroso Green), and the like.

Pigment exhibiting orange color include isoindoline-based pigments like C. I. Pigment Orange 66 (Isoindoline Orange) and anthraquinone-based pigments like C. I. Pigment Orange 51 (Dichloropyranthrone Orange).

Pigment exhibiting black include carbon black, titanium black, aniline black and the like.

Specific examples of white pigments that are capable of being utilized include basic lead carbonate ($2PbCO_3Pb(OH)_2$, so called Silver White), zinc oxide (ZnO, so called Zinc White), titanium oxide ($TiO_2$, so called Titanium White), strontium titanate ($SrTiO_3$, so called Titanium Strontium White), and the like.

Titanium oxide is small in specific gravity, large in refractive index, and physically and chemically stable, as compared with other white pigments, and thus is large in opacifying power and coloring power and further excellent in resistances to acids and alkalis and other environments. Hence, as a white pigment, titanium oxide is preferably utilized. Of course, other white pigments (may be pigments other than the noted white pigments) may be used, as required.

Dispersing apparatuses that are capable of being used in dispersion of a colorant include, for example, a ball mill, sand mill, attritor, roll mill, jet mill, homogenizer, paint shaker, kneader, agitator, Henschell mixer, colloid mill, ultrasonic homogenizer, pearl mill, wet jet mill, and the like.

When the dispersion of a colorant is carried out, commercially available dispersants may be utilized. As a dispersant, a high molecular weight dispersant is preferable; the high molecular weight dispersants include high molecular weight dispersants such as 4000 series manufactured by Efka Corp., Solsperse series manufactured by Zeneca Inc., disperbyk series manufactured by BYK-chemie Corp., and the like. Besides, as dispersants, synergists depending on a variety of pigments are capable of being used as well. These dispersants and dispersing assists are preferably added in an amount of from 1 to 50 parts by mass, based on 100 mass parts of a pigment.

In an ink composition, a solvent may be added as a dispersing medium for various components such as a colorant. The above polymerizing or crosslinking material of a low molecular weight component may also be used as a dispersing medium, without solvent. An ink composition of the invention is preferably an ink of an activation energy line curing type, so nonuse of a solvent is preferably because an ink is applied onto a recorded medium and then cured. This is because solvent resistance is deteriorated or a volatile organic compound (VOC) of remaining solvents poses a problem when a solvent remains in a cured ink image. From this viewpoint, a polymerizing or crosslinking material is used as a dispersant. Of these, the selection of a polymerizing or crosslinking material of the lowest viscosity is preferred from the viewpoints of dispersion suitability and improvement of handling properties of an ink composition.

The average particle diameter of a colorant used in the invention preferably ranges from about 0.01 to about 0.4 μm, more preferably from 0.02 to 0.2 μm because the finer the particle, the more excellent the coloring properties. The selection of a colorant, dispersant and dispersing medium, the dispersion and filtration conditions are set so that the maximum particle diameter is 3 μm or less, preferably 1 μm or less. This particle control renders it possible to restrain the clogging of a head nozzle, and maintain the storage stability of an ink and ink transparency and curing sensitivity.

The particle diameter of a colorant in an ink composition may be determined by a known measurement method. Specifically, the particle diameter may be determined by the centrifugal sedimentation light transmission method, the X-ray transmission method, the laser diffraction/dispersion method, or the dynamic light transmission method. In the invention, a value is adopted that is obtained by determination by use of the laser diffraction/dispersion method.

(Sensitizing dyes)

In the invention, an sensitizing dye may be added for the purpose of improvement of sensitivity of a photopolymerizing initiator. Preferred examples of sensitizing dyes may include sensitizing dyes that belong to compounds below and exhibit absorption wavelengths in the region of from 350 nm to 450 nm.

The compounds include polynuclear aromatics (e.g., pyrene, perylene, triphenylene, 9,10-dibutoxyanthracene), xanthenes (e.g., fluorescein, eosine, erythrosine, rhodamine B, rose Bengal), cyanines (e.g., thiacarbocyanine, oxacarbocyanine), merocyanines (e.g., merocyanine, carbomerocyanine), thiazines (e.g., thionine, methylene blue, toluidine blue), acridines (e.g., acridine orange, chloroflavin, acriflavin), anthraquinones (e.g., anthraquinone), squaliums (e.g., squalium) and coumarins (e.g., 7-dimethylamino-4-methylcoumarin).

More preferred examples of sensitizing dyes include the compounds represented by Formulae (IX) to (XIII) below.

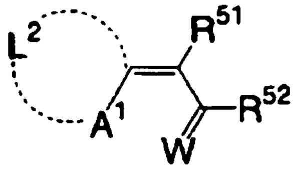

(IX)

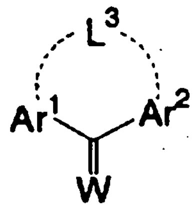

(X)

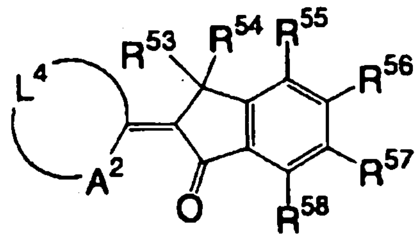

(XI)

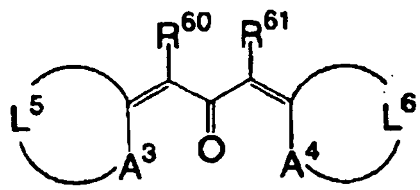

(XII)

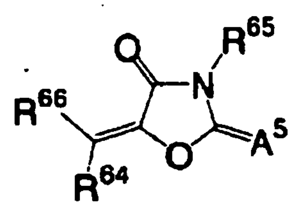

(XIII)

In Formula (IX), $A^1$ denotes a sulfur atom or $NR^{50}$, $NR^{50}$ denotes an alkyl group or aryl group, $L^2$ denotes a non-metallic atomic group to form the basic nucleus of a dyestuff, together with an adjacent $A^1$ and adjacent carbon atom, $R^{51}$ and $R^{52}$ each independently denote a hydrogen atom or a monovalent non-metallic group, $R^{51}$ and $R^{52}$ may combine to each other to form an acidic nucleus of a dyestuff, and W denotes an oxygen atom or sulfur atom.

In Formula (X), $Ar^1$ and $Ar^1$ each independently denote an aryl group, and are bonded to each other via a linkage of $-L^3-$, $L^3$ denotes -O- or -S-, and W is the same as in Formula (IX).

In Formula (XI), $A^2$ denotes a sulfur atom or $NR^{59}$, $L^4$ denotes a non-metallic atomic group to form the basic nucleus of a dyestuff, together with an adjacent $A^2$ and adjacent carbon atom, $R^{53}$, $R^{54}$, $R^{55}$, $R^{56}$, $R^{57}$ and $R^{58}$ each independently denote a monovalent non-metallic group, and $R^{59}$ denotes an alkyl group or aryl group.

In Formula (XII), $A^3$ and $A^4$ each independently denotes -S-, or $-NR^{62}-$ or $-NR^{63}-$, $R^{62}$and $R^{63}$ each independently denote a substituted or unsubstituted alkyl group, or substituted or unsubstituted aryl group, $L^5$ and $L^6$ each independently denotes a non-metallic group that forms a dyestuff basic nucleus together with a adjacent $A^3$, $A^4$ and adjacent carbon atom, $R^{60}$ and $R^{61}$each independently denotes a hydrogen atom or a monovalent non-metallic group, or may link to each other to form an aliphatic or aromatic ring.

In Formula (XIII), $R^{66}$ denotes an aromatic rig or hetero ring that may carry a substituent, $A^5$ denotes an oxygen atom, sulfur atom or $-NR^{67}-$, $R^{64}$, $R^{65}$ and $R^{67}$ each independently denotes a hydrogen atom or a monovalent non-metallic group, $R^{67}$ and $R^{64}$ each, and $R^{65}$ and $R^{67}$ each may bond to each other to form an aliphatic or aromatic ring.

Preferred examples of the compounds represented by Formulae (IX) to (XIII) include Illustrative Compounds (A-1) to (A-20) as indicated below, and the like.

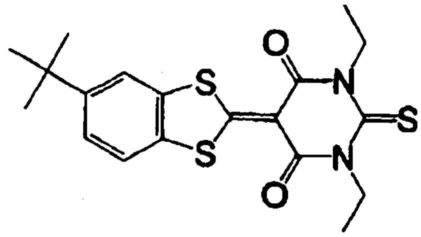

(A-1)

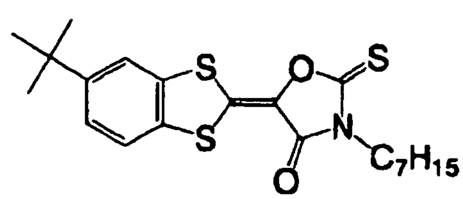

(A-2)

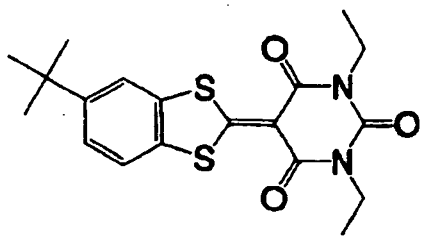

(A-3)

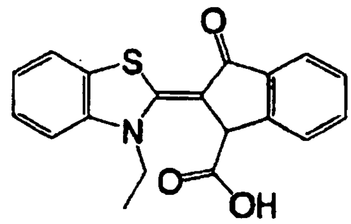

(A-4)

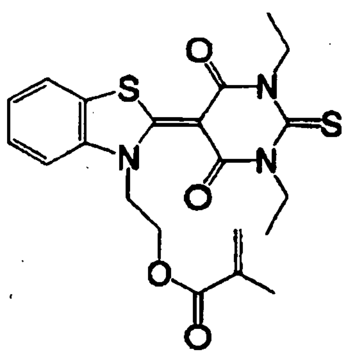

(A-5)

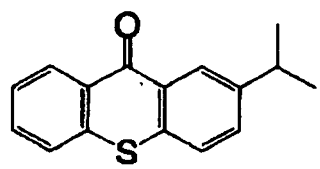

(A-6)

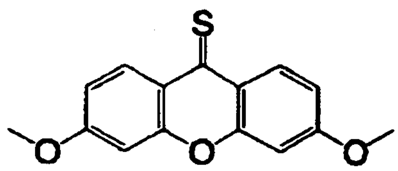

(A-7)

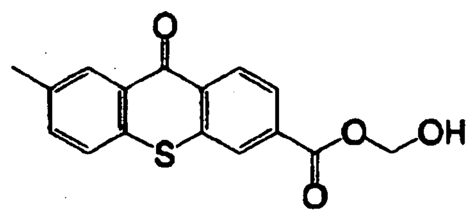

(A-8)

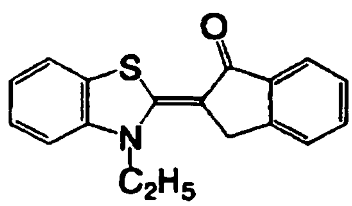

(A-9)

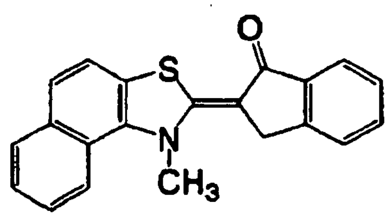

(A-10)

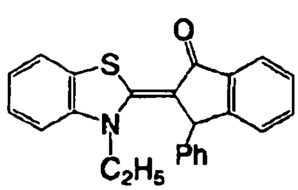

(A-11)

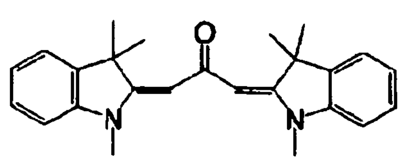

(A-12)

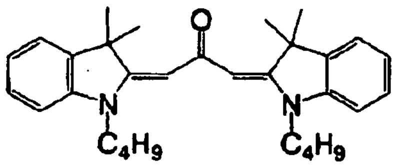

(A-13)

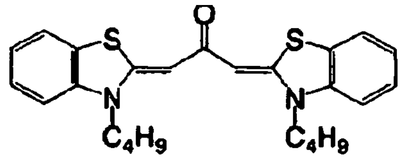

(A-14)

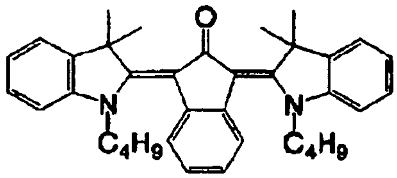

(A-15)

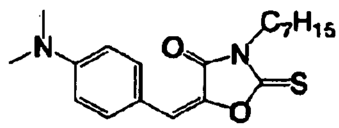

(A-16)

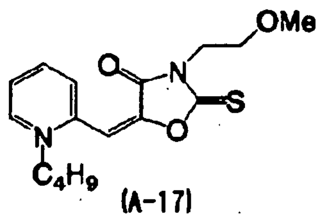

(A-17)

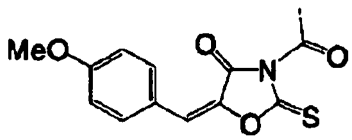

(A-18)

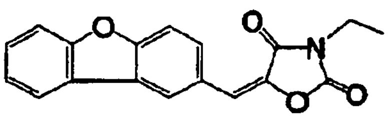

(A-19)

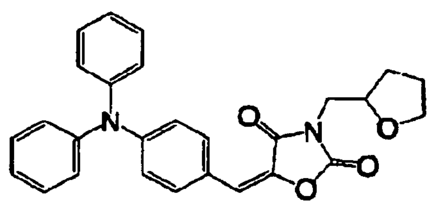

(A-20)

(Co-sensitizer)

To an ink composition of the invention, a known compound that have actions such as further improving sensitivity, or restraining polymerization inhibition by means of oxygen may be added as a co-sensitizer.

Examples of these co-sensitizers include amines, for examples, compounds described in M. R. Sander et al., "Journal of Polymer Society", Vol. 10, p. 3173, 1972, JP-A Nos. 44-20189, 51-82102, 52-134692, 59-138205, 60-84305, 62-18537, 64-33104, and Research Disclosure No. 33825, and other compounds. Specific examples include triethanol amine, ethyl p-dimethylaminobenzoate ester, p-formyldimethylaniline, p-methylthiodimethylaniline, and the like.

Other examples include thiols and sulfides. e.g., thiol compounds described in JP-A No. 53-702, JP-B No. 55-500806 and JP-A No. 5-142772, disulfides of JP-A 56-75643, and the like. Specific examples include 2-mercaptobenzothiazol, 2-mercaptobenzoxazole, 2-mercaptobenzoimidazole, 2-mercapto-4(3H)-quinazoline, β-mercaptonaphthalene, and the like.

Moreover, other examples include amino acid compounds (e.g., N-phenylglycine, and the like), organic metal compounds describe in JP-B No. 48-42965 (e.g., tributyl tin aceate, and the like), hydrogen donors described in JP-B No. 55-34414, sulfur compounds described in JP-A No. 6-308727 (e.g., trithiane, and the like), phosphorous compounds described in JP-A No. 6-250387 (diethylphosphite, and the like), Si-H and Ge-H compounds described in JP-A No. 8-65779, and the like.

(Lipophilic solvents)

The first liquid A and second liquid B in the invention (preferably the second liquid B) may contain a lipophilic

solvent.

A lipophilic solvent is effective in the prevention of occurrence of blurs of an image and the line width variation of narrow lines in an image, and also is capable of adjusting the sp values of the first and second liquids to the range as already described.

A "lipophilic" solvent refers to a compound carrying solubility of 1 g or less for 100 cc of water.

A lipophilic solvent is contained in the second liquid B or not contained therein, and may be also contained in the first liquid A. In addition, a lipophilic solvent may be made to be contained in another liquid other than the second liquid B and the first liquid A.

Lipophilic solvents include high boiling point organic solvents, the above polymerizing materials and the like; a high boiling point organic solvent is preferred for the avoidance of solidification in nozzle and the like; use of a polymerizing material is preferred for the enhancement of film strength of a film formed by ink.

Hereinafter, a high boiling point organic solvent suitable in the invention will be set forth.

A high boiling point organic solvent that satisfies none of the viscosity conditions of (1) above may be high in viscosity to cause the trouble of imparting it to a recorded medium; a high boiling point organic solvent that does not satisfy the boiling conditions of (2) above may be too high in boiling point to evaporate in image recording, thereby decreasing the effect of the invention in some cases.

Of the conditions of (1) above, the viscosity at 25°C is preferably further within the range of 70 mPa·s or less, more preferably within the range of 40 mPa·s or less, particularly preferably within the range of 20 mPa·s or less. For the conditions of (2) above, the boiling point is preferably in the range of 150°C or more, particularly preferably in the range of 170°C or more. The lower limit of the melting point is preferably in the range of 80°C or less. The solubility of water (25°C) is preferably 4 g or less, more preferably 3 g or less, still more preferably 2 g or less, and particularly preferably 1 g or less.

The "viscosity" herein is a viscosity evaluated by means of a RE 80 model viscometer manufactured by Toki Sangyo Co., Ltd. The RE 80 model viscometer is a cone rotor/flat sheet mode viscometer corresponding to the E model. Measurements were carried out by means of a rotor of the rotor code No. 1 at a revolution number of 10 r.p.m. However, a solvent of a viscosity of 60 mPa·s or higher is measured, as required, by change of the revolution number to 5 r.p.m., 2.5 r.p.m., 1 r.p.m., 0.5 r.p.m., or the like.

Additionally, the term "solubility of water" is a saturated concentration of water in a high boiling point organic solvent at 25°C, and means the mass (g) of water capable of being dissolved in 100 g of a high boiling point organic solvent.

The above high boiling point organic solvents are preferably the compounds represented by Formulae [S-1] to [S-9] below.

〔S−1〕 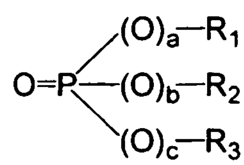

〔S−2〕 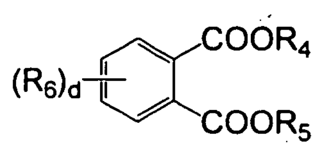

[S-3] $(Ar\text{-}COO)_e\text{-}R_7$

[S-4] $(R_8\text{-}COO)_f\text{-}R_9$

[S-5] $R_{10}\text{-}(COO\text{-}R_{11})_g$

〔S−6〕 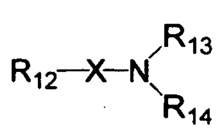

[S-7]

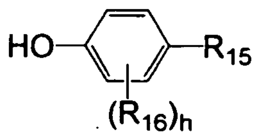

[S-8]

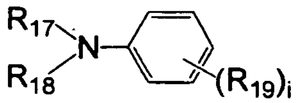

[S-9]

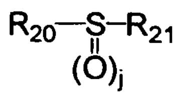

In Formula [S-1] above, $R_1$, $R_2$ and $R_3$ each independently denote an aliphatic group or aryl group. a, b and c each independently denotes 0 or 1.

In Formula [S-2], $R_4$ and $R_5$ each independently denote an aliphatic group or aryl group, $R_6$ denotes a halogen atom (F, Cl, Br, I; hereinafter the same), alkyl group, alkoxy group, aryoxy group, alkoxycarbonyl group or aryloxycarbonyl group, d denotes an integer of 0 to 3, and when d is plural, a plurality of $R_6$'s may be the same or different.

In Formula [S-3], Ar denotes an aryl group, e denotes an integer of 1 to 6, and $R_7$denotes an e-valent hydrocarbon group or hydrocarbon groups bonded to each other by ether linkage.

In Formula [S-4], $R_8$ denotes an aliphatic group, f denotes an integer of 1 to 6, and $R_9$denotes f-valent hydrocarbon group or hydrocarbon groups bonded to each other by ether linkage.

In Formula [S-5], g denotes an integer of 2 to 6, $R_{10}$ denotes a g-valent hydrocarbon group (excluding an aryl group), and $R_{11}$ denotes an aliphatic group or aryl group.

In Formula [S-6], $R_{12}$, $R_{13}$ and $R_{14}$ each independently denotes a hydrogen atom, aliphatic group or aryl group, X denotes -CO-, or $-SO_2-$, and $R_{12}$ and $R_{13}$, or $R_{13}$ and $R_{14}$ may bond to each other to form a ring.

In Formula [S-7], $R_{15}$ denotes an aliphatic group, alkoxycarbonyl group, aryloxycarbonyl group, alkylsulfonyl group, arylsulfonyl group, aryl group, or cyano group, $R_{16}$denotes a halogen atom, aliphatic group, aryl group, alkoxy group, or aryloxy group, h denotes an integer of 0 to 3, and when h is plural, a plurality of $R_{16}$'s may be the same or different.

In Formula [S-8], $R_{17}$ and $R_{18}$ each independently denote an aliphatic group or aryl group, $R_{19}$ denotes a halogen atom, aliphatic group, aryl group, alkoxy group, or aryloxy group, i denotes an integer of 0 to 5, and when i is plural, a plurality of $R_{19}$'s may be the same or different.

In Formula [S-9], $R_{20}$ and $R_{21}$ each independently denote an aliphatic group or aryl group. j denotes 1 or 2. $R_{20}$ and $R_2$ may bind to each other to form a ring.

In Formulae [S-1] to [S-9], when $R_1$, to $R_6$, $R_8$ and $R_{11}$ to $R_{21}$ are groups containing an aliphatic group or groups containing an aliphatic group, the aliphatic group may be any straight-chain or branched chain or circular, and may contain either an unsaturated bond or substituent; examples of substituent include halogen atoms, aryl groups, alkoxy groups, aryloxy groups, alkoxycarbonyl groups, hydroxyl groups, acyloxy groups, epoxy groups, and the like.

In Formulae [S-1] to [S-9], when $R_1$, to $R_6$, $R_8$ and $R_{11}$ to $R_{21}$ are cyclic aliphatic groups, that is, cycloalkyl groups or groups containing therein a cycloalkyl group, the cycloalkyl group having 3- to 8-membered rings may contain an unsaturated bond, or carry a substituent or crosslinking group; examples of substituents include halogen atoms, aliphatic groups, hydroxyl groups, acyl groups, aryl groups, alkoxy groups, epoxy groups, and the like; and examples of crosslinking groups include methylene, ethylene, isopropyridene groups, and the like.

In Formulae [S-1 to [S-9], when $R_1$, to $R_6$, $R_8$, $R_{11}$ to $R_{21}$ and Ar contain an aryl group or groups containing an aryl group, the aryl group may replaced by a substituent such as a halogen atom, aliphatic group, aryl group, alkoxy group, aryloxy group or aloxycarbonyl group.

In Formulae [S-3], [S-4] and [S-5], when $R_7$, $R_9$ or $R_{10}$ is a hydrocarbon, the hydrocarbon group may contain a ring structure (e.g., a benzene ring, cyclopentane ring, cyclohexane ring) or unsaturated bond, and may carry a substituent; examples of substituents include a halogen atom, hydroxyl group, acyloxy group, aryl group, alkoxy group, aryloxy group, epoxy group, and the like.

Hereinafter, of high boiling point organic solvents represented by Formulae [S-1] to [S-9], particularly preferred high boiling point organic solvents will be described.

In Formula [S-1], $R_1$, $R_2$ and $R_3$ each independently preferably include aliphatic groups having 1 to 24 (preferably

4 to 18) carbon atoms (e.g., n-butyl, n-hexyl, n-octyl, EH-octyl, 2-ethylhexyl, 3,3,5-trimethylhexyl, 3,5,5-trimethylhexyl, n-dodecyl, n-octadecyl, benzyl, oleyl, 2-chloroethyl, 2,3-dichloropropyl, 2-butoxyethyl, 2-phenoxyethyl, cyclopentyl, cyclohexyl, 4-t-butylcyclohexyl, 4-metylcyclohexyl), or aryl groups having 6 to 24 (preferably 6 to 18) carbon atoms (e.g., phenyl, cresyl, p-ninylphenyl, xylyl, cumenyl, p-methoxyphenyl, p-methoxycarbonylphenyl). Of these, $R_1$, $R_2$ and $R_3$ particularly preferably include n-hexyl, n-octyl, EH-octyl, 2-ethylhexyl, 3,5,5-trimethylhexyl, n-dodecyl, 2-chloroetyyl, 2-butoxyethyl, cyclohexyl, phenyl, cresyl, p-nonylphenyl and cumenyl.

a, b and c are each independently 0 or 1, and more preferably a, b and c are all 1.

In Formula [S-2], $R_4$ and $R_5$ each independently preferably include aliphatic groups having 1 to 24 (preferably 4 to 18) carbon atoms (e.g., the same aliphatic groups as in the above $R_1$, heptyl, ethoxycarbonylmethyl, 1,1-diethylpropyl, 2-ethyl-1-methylhexyl, cyclohexylmethyl, 1-ethyl-1,5-dimethylhexyl, 3,5,5-trimethylcyclohexyl, menthyl, bornyl, 1-methylcyclohexyl), or aryl groups having 6 to 24 (preferably 6 to 18) carbon atoms (e.g., the aryl groups as in the above $R_1$, 4-t-butylphenyl, 4-t-octylphenyl, 1,3,5-trimethylphenyl, 2,4-di-t-butylphenyl, 2,4-di-t-pentylphenyl). Of these, $R_4$ and $R_5$ are more preferably aliphatic groups, particularly preferably n-butyl, heptyl, 2-ethylhexyl, n-dodecyl, 2-butoxyethyl and ethoxycarbonyl methyl.

$R_6$ preferably includes halogen atoms (preferably a chlorine atom), alkyl groups having 1 to 18 carbon atoms (e.g., methyl, isopropyl, t-butyl, n-dodecyl), alkoxy groups having 1 to 18 carbon atoms (e.g., methoxy, n-butoxy, n-octyloxy, methoxyethoxy, benzyloxy), aryloxy groups having 6 to 18 carbon atoms (e.g., phenoxy, p-tolyloxy, 4-methoxyphenoxy, 4-t-butylphenoxy), or alkoxycarbonyl groups having 2 to 19 carbon atoms (e.g., methoxycarbonyl, n-butoxycarbonyl, 2-ethylhexyloxycarbonyl), or aryloxycarbonyl groups having 6 to 25 carbon atoms. Of these, $R_6$ is more preferably an alkoxycarbonyl group, particularly preferably n-butoxycarbonyl.

d is 0 or 1.

In Formula [S-3], Ar preferably includes aryl groups having 6 to 24 (preferably 6 to 18) carbon atoms (e.g., phenyl, 4-chlorophenyl, 2,4-dichlorophenyl, 4-methoxyphenyl, 1-naphtyl, 4-n-butoxyphenyl, 1,3,5-trimethylphenyl and 2-(2-n-butoxycarbonylphenyl); of these, Ar is particularly preferably phenyl, 2,4-dichlorophenyl and 2-(2-n-butoxycarbonylphenyl)phenyl.

e is an integer of from 1 to 4 (preferably from 1 to 3).

$R_7$ preferably includes e-valent hydrocarbon groups having 2 to 24 (preferably 2 to 18) carbon atoms [e.g., the same aliphatic groups as in above $R_4$, n-octyl, the same aryl groups as in the above $R_4$,$-(CH_2)_2-$,

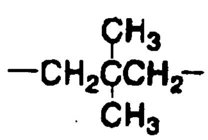
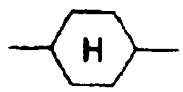
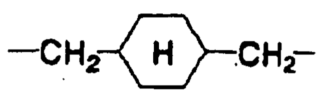

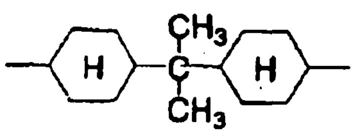
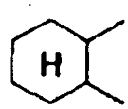
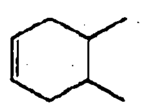
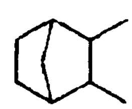

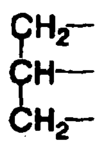
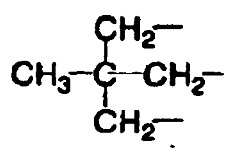

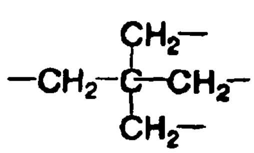
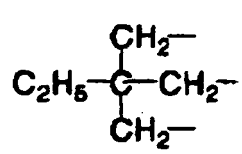

$-(CH_2)_6-$

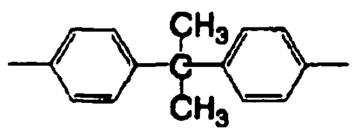 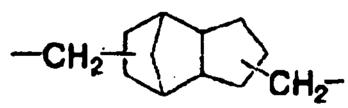

], or e-valent hydrocarbon groups having 4 to 24 (preferably 4 to 18) carbon atoms bonded to each other by ether linkage [e.g., $-CH_2CH_2OCH_2CH_2-$, $-CH_2CH_2(OCH_2CH_2)_3-$, $-CH_2CH_2CH_2OCH_2CH_2CH_2-$,

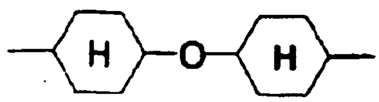 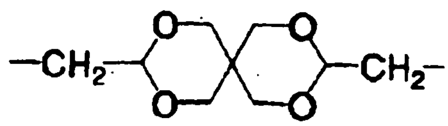

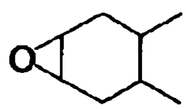 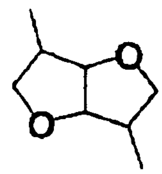

]. Of these, $R_7$ is more preferably, particularly preferably n-butyl, n-octyl and 2-ethylhexyl.

In Formula [S-4], $R_8$ preferably includes aliphatic groups having 1 to 24 (preferably 1 to 17) carbon atoms (e.g., methyl, n-propyl, 1-hydroxyethyl, 1-pentylethyl, n-heptyl, n-undecyl, n-tridecyl, pentadecyl, 8,9-epoxyheptadecyl, cyclopropyl, cyclohexyl, 4-methylcyclohexyl); of these, $R_8$ is particularly preferably n-heptyl, n-tridecyl, 1-hydroxyethyl, 1-ethylpentyl and 8,9-epoxyheptadecyl.

f is an integer of from 1 to 4 (preferably from 1 to 3).

$R_9$ preferably includes f-valent hydrocarbon groups having 4 to 24 (preferably 2 to 18) carbon atoms, or f-valent hydrocarbon groups having 4 to 24 (preferably 4 to 18) carbon atoms bonded to each other by ether linkage (e.g., the same groups as in the above $R_7$, 1-methyl-2-methoxyethyl, 2-hexadecyl); of these, $R_9$ is particularly preferably 2-ethylhexyl, 2-hexyldecyl, 1-methyl-2-methoxyetyhl, and groups indicated below.

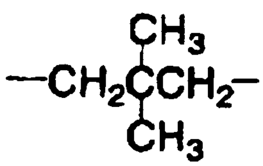 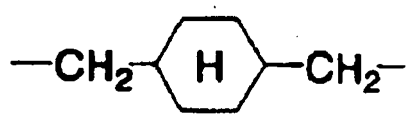 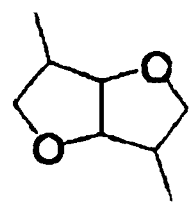

In Formula [S-5], g is from 2 to 4 (preferably 2 or 3).

$R_{10}$ preferably includes g-valent hydrocarbon groups [e.g., $-CH_2-$, $-(CH_2)_2-$, $-(CH_2)_4-$, $-(CH_2)_7-$, $-(CH_2)_8-$,

$-(CH_2)_8-$

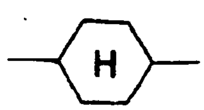 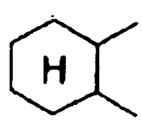 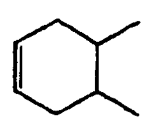 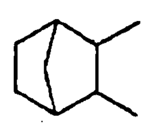

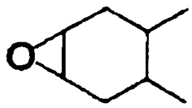 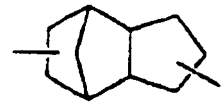 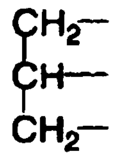 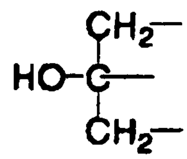

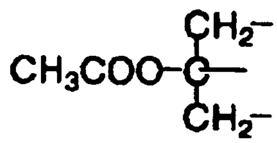 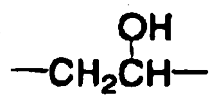 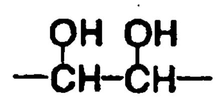

]; of these, $R_{10}$ is particularly preferably $-(CH_2)_4-$, $-(CH_2)_8-$,

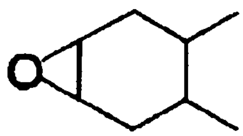 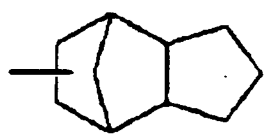 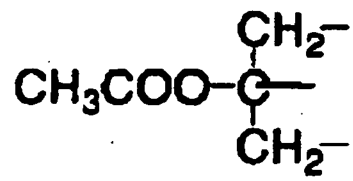

$R_{11}$ preferably includes aliphatic groups having 1 to 24 (preferably 4 to 18) carbon atoms, or aryl groups having 6 to 24 (preferably 6 to 18) carbon atoms (e.g., the same aliphatic groups as in the above $R_4$, aryl groups); of these, $R_{11}$ is more preferably an alkyl group, particularly preferably n-butyl, n-octyl and 2-ethylhexyl.

In Formula [S-6], $R_{12}$ preferably includes hydrogen atoms, aliphatic groups having 1 to 24 (preferably 3 to 20) carbon atoms (e.g., n-propyl, 1-ethylpentyl, n-undecyl, n-pentadecyl, 2,4-di-t-pentylphenoxymethyl, 4-t-octylphenoxymethyl, 3-(2,4-di-t-butylphenoxy)propyl, 1-(2,4-di-t-butylpenoxy)propyl, cycohexyl, 4-methylcycohexyl, 8-N,N-diethylcarbamoyloctyl], or aryl groups having 6 to 24 (preferably 6 to 18) carbon atoms (e.g., the same aryl groups as in the above Ar, 3-methylphenyl, 2-(N,N-di-n-octylcarbamoyl)phenyl); of these, $R_{12}$ is particularly preferably n-undecyl, 8-N,N-diethylcarbamoyloctyl, 3-methylphenyl, 2-(N,N-di-n-octylcarbamoyl)phenyl.

$R_{13}$ and $R_{14}$ preferably include hydrogen atoms, aliphatic groups having 1 to 24 (preferably 1 to 18) carbon atoms (e.g., methyl, ethyl, isopropyl, n-butyl, n-hexyl, n-octyl, 2-ethylhexyl, n-dodecyl, n-tetradecyl, cyclopentyl, cyclopropyl), or aryl groups having 6 to 18 (preferably 6 to 15) carbon atoms (e.g., phenyl, 1-naphtyl, p-tolyl); of these, $R_{13}$ and $R_{14}$are particularly preferably methyl, ethyl, n-butyl, n-octyl, n-tetradecyl and phenyl.

$R_{13}$ and $R_{14}$ may bond to each other together with N to form a pyrrolidine ring, piperidine ring and morpholine, and $R_{12}$ and $R_{13}$ may bond to each other together with N to form a pyrrolidone ring and piperidine ring.

X is -CO- or $-SO_2-$, and preferably X is -CO-.

In Formula [S-7], $R_{15}$ preferably includes aliphatic groups having 1 to 24 (preferably 3 to 18) carbon atoms (e.g., methyl, isopropyl, t-butyl, t-pentyl, t-hexyl, t-octyl, 2-butyl, 2-hexyl, 2-octyl, 2-dodecyl, 2-hexadecyl, t-pentadecyl, cyclopentyl, cyclohexyl), alkoxycarbonyl groups having 2 to 24 (preferably 5 to 17) carbon atoms (e.g., n-butoxycarbonyl, 2-ethylhexyloxycarbonyl, n-dodecyloxycarbonyl), aryloxycarbonyl groups having 7 to 24 (preferably 7 to 18) carbon atoms (e.g., a phenoxycarbonyl group, naphthoxycarbonyl group, cresyloxycarbonyl group), alkylsulfonyl groups having 1 to 24 (preferably 1 to 18) carbon atoms (e.g., methylsulfonyl, n-butylsulfonyl, n-dodecylsulfonyl), aryl sulfonyl groups, having 6 to 30 (preferably 6 to 24) carbon atoms (e.g., p-tolylsulfonyl, p-dodecylphenylsulfonyl, p-hexadecyloxyphenylsulfonyl), aryl groups having 6 to 32 (preferably 6 to 24) carbon atoms (e.g., phenyl, p-tolyl), or cyano groups; of these, $R_{15}$ is still more preferably an aliphatic group having 1 to 24 carbon atoms and an alkoxycarbonyl group having 2 to 24 carbon atoms, particularly preferably an aliphatic group having 1 to 24 carbon atoms.

$R_{16}$ includes halogenatoms (preferably Cl), aliphatic groups having 1 to 24 (preferably 1 to 18) carbon atoms {more preferably, alkyl groups (e.g., the same alkyl groups as in the above $R_{15}$), cycloalkyl groups having 3 to 18 (preferably 5 to 17) carbon atoms (e.g., cyclopentyl, cyclohexyl)}, aryl groups having 6 to 32 (preferably 6 to 24) carbon atoms (e.g., phenyl, p-tolyl), alkoxy groups (e.g., methoxy, n-butoxy, 2-ethylhexyloxy, benzyloxy, n-dodecyloxy, n-hexadecyloxy), or aryloxy groups having 6 to 32 (preferably 6 to 24) carbon atoms (e.g., phenoxy, p-t-butylphenoxy, p-t-octylphenoxy, m-pentadecylphenoxy, p-dodecyloxyphenoxy); of these, $R_{16}$ is still more preferably an aliphatic group having 1 to 24 carbon atoms, and particularly preferably an aliphatic group having 1 to 12 carbon atoms.

h is an integer of 1 to 2.

In Formula [S-8], preferred examples of $R_{17}$ and $R_{18}$ are the same examples as in the above $R_{13}$ and $R_{14}$ except a hydrogen atom; of these, $R_{17}$ and $R_{18}$ are still more preferably an aliphatic group, particularly preferably n-butyl, n-octyl and n-dodecyl. However, $R_{17}$ and $R_{18}$ do not bond to each other to form a ring.

Preferred examples of $R_{19}$ are the same examples as in the above $R_{16}$; of these, $R_{19}$ still more preferably includes an alkyl group and alkoxy group, particularly preferably n-octyl, methoxy, n-butoxy, n-octyloxy.

i is an integer of 1 to 5.

In Formula [S-9], preferred examples of $R_{20}$ and $R_{21}$ are the same examples as in the above $R_1$, $R_2$ and $R_3$ unless they bond and form a ring; of these, $R_{20}$ and $R_{21}$ are particularly preferably substituted or unsubstituted aliphatic groups having 1 to 24 carbon atoms.

$R_{20}$ and $R_{21}$ may bond to each other to form a ring, and a ring to be formed is preferably a 3 to 10-membered ring, particularly preferably 5 to 7-membered ring. j denotes 1 or 2, and preferably j is 1.

In the following, specific examples of high boiling point organic solvents (Illustrative Compounds S-1 to S-53), the viscosity of each high boiling point organic solvent (a value determined by means of the above unit at 25˚C and 60˚C: mPa·s) and the boiling points are indicated.

Herein, the boiling point of a high boiling point organic solvent is a value in terms of atmospheric pressure, from reduced pressure during distillation. Additionally, In the following specific examples, an example without the description of a boiling point means that it is confirmed that the example does not boil at 170˚C. An example without the description of a viscosity at 25˚C denotes a solid at 25˚C.

Compound represented by Formula [S-1]

| | | Viscosity (mPas) | | |
|---|---|---|---|---|
| | | (25˚C) | (60˚C) | Boiling point(˚C) |
| S-1 | 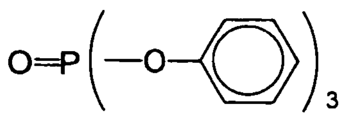 | - | 8.3 | 370 |
| S-2 | 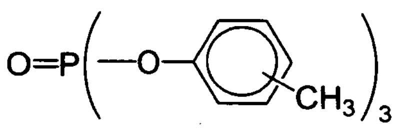 | 57.6 | 11.8 | 435 |
| S-3 | 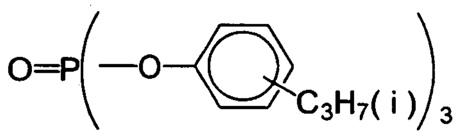 | 95 | 17.5 | 485 |
| S-4 | 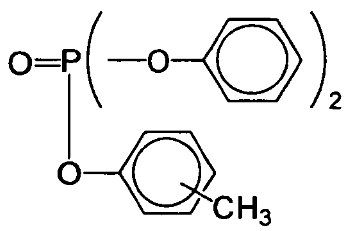 | 65 | 12.8 | 435 |
| S-5 | 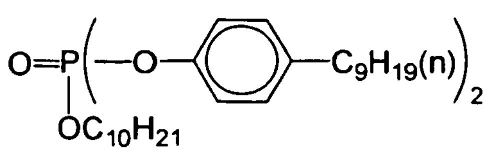 | 49 | 10.3 | 435 |
| S-6 | 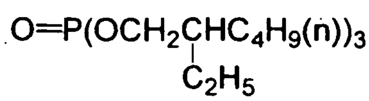 | 11.7 | 4.0 | 390 |

(continued)

| | | Viscosity (mPas) | | |
|---|---|---|---|---|
| | | (25°C) | (60°C) | Boiling point(°C) |
| S-7 | 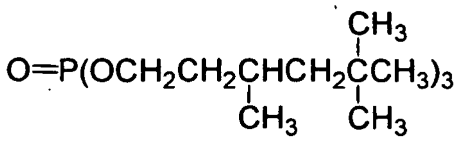 | 20.22 | 5.8 | 420 |
| S-8 | $O{=}P(OC_{12}H_{25}(n))_3$ | 28.6 | 6.9 | 480 |
| S-9 | $O{=}P(OC_6H_{13}(n))_3$ | 6.62 | 3.0 | 365 |
| S-10 | $O{=}P(OCH_2CH_2Cl)_3$ | 20.8 | 5.5 | 360 |
| S-11 | $O{=}P(OCH_2CH_2OC_4H_9(n))_3$ | 10.9 | 3.8 | 400 |
| S-12 | $((EH)C_8H_{17})_3P{=}O$ | 41.1 | 9.0 | - |
| S-13 | 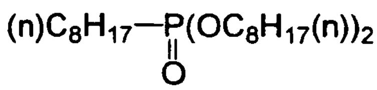 | 13.7 | 4.3 | - |

Compound represented by Formula [S-2]

| | | Viscosity (mPas) | | |
|---|---|---|---|---|
| | | (25°C) | (60°C) | Boiling point(°C) |
| S-14 | 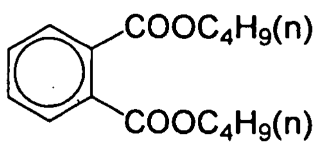 | 20.3 | 5.1 | 370 |
| S-15 | 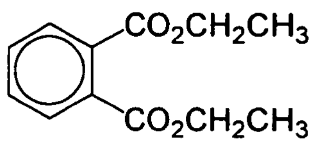 | 10.1 | 3.7 | 296 |
| S-16 | 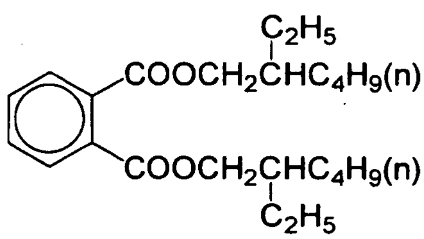 | 62.7 | 11.7 | 400 |
| S-17 | 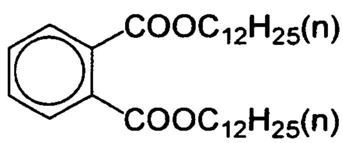 | 52.1 | 10.8 | - |
| S-18 | 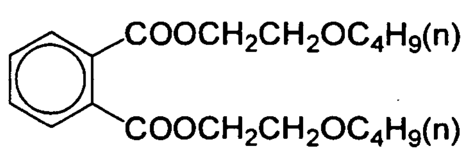 | 42 | 9.1 | 335 |
| S-19 | 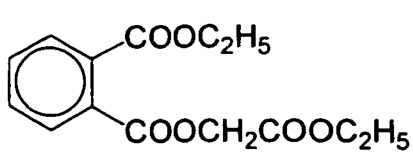 | 74 | 14.2 | 355 |

(continued)

| | | Viscosity (mPas) (25˚C) | Viscosity (mPas) (60˚C) | Boiling point(˚C) |
|---|---|---|---|---|
| S-20 | 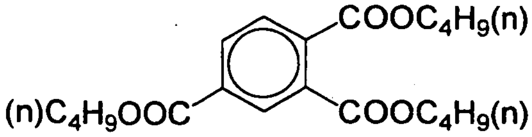 | 55.7 | 13.1 | 400 |

Compound represented by Formula [S-3]

| | | Viscosity (mPas) (25˚C) | Viscosity (mPas) (60˚C) | Boiling point(˚C) |
|---|---|---|---|---|
| S-21 | 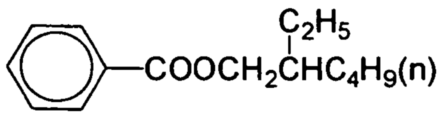 | 5.68 | 2.4 | 300 |
| S-22 | 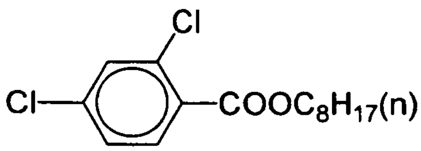 | 11.44 | 3.9 | 360 |
| S-23 | 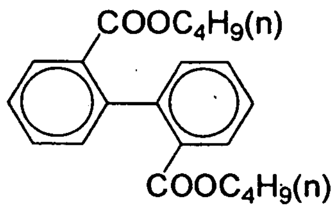 | 51.1 | 10.6 | - |

Compound represented by Formula [S-4]

| | | Viscosity (mPas) (25˚C) | Viscosity (mPas) (60˚C) | Boiling point (˚C) |
|---|---|---|---|---|
| S-24 | 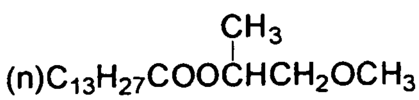 | 7.17 | 3.1 | 380 |
| S-25 | 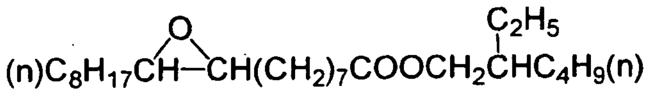 | 39.84 | 8.8 | - |
| S-26 | 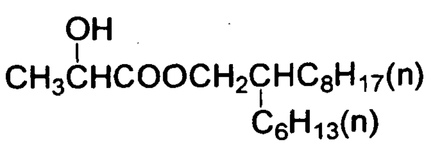 | 22.83 | 5.9 | - |
| S-27 | 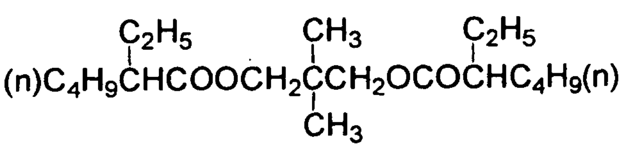 | 12 | 4.0 | - |

(continued)

| | | Viscosity (mPas) | | |
|---|---|---|---|---|
| | | (25°C) | (60°C) | Boiling point (°C) |
| S-28 | 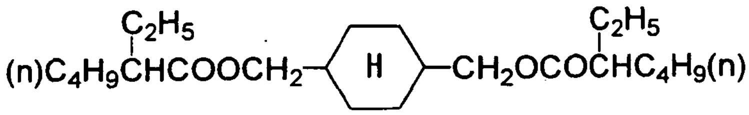 | 41.4 | 9.0 | 430 |
| S-29 | 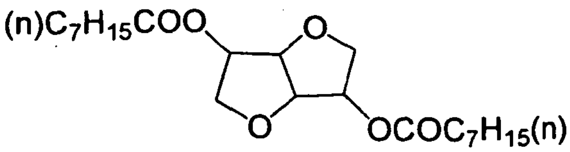 | 47.3 | 10.0 | 440 |

Compound represented by Formula [S-5]

| | | Viscosity (mPas) | | |
|---|---|---|---|---|
| | | (25°C) | (60°C) | Boiling point (°C) |
| S-30 | 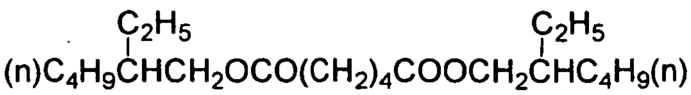 | 11.7 | 4.3 | 390 |
| S-31 | 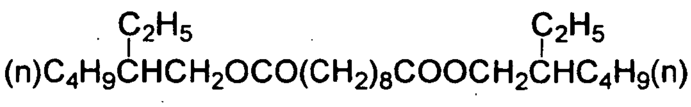 | 19.9 | 6.1 | 410 |
| S-32 | $(n)C_4H_9OCO(CH_2)_8COOC_4H_9(n)$ | 8.09 | 3.5 | 345 |
| S-33 | 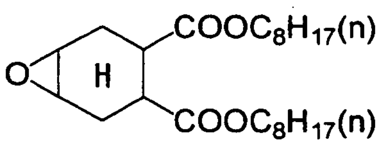 | 88.9 | 16.5 | - |
| S-34 | 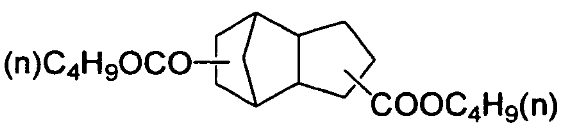 | 37.50 | 8.4 | 440 |
| S-35 | 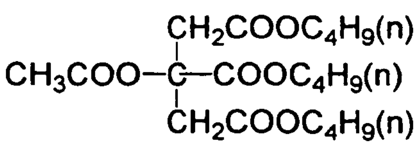 | 42.7 | 9.3 | 390 |

Compound represented by Formula [S-6]

| | | Viscosity (mPas) | | |
|---|---|---|---|---|
| | | (25°C) | (60°C) | Boiling point(°C) |
| S-36 | 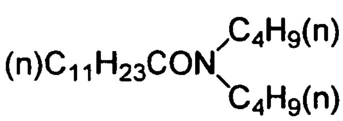 | 9.45 | 3.6 | 340 |

(continued)

| | | Viscosity (mPas) (25˚C) | (60˚C) | Boiling point(˚C) |
|---|---|---|---|---|
| S-37 | 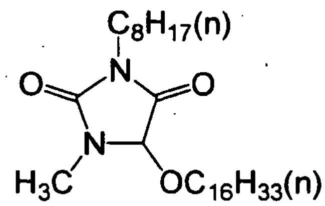 | 45.8 | 9.8 | - |
| S-38 | 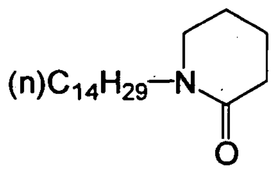 | 20.0 | 5.4 | 350 |
| S-39 | 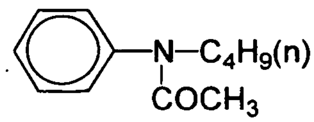 | 12.83 | 4.2 | 320 |
| S-40 | 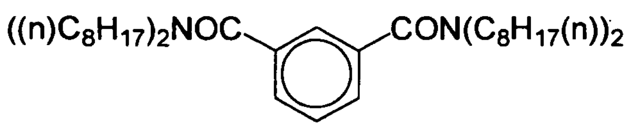 | 77.1 | 147 | |
| S-41 | $(C_2H_5)_2$-NCO-$(CH_2)_8$-CON$(C_2H_5)_2$ | 40.7 | 8.9 | 405<br>- |
| S-42 | 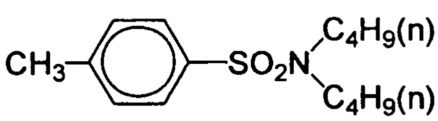 | 49.65 | 10.4 | - |

Compound represented by Formula [S-7]

| | | Viscosity (mPas) (25˚C) | (60˚C) | Boiling point(˚C) |
|---|---|---|---|---|
| S-43 | 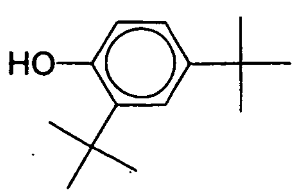 | 92 | 16.9 | - |

Compound represented by Formula [S-8]

| | | Viscosity (mPas) (25˚C) | (60˚C) | Boiling point(˚C) |
|---|---|---|---|---|
| S-44 | 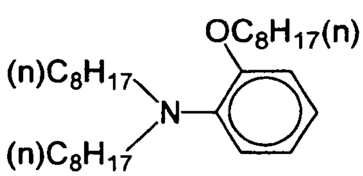 | 15.5 | 4.6 | - |

(continued)

| | | Viscosity (mPas) (25°C) | (60°C) | Boiling point(°C) |
|---|---|---|---|---|
| S-45 | 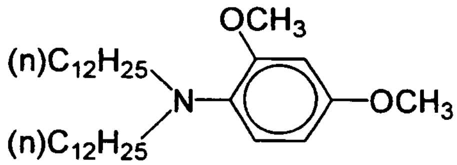 | 27.1 | 6.6 | - |
| S-46 | 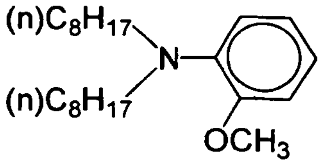 | 35.3 | 8.0 | - |
| S-47 | 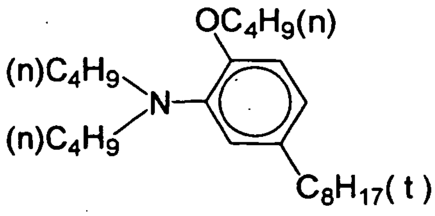 | 79.14 | 15.0 | - |

Compound represented by Formula [S-9]

| | | Viscosity (mPas) (25°C) | (60°C) | Boiling point(°C) |
|---|---|---|---|---|
| S-48 | 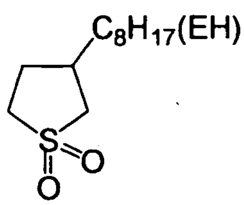 | 37.62 | 8.4 | - |
| S-49 | 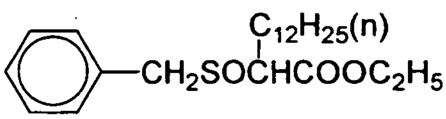 | 43.1 | 9.3 | - |

Other compounds

S-50 $C_nH_{2n+1}$ 2.47 0.4 260

(Normal paraffin, mixture of paraffins of n=14 and 15) (e.g., trade named: NP-SH, manufactured by Mitsui-Texaco Chemicals Co., Ltd.)

S-51 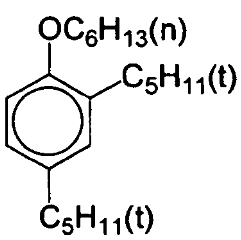 35.85 8.1 330

(continued)

| | | | | |
|---|---|---|---|---|
| S-52 | 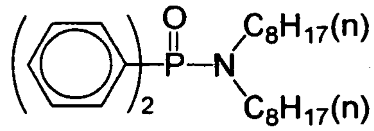 | 45. 9 | 9.8 | - |
| S-53 | 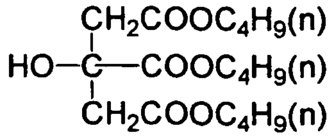 | 25.82 | 6.7 | - |

High boiling point organic solvents may be used alone, or in a mixture of two or more species [e.g., tricresylphosphate and dibutylphthalate, trioctylphosphate and di(2-ethylhexyl)sebacate, dibutylphthalate and poly(N-t-butylacrylamide)].

Examples of compounds of high boiling point organic solvents other than the above and/or methods of synthesizing these high boiling point organic solvents are described in, for example, U.S. Patent Nos. 2,322,027, 2,533,514, 2,772,163, 2,835,579, 3,594,171, 3,676,137, 3,689,271, 3,700,454, 3,748,141, 3,764,336, 3,765,897, 3,912,515, 3,936,303, 4,004,928, 4,080,209, 4,127,413, 4,193,802, 4,207, 393, 4,220,711, 4,239,851, 4,278,757, 4,353,979, 4,363,873, 4,430,421, 4,430,422, 4,464,464, 4,483,918, 4,540,657, 4,684,606, 4,728,599, 4,745,049, 4,935,321 and 5,013,639, European Patent Application Nos. 276,319A, 286,253A, 289,820A, 309,158A, 309,159A, 309,160A, 509,311A and 510,576A, East G. Nos. 147,009, 157,147, 159,573 and 225,240A, U.K. Patent No. 2,091,124A, JP-ANos. 48-47335, 50-26530, 51-25133, 51-26036, 51-27921, 51-27922, 51-149028, 52-46816, 53-1520, 53-1521, 53-15127, 53-146622, 54-91325, 54-106228, 54-118246, 55-59464, 56-64333, 56-81836, 59-204041, 61-84641, 62-118345, 62-247364, 63-167357, 63-214744, 63-301941, 64-9452, 64-9454, 64-68745, 1-101543, 1-102454, 2-792, 2-4239, 2-43541, 4-29237, 4-30165, 4-232946, 4-346338, etc.

In the invention, a high boiling point organic solvent of a boiling point of more than 100˚C is suitable, and a high boiling point organic solvent of a boiling point of more than 170˚C is preferable.

The amount of addition of a lipophilic solvent to an ink composition preferably ranges 50 mass % or more and 100 mass % or less, more preferably 70 mass % or more and 100 mass % or less, particularly preferably 90 mass % or more and100 mass % or less,based on the total mass of the solution.

(Other Components)

In addition to the above-described components, a known additive and the like may be used in combination depending on its purpose.

-Storage stabilizers-

To the first liquid A and second liquid B (preferably in the first liquid A) in the invention may be added a storage stabilizer for the purpose of suppression of unsuitable polymerization during storage. A storage stabilizer is preferably used in combination with a polymerizing or crosslinking material, and is preferably used that is soluble in a liquid droplet or liquid containing it or other components present.

The storage stabilizers include quaternary ammonium salts, hydroxyamines, cyclic amides, nitriles, substituted ureas, heterocyclic compounds, organic acids, hydroquinone, hydroquinone monoethers, organic phosphines, copper compounds, and the like. Specifically, examples include benzyltrimethylammonium chloride, diethylhydroxylamine, benzothiazole, 4-amino-2,2,6,6-tetramethylpyperidine, citric acid, hydroquinone monomethylether, hydroquinone monobutylether, copper naphthenate, and the like.

The amount of addition of a storage stabilizer is preferably adjusted as appropriate on the basis of the activity and polymerization of a polymerization initiator or polymerization of a crosslinking material, and the kind of a storage stabilizer. From the viewpoint of the balance of storage stability and curability, the amount of addition is, in terms of solids in solution, preferably from 0.005 to 1 mass %, more preferably from 0.01 to 0.5 mass %, still more preferably from 0.01 to 0.2 mass %.

-Conductive salts-

A conductive salt is a solid compound of enhancing conductivity. In the invention, since there is a large concern of precipitation during storage, preferably, a conductive salt is not used substantially. However, where the solubility of a conductive salt is improved, or use of a conductive salt highly soluble in liquid components or the like renders the solubility high, it may be used in an appropriate amount.

Examples of the above conductive salts include potassium thiocyanate, litium nitrate, ammonium thiocyanate, dimethylamine salts, and the like.

-Solvents-

In the invention, a solvent other than high boiling point solvents as already described may be used. The solvent may be used for the purpose of the improvement of the polarity and viscosity of a liquid (ink), surface tension, solubility and dispersibility of a color material, the adjustment of conductivity and printing performance, etc.

Additionally, because the solvent is preferred that is a non-water soluble liquid and does not contain a water-based solvent, from the viewpoints of quick-drying properties and recording of a high-quality image with homogeneous line widths, a composition using a high boiling point organic solvent as already described is desirable.

Although a low boiling point organic solvent of a boiling point of 100˚C or less may be taken into account, it has the concern of affecting curability. Additionally, a low boiling point organic solvent creates environmental pollution, and thus is not desirably used. Where a low boiling point organic solvent is used, a solvent with high safety should preferably be used. A solvent with high safety refers to a solvent with a high control concentration (index indicated by working environment evaluation criteria); the concentration is preferably 100 ppm or more, more preferably 200 ppm or more. Specific examples include alcohols, ketones, esters, ethers, hydrocarbons, and the like, more specifically methanol, 2-butanol, acetone, methyl ethyl ketone, ethyl acetate, tetrahydrofuran, and the like.

Solvents may be used alone or in combination with a plurality of solvents. When water and/or a low boiling point organic solvent is used, the amount of use of each of the both is preferably from 0 to 20 mass %, more preferably from 0 to 10 mass %, based on the amount of the solution; no substantial inclusion is preferred. Inclusion of water in the first liquid A and second liquid B in the invention is not preferred on account of time lapse stability such as occurrence of muddiness of the liquid attributable to time lapse inhomogeneity, dye precipitation, etc., and dryness when a recording medium of non-permeability to slow permeability is used. Additionally, "no substantial inclusion" means that the presence of inevitable impurities is allowed.

-Other additives-

Moreover, known additives such as a polymer, surface tension adjustor, ultraviolet absorber, antioxidant, anti-fading agent, pH adjustor, etc may be used in combination.

For a surface tension adjustor, ultraviolet absorber, antioxidant, anti-fading agent and pH adjustor, a known compound may be selected, as appropriate, for use, and specifically for example additives described in JP-ANo. 2001-181549, and the like may be used.

Furthermore, to an ink composition may be added a variety of macromolecular compounds may be added, for the adjustment of physical properties of a film. Macromolecular compounds that are capable of being used include acrylic polymers, polyvinylbutylal resins, polyurethane resins, polyamide resins, polyester resins, epoxy resins, phenolic resins, polycarbonate resins, polybutylal resins, polyvinyl formal resins, shellac, vinyl-based resins, acrylic resins, rubber-based resins, waxes, other natural resins, and the like. These may be used in combination with two or more species.

For the adjustment of liquid physical properties, a nonionic surfactant, cationic surfactant, organic fluorine compound, or the like may be added thereto. A fluorine-based surfactant such as Megafack F475 (manufactured by Dainippon Ink And Chemicals, Inc.) may also be added.

In addition to these, as required, for example, a leveling agent, mat agent, waxes for adjusting film physical properties, tackifier of not inhibiting polymerization, for improvement of adhesion of polyolefin, PET, and the like to a recorded medium, etc are capable of being made to be contained.

Other than the above, mixing that results in reaction may be conducted to form an aggregate, or a pair of compounds increasing viscosity may be separately contained in the first liquid A and second liquid B each. The above pair of compounds has the characteristics that cause an aggregate to be rapidly formed, or the viscosity of the liquid to be rapidly increased. This renders it possible to effectively restrain the unification of adjacent liquid droplets to each other.

Examples of the reaction of the above pair include acid/base reaction, hydrogen bonding reaction by means of compounds containing carboxylic acid and an amide group, crosslinking reaction as represented by boronic acid/diol, reaction by electrostatic interaction by means of cation/anion, and the like.

<Second liquid B>

In the invention, the second liquid B the composition of which is different from the composition of the first liquid droplet a1, liquid droplet a2,... (the first liquid A) is imparted to the same region as or wider than the region of the image jet formed by means of at least the first liquid droplet a1 and liquid droplet a2 on a recorded medium, in advance prior to drop jetting the first liquid droplet a1 as already mentioned above.

The second liquid B preferably contains a lipophilic solvent. Further, as required, the second liquid B may be composed of a polymerization initiator, co-sensitizer, and other components. These components are already described in detail.

The second liquid B is preferably prepared such that the sp value is 35 or less, and is non-water soluble, and adjusted so as to have lipophilic organic solvent-based properties. At least the first liquid droplet a1 as already described is capable of containing a polymerizing or crosslinking material and being prepared to be suitable to an organic solvent system. When the first liquid droplet a1 is prepared to be suitable to an organic solvent system, it is readily mixed with the second liquid B, thereby effectively avoiding the unification between the first liquid droplet a1 and liquid droplet a2 that are drop jetted so as to make contact with each other and overlap. This effectively prevents coalescence of line width variations such as blurring of an image and narrow lines in an image, as already described.

The adjustment of the sp value of the second liquid B may be suitably carried out through the use of a lipophilic solvent, or the like. As one preferred, adjusting aspect, a composition may be made such that a lipophilic solvent is contained in the second liquid B in the range of 50 mass % or more and 100 mass % or less, based on the total mass of the second liquid B. When the content of lipophilic solvent is within the above range, the sp value is capable of being reduced and adjusted to be 35 or less. The sp value is preferably 30 or less.

<<Ink-jet recording method>>

An ink-jet recording method of the invention has the characteristic of imparting in advance the above second liquid B to the same region as or wider than the region of the above image to be formed with the above first liquid A, by means of the above ink set for ink-jet recording. Here, an aspect is preferred that drop jets at least the first liquid droplet a1 and liquid droplet a2 of the above first liquid A, along with their overlap, to record a desired image.

The ink-jet recording method uses a non-permeable or slowly permeable recording medium as a recorded medium in some cases. When image recording is carried out on such a recorded medium of low liquid absorption, the contact of adjacent liquid droplets (first liquid droplet a1 and liquid droplet a2) imparted with a portion overlapped with each other remaining on the medium prior to drying, for the purpose of obtainment of a high image concentration, unifies the drops to each other to cause blurs of an image and render the line widths of narrow lines not to be uniform, thereby tending to lose sharp image formation properties. However, rendering a composition to be made such that the sp value of the second liquid is specific in advance prior to drop jetting of the first liquid droplet a1 and liquid droplet a2 suppresses the unification between the liquid droplet a1 and liquid droplet a2, and thus effectively prevents the occurrence of image blurs and line width variations of narrow lines in the image, etc, even though the liquid droplet a1 and liquid droplet a2 having a portion overlapped with each other. This enables the formation of sharp lines with a constant width while maintaining image resolution of a high image concentration, thus being capable of recording a high-quality image. Additionally, the composition has no stickiness and excellent in fretting resistance.

Herein, a recording medium of non-permeability substantially refers to a medium not permeated by a liquid droplet. The phrase "not to substantially permeate" means that the transmittance of a liquid droplet is 5% or less in 1 minute. The term "slowly permeable recording medium" refers to, when a liquid droplet of 10 pl (picoliter) is dropped on top of a recorded medium, the medium showing a time of 100 m sec or more until the total liquid is permeated. Specifically, the examples include art paper, and the like. A recording medium of non-permeability or slow permeability will be set forth in detail later.

A permeable recording medium refers to, when a liquid droplet of 10 pl is dropped on top of a recorded medium, the medium showing a time of 100 m sec or less until the total liquid is permeated. Specifically, the examples include plain paper, porous paper, and the like.

On the above recorded medium is drop jetted the first liquid droplet a1, and then the subsequent liquid droplet a2 is preferably drop jetted such that it has a portion overlapped with the above liquid droplet a1. Additionally, in advance prior to the impartment of the first liquid droplet a1 and liquid droplet a2, the second liquid B the composition of which is different from the composition of the first liquid A is imparted to the same region as or wider than the region of the image drop-jetting formed by means of the above liquid droplet a1 and above liquid droplet a2 on a recorded medium.

The invention uses the first liquid A containing therein the first liquid droplet a1 and liquid droplet a2, and the second liquid B the composition of which is different from the composition thereof, as image forming liquids. Herein, the first liquid droplet a1 and liquid droplet a2 mean liquid droplets in the liquid droplet a1, a2, a3,..., and ax drop jetted out of an ink jetting port with overlap by means of the first single liquid A. The drops may be liquid droplets drop jetted at

the same time, or prior and posterior liquid droplets having a relationship of the prior and posterior drop jetting, and are preferably the prior and posterior liquid droplets. The first liquid A and second liquid B are liquids different in composition.

In an ink-jet recording method of the invention, the first liquid droplet a1 and liquid droplet a2 is drop jetted by means of an inkjet nozzle or the like; the second liquid B is not always limited to the impartment by ejection by means of an inkjet nozzle, and may be imparted by another unit such as application or the like.

Next, an imparting unit will be set forth when the second liquid B is imparted on a recorded medium. For a drop jetting unit of drop jetting the first liquid droplet a1 and liquid droplet a2 (first liquid A), ejection using an inkjet nozzle as previously mentioned will be mainly described. Hereinafter, examples will be shown.

(i) Application using an applying apparatus

An aspect is suitable that involves applying the second liquid B onto a recorded medium by means of an applying apparatus, and then drop jetting the first liquid droplet a1 and liquid droplet a2 (first liquid A) by an inkjet nozzle to carry out image recording.

An applying apparatus is not particularly limited; of known applying apparatuses, an applying apparatus may be selected, as appropriate, depending on the purpose or the like. The examples include an air doctor coater, blade coater, lot coater, knife coater, squeeze coater, dip coater, reverse roll coater, transfer roll coater, gravure coater, kiss-roll coater, cast coater, spray coater, curtain coater, excluding coater, and the like. For details, Yuji Harasaki, "Coating Engineering" may be referred.

An inkjet nozzle is not particularly limited, and may be selected, as appropriate, from known nozzles, depending on the purpose or the like. Besides, an ink-jet recording system will be described below.

Other liquids may be employed other than the first liquid droplet a1 and liquid droplet a2 (first liquid A) and the second liquid B; the other liquid may be imparted on an recording medium by means of any method such as application by the above applying apparatus, or ejection by means of an inkjet nozzle; the timing of impartment is not particularly limited. Where a colorant is contained in a liquid, ejection by means of an inkjet nozzle is preferred, and the liquid is preferably imparted after the second liquid B is applied.

(ii) Ejection by means of an inkjet nozzle

An aspect is suitable that involves ejecting the second liquid B in the form of a liquid droplet b1, liquid droplet b2, liquid droplet b3,..., liquid droplet bx by means of an inkjet nozzle, and then drop jetting the first liquid droplet a1 and liquid droplet a2, liquid droplet a3, ..., liquid droplet ax (first liquid A) by an inkjet nozzle to carry out image recording. An inkjet nozzle is the same as the above.

In this case also, other liquids other than the first liquid droplet a1 and liquid droplet a2 (first liquid A) and the second liquid B; the other liquid may be imparted on an recorded medium by means of any method such as application by an applying apparatus, or ejection by means of an inkjet nozzle; the timing of impartment is not particularly limited. Where a colorant is contained in a liquid, ejection by means of an inkjet nozzle is preferred, and the liquid is preferably further imparted after the second liquid B is applied.

Next, a system of ejection by means of an inkjet nozzle (ink-jet recording system) will be set forth.

In the invention, known systems that are suitable include, for example, the charge control system of ejecting ink making use of electrostatic attraction force, drop-on-demand systems (pressure pulse systems) of utilizing the vibration pressure of a piezo element, the acoustic inkjet system of changing an electric signal into acoustic beams to expose ink to the beams and ejecting the ink by utilizing radiation pressure, the thermal inkjet (Bubble Jet (registered mark)) system of heating ink to form bubbles and utilizing the resulting pressure, and the like.

Additionally, the ink-jet recording systems include a system of ejecting ink of a low concentration called photo-ink in a large number of volumes, a system of using a plurality of inks substantially having the same color and different concentrations for the improvement of image quality, and a system of using a transparent colorless ink.

The imparting unit of (i) above involves drop jetting at least the first liquid droplet a1 and first liquid droplet a2 onto the second liquid B applied in advance on a recorded medium by means of the ink-jet recording system to form an image. The imparting unit of (ii) above involves further drop jetting at least the first liquid droplet a1 and first liquid droplet a2 onto the second liquid B imparted in advance on a recorded medium by means of the ink-jet recording system to form an image by means of the ink-jet recording system.

In the invention, having an overlap by the liquid droplet a1 and liquid droplet a2 increases the number of jetting droplets per length, thereby enabling image recording of higher resolution. At this time, preferably, the second liquid B is imparted on a recorded medium, and then the liquid droplet a1 and liquid droplet a2 is drop jetted 1 second or less.

An overlap ratio when liquid droplets having an overlap are drop jetted refers to an overlap ratio one second after at least the liquid droplet a1 and liquid droplet a2 are drop jetted along with an overlap; particularly, the liquid droplet a1 and liquid droplet a2 are preferably drop jetted such that the overlap ratio in an overlap one second after drop jetting

of the first liquid droplet a2 subsequent to drop jetting of the first liquid droplet a1 is 10% or more and 90% or less. This is effective for image recording of higher resolution.

Of these, the overlap ratio is preferably 20% or more and 80% or less, and more preferably 30% or more and 70% or less.

The above overlap ratio is an index indicating the extent of the overlap of adjacent liquid droplets (liquid droplet a1, liquid droplet a2, ...). Where the diameter of a liquid droplet after impact on a recording medium is taken as a, when 1/2a is overlapped, the overlap ratio is 50%. For the invention, liquid droplets adjacently drop jetted may possibly not be unified to each other and be maintained in a drop jetting form; the overlap ratio is represented by $100 \times (2b - c)/2b$ [%], wherein b denotes a liquid droplet radius one second after drop jetting of one droplet, and c is an interval between adjacent jetted droplets.

The amounts of drop jetting of the first liquid droplet a1 and first liquid droplet a2 are not particularly limited, and are selected depending on the degree of sharpness of a recording image. In general, the amount per droplet is preferably from about 0.5 pl to 100 pl. For the impartment of the second liquid B, so long as the liquid B may be imparted to the same region as or wider than the region of the image drop-jetting formed by means of the above liquid droplet a1 and above liquid droplet a2, nothing is particularly limited.

At the time of image recording, for the balance of the amount of impartment of the second liquid B per jetting drop of the first liquid droplet a1 and first liquid droplet a2, the amount of impartment of the second liquid B (mass ratio), when the liquid droplet a1 or liquid droplet a2 is taken as 1, preferably ranges from 0.05 to 5, more preferably ranges from 0.07 to 1, particularly preferably ranges from 0.1 to 1.

The above liquid A drop jetted (including the first liquid droplet a1 and first liquid droplet a2) is preferably drop jetted (preferably, by means of an inkjet nozzle) in a liquid droplet size of 0.1 pL or more (picoliter; hereinafter the same) and 100 pL or less. When the liquid droplet size is within the above range, it is effective in that an image of high sharpness is drawn in a concentration. The size is more preferably 0.5 pL or more and 50 pL or less.

The interval of drop jetting until the above liquid A (at least the above first liquid droplet a1) is drop jetted preferably ranges 5 μsec or more and 400 msec or less. When the drop jetting interval is within the above range, the effect of the invention is remarkably effectively obtained. The liquid droplet interval is more preferably 10 μsecor more and400 msec or less, and particularly preferably 20 μsec or more and 200 msec or less.

The physical properties of the first liquid A (liquid droplets) and second liquid B (liquid droplets) that are ejected on a recorded medium by means of the ink-jet recording system vary depending on apparatuses. In general, the viscosities at 25˚C are each preferably in the range of from 5 to 100 mPa·s, more preferably in the range of from 10 to 80 mPa·s. In the relationship between the first liquid A and second liquid B, the viscosity difference (25˚C) is preferably within 25 mPa·s, inclusive.

In the invention, where the second liquid B is imparted in advance as described above, and then the above liquid A (at least the above first liquid droplet a1) is drop jetted, the subsequent energy impartment makes it possible to provide a step of solidifying the recoded image, from the viewpoint of obtainment of excellent fixing properties. Energy impartment is capable of enhancing the polymerization of a polymerizing or crosslinking material contained or the curing reaction by crosslinking to more efficiently form a firmer image. For example, in a system containing a polymerization initiator, impartment of active energy such as active light or heating promotes the occurrence of an active species due to the decomposition of the polymerization initiator, and also an increase in active species or temperature promotes polymerization of polymerizing or crosslinking material or curing reaction by crosslinking, attributable to the active species.

Energy impartment may be suitably carried out by irradiation of active light or heating.

As the above active light, examples that may be used include ultraviolet rays, visible beams, and the like, and (α rays, γ rays, X rays, electronic beams, and the like. Of these, use of ultraviolet rays or visible beams is preferable in terms of cost and safety, and the use of ultraviolet rays is particularly preferable.

The amount of energy necessary for curing reaction varies depending on the kind or content of polymerization initiator, and generally from about 1 to about 500 mJ/$cm^2$.

Where energy is imparted by heating, heating is preferably carried out for 0.1 to 1 second at the surface temperature of a recorded medium of from 40 to 80˚C.

Heating may be carried out by use of a heating unit of a non-contact type; the heating units that are suitable include a heating unit of passing a material through the inside of a heating furnace such as an oven, a heating unit of exposing the entire surface to light such as ultraviolet light, visible light, infrared light, or the like. Light sources suitable to light exposure as a heating unit include a metal halide lamp, xenon lamp, tungsten lamp, carbon arc lamp, mercury lamp, and the like.

The invention is capable of including a process of curing by the above active light beams in between the second liquid B and first liquid A; however, the second liquid B imparted in advance to a recorded medium is desirably kept in liquid form until the drop jetting of the first liquid A is initiated, so rendering no curing at all or semi-curing is a preferable aspect.

<Recorded medium>

As a recorded medium, a recording medium of non-permeability or slow permeability is employed.

Recording media of non-permeability include, for example, synthetic resins, rubber, resin coated paper, glass, metals, potteries, wood, and the like. Additionally, for the purpose of function addition, a composite substrate produced in combination of plurality of these materials may be used as well.

As the above synthetic resin, any synthetic resins are capable of being used; the examples include polyesters such as polyethylene terephthalate and polybutadiene terephthalate, polyolefins such as polyvinyl chloride, polystyrene, polyethylene, polyurethane and polypropylene, acrylic resins, polycarbonate, acrylnitrile-butadiene-styrene coplymers, and the like, diacetate, triacetate, polyimide, cellophane, celluloid, and the like. The thickness and shape where a synthetic resin is used may be any film shape or card shape or block shape, and are not particularly limited; any transparent or opaque material may be allowed.

The form of use of the above synthetic resin is also preferably a film shape used in the so-called flexible packaging; a variety of plastics or films of non-absorption may be used. Plastic films include, for example, a PET film, OPS film, OPP film, PNy film, PVC film, PE film, TAC film, and the like. Other plastics that may be employed include polycarbonate, acrylic resin, ABS, polyacetal, PVA, rubbers, and the like.

The above resin coated paper includes, for example, transparent polyester film, opaque polyester film, opaque polyolefin resin film, a supporter of paper having the polyolefin resin laminated on both faces thereof, and the like. Particularly preferred one is a supporter of paper having the polyolefin resin laminated on both faces thereof.

The above metal is not particularly limited; the examples that are suitable include aluminum, iron, gold, silver, copper, nickel, titanium, chromium, molybdenum, silicon, lead, zinc, and the like, or stainless steel, and the like, and composite materials thereof.

Furthermore, the media that are also usable include read-only optical disks such as CD-ROM and DVD-ROM, write-once optical disks such as CD-R and DVD-R, further rewritable optical disks and the like; on both sides of a label may also be imparted an ink receptor layer and gloss-imparting layer.

EXAMPLES

The present invention will be set forth in still more detail by means of examples hereinafter; however, the invention is by no means limited to the examples below so long as the invention does not depart from its scope.

[Examples 1 to 7 and Comparative Examples 1 and 2]

<Preparation of cyan pigment dispersions>

16 Grams of PB 15:3 (trade name: IRGALITE BLUE GLO; manufactured by Ciba Specialty Chemicals Co., Ltd.), 48 g ofbis{[1-ethyl(3-oxetanyl)]methyl} ether (trade name: OXT-221; manufactured by TOAGOSEI Co., Ltd.) and 16 g of BYK-168 (manufactured by Big Chemie Corp.) were mixed, and then stirred for one hour with a stirrer. The mixture after agitation was dispersed by an Eiger mill to obtain Pigment Dispersion P-1.

Here, the dispersion was conducted under conditions of zirconia beads having a diameter of 0.65 mm being loaded at a loading factor of 70%, and the peripheral speed and dispersion time being 9 m/s and one hour, respectively.

<Preparation of Ink-j et recording Liquid I-1 containing a cyan pigment (first liquid A)>

The components of the composition below were stirred, mixed and dissolved to prepare Ink-jet recording Liquid I-1 as the first liquid A. The sp value and surface tension of Ink jet recording Liquid I-1 were 18 and 32 N/m, respectively.

| | |
|---|---|
| Pigment Dispersion P-1 above | 3.75 g |
| Bis{[1-ethyl(3-oxetanyl)]methyl}ether | 0.825 g |
| 1-Methyl-4-(2-methyloxyranyl)-7-oxabicyclo[4.1.0]heptane (trade name: Cel 3000, manufactured by Daicel-Cytec Co., Ltd.) | 8.925 g |
| Polymerization initiator-2 below (trade name: Irg 250, manufactured by Ciba Specialty Chemicals Co., Ltd.) | 1.5 g |

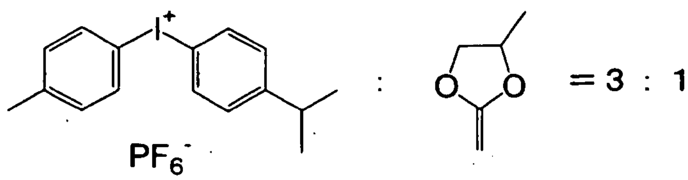

Polymerization initiator-2

The sp value was calculated by the sp value calculation program of R. L. Smith (Tohoku University), as already described (25˚C). The other things were conducted in the same manners, except that a compound not carrying a carbon atom was excluded from the calculation, constitutional units of a polymer, polyethylene unit, and the like, were taken as saturated repeating units having a bonding valence, and the sp value of water was taken as 47.8.

<Preparation of Ink-jet recording Liquids I-2 to I-8 containing a cyan pigment (first liquid A)>

Ink-jet recording Liquids I-2 to I-8 containing a cyan pigment were prepared as the Liquids A in the same manner as in Liquid I-1 except that the above polymerization initiator-2 (Irg 250) was replaced, in the same amount by mass, by a polymerization initiator as indicated in Table 1 below. Table 1 further showed the sp value and surface tension of each liquid.

[Table 1]

| First liquid A (cyan) | Polymerization initiator*1 | Sp value | Surface tension (mN/m) |
|---|---|---|---|
| I-2 | A-4 | 18 | 32 |
| I-3 | B-4 | 18 | 32 |
| I-4 | B-31 | 18 | 32 |
| I-5 | B-32 | 18 | 32 |
| I-6 | B-17 | 18 | 32 |
| I-7 | C-2 | 18 | 32 |
| I-8 | C-4 | 18 | 32 |
| *1 in the column of polymerization initiators, a symbol such as "A-4" denotes the number of a specific polymerization initiator used in the invention. | | | |

<Preparation of Ink-jet recording Liquids II-1 to II-8 containing a magenta pigment (first liquid A)>

Ink jet recording Liquids II-1 to II-8 containing a magenta pigment were prepared in the same manner as in I-1 to 1-8 except that PB15:3 (trade name: IRGALITE BLUE GLO; manufactured by Ciba Specialty Chemicals Co., Ltd.) was replaced, in the same amount by mass, by PV 19 (trade name: Hostaparm RED E5B02, manufactured by Clariant Corporation) at the time of the dispersion of a pigment dispersion. Table 2 showed the sp value and surface tension of each liquid.

[Table 2]

| First liquid A (magenta) | Polymerization initiator*1 | Sp value | Surface tension (mN/m) |
|---|---|---|---|
| II-1 | Irg250 | 18 | 32 |
| II-2 | A-4 | 18 | 32 |
| II-3 | B-4 | 18 | 32 |
| II-4 | B-31 | 18 | 32 |
| II-5 | B-32 | 18 | 32 |
| II-6 | B-17 | 18 | 32 |

(continued)

| First liquid A (magenta) | Polymerization initiator*1 | Sp value | Surface tension (mN/m) |
|---|---|---|---|
| II-7 | C-2 | 18 | 32 |
| II-8 | C-4 | 18 | 32 |
| *1 in the column of polymerization initiators, a symbol such as "A-4" denotes the number of a specific polymerization initiator used in the invention. | | | |

<Preparation of Ink-jet recording Liquid III-1 not containing a pigment (second liquid B)>

The components of the composition below were stirred, mixed and dissolved to prepare Ink-jet recording Liquid III-1 as the second liquid B. The sp value and surface tension of Ink-jet recording Liquid III-1 were 19 and 23 N/m, respectively.

| | |
|---|---|
| Bis {[1-ethyl(3-oxetanyl)]methyl} ether | 4.18 g |
| 1-Methyl-4-(2-methyloxyranyl)-7-oxabicyclo[4.1.0]heptane (trade name: Cel 3000, manufactured by Daicel-Cytec Co., Ltd.) | 9.77 g |
| 9,10-Dibutoxyanthracene | 0.75 g |
| Megafack F475 (manufactured by Dainippon Ink And Chemicals, Inc.) | 0.3 g |

<Preparation of Ink-jet recording Ink I-0 containing a one-part cyan pigment, and Ink=jet recording Ink II-0 containing a one-part magenta pigment>

In the composition below, Ink-jet recording Ink I-0 containing a one-part cyan pigment, and Ink-jet recording Ink II-0 containing a one-part magenta pigment were prepared.

The composition of liquid I-0 is shown below. The sp value and surface tension of Liquid I-1 were 19 and 32 N/m, respectively.

Liquid II-0 was prepared in the same manner as in Liquid I-0 except that the pigment of PB 15:3 (trade name: IRGALITE BLUE GLO; manufactured by Ciba Specialty Chemicals Co., Ltd.) was replaced, in the same amount by mass, by PV 19 (trade name: Hostaparm RED E5B02, manufactured by Clariant Corporation) at the time of the dispersion of a pigment dispersion. The sp value and surface tension of Liquid II-0 were 19 and 32 N/m, respectively.

| | |
|---|---|
| Pigment Dispersion P-1 | 3.75 g |
| Bis{[1-ethyl(3-oxetanyl)]methyl} ether | 0.6 g |
| 1-Methyl-4-(2-methyloxyranyl)-7-oxabicyclo[4.1.0]heptane (trade name: Cel 3000, manufactured by Daicel-Cytec Co., Ltd.) | 8.4 g |
| Polymerization initiator-2 above | 1.5 g |
| 9,10-Dibutoxyanthracene | 0.75 g |

<Image recording and evalua××tion>

Ink-jet recording Liquid I-1 (liquid A) prepared, Liquid II-1 (liquid A) and liquid III-1 (liquid B) were loaded into an inkjet printer (Toshiba Tech head (CA3) equipped jig: two heads of drop jetting frequency: 4.8 KHz, nozzle number: 318, nozzle density 150 npi (nozzles per inch) droplet size 6 pl to 42 pl: 7-stage variable, are arranged to be set at 300 npi for one head set; 4 sets of the head set are equipped). Each ink was ejected (42 pl) by means of three head sets and homogeneously painted on the entire recorded medium. At this time, as a recorded medium, a polyethylene terephthalate (PET) sheet of 60 μm thick trade name: Xerox film for a PPL/laser printer OHP FILM, manufactured by Fuji Xerox Co., Ltd.; hereinafter, called a PET sheet) was used.

Hereinafter, a combination comprised of Liquid I-1 (liquid A), Liquid II-1 (liquid A) and Liquid III-1 (liquid B) is called Ink Set I-1/II-1/III-1 in some cases.

The order of ejection was set to Liquid III-1 to Liquid I to Liquid II-1, the drop jetting interval during drop jetting was set to 400 msec, and the interval of drop jetting Liquid I-1 and Liquid II-1 was set to 400 msec. At this time, the delivering speed was adjusted in such a way that the overlap ratio of adjacent liquid droplets for Liquid III-1 was set to be 5%, and that the overlap ratio between adjacent liquid droplets (the first liquid droplet a1 and first liquid droplet a2) for Ink-jet recording Liquids I-1 and II-1 was set to be 50%.

Additionally, the overlap ratio was calculated by 100 × (2b - c)/2b [%], wherein b denotes a liquid droplet radius one second after drop jetting of one droplet, and c is an interval between adjacent jetted droplets.

After ejection, the image was irradiated with an ultraviolet ray at a wavelength of 365 nm at an ultraviolet radiation dose of 40,500 $mJ/cm^2$ by means of a metal halide lamp for fixation. Radiation was conducted 1 sec and 10 sec after II-1 drop jetting.

The ink set of I-1/II-1/III-1 used above was changed to the combinations of I-2/II-2/III-1, I-3/II-3/III-1, I-4/II-4/III-1, I-5/II-5/III-1, I-6/II-6/III-1, I-7/II-7/III-1, and I-8/II-8/III-1, and images were formed in the same manner as described above.

The evaluations were carried out below and the results were indicated in Table 3.

-1. Evaluations of color mixing of cyan and magenta-

When each sample of ink droplets of cyan and magenta was blended, the case was named B, and when the ink droplets of cyan and magenta were independently present, the case was named A.

-2. Evaluations of adhesion of inks-

A cut was made in an image formed face that had been produced by drop jetting and subsequent curing, and cellophane tape was stuck thereon, and then the cellophane tape was peeled off. At this time, evaluations were conducted whether or not the cured ink remained on a medium.

<Evaluation criteria>

A: All the ink remains.
B. Ink of a peripheral of a cut portion is transferred to tape.
C: Substantially all of the ink adhered to tape is transferred to tape.

-3. Evaluations of stickiness-

Just after ultraviolet radiation, the face of an image (recorded face) was touched with a finger, and evaluations were carried out according the evaluation criteria below.

<Evaluation criteria>

A: No stickiness remains.
B: Slight stickiness is recognized.
C: Extreme stickiness is recognized.

-4. Evaluations of fretting resistance-

For a PET sheet and art paper having recorded thereon an image, the image 30 minutes after ultraviolet radiation was rubbed back and forth 10 times with an eraser, and then the changes were observed and evaluated according to the following evaluation criteria.

<Evaluation criteria>

A: No concentration decrease is caused by fretting.
B: A slight concentration decrease is caused by fretting.
C: Extreme concentration decrease is caused by fretting.

-5. Evaluations of light resistance-

A PET sheet and art paper having images thereon were irradiated with xenon light (85,000 Lux) for one week by means of a weather meter (Atlas C. I65), and the concentration before and after irradiation was measured by a microdensitometer (trade name: MICRO-PHOTOMETER MPM-No. 172, manufactured by Union Optical Co., Ltd.) to obtain a dyestuff residual ratio [%], and then the images were 5-level evaluated according to the evaluation criteria below.

<Evaluation criteria>

A: The dyestuff residual ratio is 90% or more.
B: The dyestuff residual ratio is from 89 to 80%.
C: The dyestuff residual ratio is from 79 to 70%.
D: The dyestuff residual ratio is from 69 to 50%.
E: The dyestuff residual ratio is less than 49%.

-6. Evaluations of ozone resistance-

A PET sheet having recorded thereon an image was stored for one week in the presence of ozone of a concentration of 5.0 ppm, the concentration before and after irradiation was measured by a microdensitometer (trade name: MICRO-PHOTOMETER MPM-No. 172, manufactured by Union Optical Co., Ltd.) to obtain a dyestuff residual ratio [%], and then the image was 5-level evaluated according to the evaluation criteria below. Additionally, the evaluations of ozone resistance were conducted only on an image on a PET sheet.

<Evaluation criteria>

A: The dyestuff residual ratio is 90% or more.
B: The dyestuff residual ratio is from 89 to 80%.
C: The dyestuff residual ratio is from 79 to 70%.
D: The dyestuff residual ratio is from 69 to 50%.
E: The dyestuff residual ratio is less than 49%.

[Table 3]

| Ink set | Ultraviolet dose ($J/m^2$) | Time until ultraviolet radiation (sec) | Color mixing | Adhesion | Stickiness | Fretting resistance | Light resistance | Ozone resistance | Notes |
|---|---|---|---|---|---|---|---|---|---|
| I-1/ II-1/ III-1 | 40 | 1 | A | C | C | C | A | A | Comparative example 1 |
| | 40 | 10 | A | C | C | C | A | A | |
| | 500 | 1 | A | B | A | A | A | A | |
| | 500 | 10 | A | A | A | A | A | A | |
| I-2/ II-2/ III-1 | 40 | 1 | A | A | A | A | A | A | Example 1 |
| | 40 | 10 | A | A | A | A | A | A | |
| | 500 | 1 | A | A | A | A | A | A | |
| | 500 | 10 | A | A | A | A | A | A | |
| I-3/ II-3/ III-1 | 40 | 1 | A | A | A | A | A | A | Example 2 |
| | 40 | 10 | A | A | A | A | A | A | |
| | 500 | 1 | A | A | A | A | A | A | |
| | 500 | 10 | A | A | A | A | A | A | |
| I-4/ II-4/ III-1 | 40 | 1 | A | A | A | A | A | A | Example 3 |
| | 40 | 10 | A | A | A | A | A | A | |
| | 500 | 1 | A | A | A | A | A | A | |
| | 500 | 10 | A | A | A | A | A | A | |
| I-5/ II-5/ III-1 | 40 | 1 | A | A | A | A | A | A | Example 4 |
| | 40 | 10 | A | A | A | A | A | A | |
| | 500 | 1 | A | A | A | A | A | A | |
| | 500 | 10 | A | A | A | A | A | A | |

(continued)

| Ink set | Ultraviolet dose ($J/m^2$) | Time until ultraviolet radiation (sec) | Color mixing | Adhesion | Stickiness | Fretting resistance | Light resistance | Ozone resistance | Notes |
|---|---|---|---|---|---|---|---|---|---|
| I-6/ | 40 | 1 | A | A | A | A | A | A | Example 5 |
| II-6/ | 40 | 10 | A | A | A | A | A | A | |
| III-1 | 500 | 1 | A | A | A | A | A | A | |
| | 500 | 10 | A | A | A | A | A | A | |
| I-7/ | 40 | 1 | A | A | A | A | A | A | Example 6 |
| II-7/ | 40 | 10 | A | A | A | A | A | A | |
| III-1 | 500 | 1 | A | A | A | A | A | A | |
| | 500 | 10 | A | A | A | A | A | A | |
| I-8/ | 40 | 1 | A | A | A | A | A | A | Example 7 |
| II-8/ | 40 | 10 | A | A | A | A | A | A | |
| III-1 | 500 | 1 | A | A | A | A | A | A | |
| | 500 | 10 | A | A | A | A | A | A | |
| I-0/ | 40 | 1 | B | A | A | A | A | A | Comparative example 2 |
| II-0 | 40 | 10 | B | A | A | A | A | A | |
| | 500 | 1 | B | A | A | A | A | A | |
| | 500 | 10 | B | A | A | A | A | A | |

In Table 3, the use of ink sets (Examples 1 to 7 and Comparative Example 1) containing therein the liquid (III-1) capable of being represented by the liquid B rendered it possible to well suppress color mixing between two colors.

However, in an ink set (I-1/II-1/III-1) of Comparative Example 1 using a commercially available initiator, implementation of ultraviolet radiation particularly at a low illumination at a short time after drop jetting caused worsening of adhesion with a medium, stickiness and worsening of fretting resistance.

On the other hand, ink sets (Examples 1 to 7) of the invention using a specific polymerization initiator did not cause such worsening of adhesion with a medium, stickiness, or worsening of fretting resistance.

Additionally, it was shown that when one-part inks of I-0 and II-0 were left to remain in a nozzle, the solidification in the nozzle occurred. In contrast to this, it has been shown that two-part inks of I-1, I-2, I-3, I-4, I-5, I-6, I-7, I-8, II-1, II-2, II-3, II-4, II-5, II-6, II-7, II-8 and III-1 did not cause the solidification in nozzle and the invention is effective in ejection stability.

(Examples 8 to 14)

Liquid III-2 was prepared in the same manner as in III-1 except that in the preparation of III-1 of Examples 1 to 7, 60 mass % of the total mass of bis{[1-ethyl(3-oxetanyl)]methyl} ether and 1-methyl-4-(2-methyloxyranyl)-7-oxabicyclo[4.1.0]heptane (trade name: Cel 3000, manufactured by Daicel-Cytec Co., Ltd.) was replaced by the amount of Illustrative Compound S-9 of a high boiling point organic solvent. In addition, the ink sets of Examples 8 to 14 were made by replacement of Liquid III-1 used in the ink sets of Examples 1 to 7 by Liquid III-2.

Color mixing, adhesion and stickiness were evaluated for the ink sets of Examples 8 to 14, as in Examples 1 to 7, to be capable of confirming the effect of the invention as in Examples 1 to 7.

(Examples 15 to 21)

Liquid III-3 was prepared in the same manner as in III-1 except that in the preparation of III-1 of Examples 1 to 7, 60 mass % of the total mass of bis{[1-ethyl(3-oxetanyl)]methyl} ether and 1-methyl-4-(2-methyloxyranyl)-7-oxabicyclo[4.1.0]heptane (trade name: Cel 3000, manufactured by Daicel-Cytec Co., Ltd.) was replaced by the amount of Illustrative Compound S-15 of a high boiling point organic solvent. In addition, the ink sets of Examples 15 to 21 were made by replacement of Liquid III-1 used in the ink sets of Examples 1 to 7 by Liquid III-3.

Color mixing, adhesion and stickiness were evaluated for the ink sets of Examples 15 to 21, as in Examples 1 to 7, to be capable of confirming the effect of the invention as in Examples 1 to 7.

(Examples 22 to 28)

Liquid III-4 was prepared in the same manner as in III-1 except that in the preparation of III-1 of Examples 1 to 7, 60 mass % of the total mass of bis{[1-ethyl(3-oxetanyl)]methyl} ether and 1-methyl-4-(2-methyloxyranyl)-7-oxabicyclo[4.1.0]heptane (trade name: Cel 3000, manufactured by Daicel-Cytec Co., Ltd.) was replaced by the amount of Illustrative Compound S-21 of a high boiling point organic solvent. In addition, the ink sets of Examples 22 to 28 were made by replacement of Liquid III-1 used in the ink sets of Examples 1 to 7 by Liquid III-4.

Color mixing, adhesion and stickiness were evaluated for the ink sets of Examples 22 to 28, as in Examples 1 to 7, to be capable of confirming the effect of the invention as in Examples 1 to 7.

(Examples 29 to 35)

Liquid III-5 was prepared in the same manner as in III-1 except that in the preparation of III-1 of Examples 1 to 7, 60 mass % of the total mass of bis{[1-ethyl(3-oxetanyl)]methyl} ether and 1-methyl-4-(2-methyloxyranyl)-7-oxabicyclo[4.1.0]heptane (trade name: Cel 3000, manufactured by Daicel-Cytec Co., Ltd.) was replaced by the amount of Illustrative Compound S-32 of a high boiling point organic solvent. In addition, the ink sets of Examples 29 to 35 were made by replacement of Liquid III-1 used in the ink sets of Examples 1 to 7 by Liquid III-5.

Color mixing, adhesion and stickiness were evaluated for the ink sets of Examples 29 to 35, as in Examples 1 to 7, to be capable of confirming the effect of the invention as in Examples 1 to 7.

## Claims

1. An ink set for ink-jet recording comprising at least one first liquid A for forming an image and at least one second liquid B whose composition differs from that of the first liquid A, wherein:

at least the first liquid A contains a polymerizing or crosslinking material, "
at least one of the first liquid liquid A and the second liquid B contains a triarylsulfonium salt polymerization initiator having one or more aryl backbones substituted by an electron-accepting group,
the first liquid A contains a colourant, and
the second liquid B does not contain a colourant.

**2.** An ink set according to Claim 1, wherein the sum total of the Hammett constants of the substituents bonded to the aryl backbone of the triarylsulfonium salt polymerization initiator is greater than 0.46.

**3.** An ink set according to Claim 1, wherein the second liquid B contains a surfactant.

**4.** An ink set according to Claim 1, wherein the second liquid B contains at least 50 mass% of a lipophilic solvent based on the total mass of the second liquid B.

**5.** An ink set according to Claim 4, wherein the lipophilic solvent is an organic solvent having a boiling point of more than 100˚C.

**6.** An ink set according to Claim 1, wherein the triarylsulfonium salt polymerization initiator is contained in at least one of the first liquid A and the second liquid B in an amount of 0.5 - 30 mass% based on the total solid content of the liquid.

**7.** An ink set according to Claim 1, wherein the sp value of the second liquid B is 35 or less, and the difference between the sp value of the first liquid A and that of the second liquid B is 10 or less.

**8.** An ink-jet recording method comprising applying the second liquid B of an ink set as defined in Claim 1 onto a region identical to, or wider than, a region of an image to be formed using the first liquid A, and then drop-jetting the first liquid A onto the second liquid B to form the image.

**9.** An ink-jet recording-method according to Claim 8, comprising drop-jetting a first liquid droplet a1 and a subsequent liquid droplet a2 of the first liquid A such that the droplets a1 and a2 have an overlapping portion.

**10.** An ink-jet recording method according to Claim 9, wherein the overlap ratio of the overlapping portion is 10% - 90%.

**11.** An ink-jet recording method according to Claim 8, wherein the first liquid A is drop-jetted 5 μs - 400 ms after applying the second liquid B.

**12.** An ink-jet recording method according to Claim 8, wherein the size of the drop-jetted liquid A droplets is 0.1 - 100 p1.

**13.** An ink-jet recording method according to Claim 8, wherein the second liquid B is kept in liquid form until the first liquid A is drop-jetted.

**14.** An ink-jet recording method according to Claim 8, further comprising, after drop-jetting the first liquid A, exposing the image to active energy to polymerize the polymerizing material or crosslink the crosslinking material.

## Patentansprüche

**1.** Tintensatz für die Tintenstrahlaufzeichnung, umfassend zumindest eine erste Flüssigkeit A zur Bildung eines Bildes und zumindest eine zweite Flüssigkeit B, deren Zusammensetzung sich von der der ersten Flüssigkeit A unterscheidet,
worin
zumindest die erste Flüssigkeit A ein polymerisierendes oder vernetzendes Material umfasst,
worin zumindest eine von der ersten Flüssigkeit A und der zweiten Flüssigkeit B einen Triarylsulfoniumsalz-Polymerisationsinitiator mit einem oder mehreren Arylrückgraten umfasst, substituiert durch eine Elektronenaufnahmegruppe,
die erste Flüssigkeit A ein Färbemittel enthält, und die zweite Flüssigkeit B kein Färbemittel enthält.

**2.** Tintensatz nach Anspruch 1, worin die Gesamtsumme der Hammett-Konstanten der Substituenten, die an dem Arylrückgrat des Triarylsulfoniumsalz-Polymerisationsinitiators gebunden sind, größer als 0,46 ist.

**3.** Tintensatz nach Anspruch 1, worin die zweite Flüssigkeit B ein Tensid enthält.

**4.** Tintensatz nach Anspruch 1, worin die zweite Flüssigkeit zumindest 50 Massen-% eines lipophilen Lösungsmittels enthält, bezogen auf die Gesamtmasse der zweiten Flüssigkeit B.

**5.** Tintensatz nach Anspruch 4, worin das lipophile Lösungsmittel ein organisches Lösungsmittel mit einem Siedepunkt von mehr als 100°C ist.

**6.** Tintensatz nach Anspruch 1, worin der Triarylsulfoniumsalz-Polymerisationsinitiator in zumindest einer von der ersten Flüssigkeit A und der zweiten Flüssigkeit B in einer Menge von 0,5 bis 30 Massen-% enthalten ist, bezogen auf den gesamten Feststoffgehalt der Flüssigkeit.

**7.** Tintensatz nach Anspruch 1, worin der SP-Wert der zweiten Flüssigkeit B 35 oder weniger ist und der Unterschied zwischen dem SP-Wert der ersten Flüssigkeit A und dem der zweiten Flüssigkeit B 10 oder weniger ist.

**8.** Tintenstrahl-Aufzeichnungsverfahren, umfassend das Auftragen der zweiten Flüssigkeit B eines Tintensatzes wie in Anspruch 1 definiert, auf einen Bereich, der identisch oder breiter ist als ein Bereich eines Bildes, der unter Verwendung der ersten Flüssigkeit A gebildet werden soll, und anschließendes Tropfstrahlen der ersten Flüssigkeit A auf die zweite Flüssigkeit B, zur Bildung des Bildes.

**9.** Tintenstrahl-Aufzeichnungsverfahren nach Anspruch 8, umfassend das Tropfstrahlen eines ersten Flüssigkeitströpfchens a1 und anschließend eines Flüssigkeitströpfchens a2 der ersten Flüssigkeit A, so dass die Tröpfchen a1 und a2 einen Überlappungsbereich haben.

**10.** Tintenstrahl-Aufzeichnungsverfahren nach Anspruch 9,
worin das Überlappungsverhältnis des Überlappungsbereiches 10 bis 90% ist.

**11.** Tintenstrahl-Aufzeichnungsverfahren nach Anspruch 8,
worin die erste Flüssigkeit A 5 μs bis 400 ms nach dem Auftragen der zweiten Flüssigkeit B tropfgestrahlt wird.

**12.** Tintenstrahl-Aufzeichnungsverfahren nach Anspruch 8,
worin die Größe ,der tropfgestrahlten Flüssigkeitströpfchen A 0,1 bis 100 pl ist.

**13.** Tintenstrahl-Aufzeichnungsverfahren nach Anspruch 8,
worin die zweite Flüssigkeit B in flüssiger Form gehalten wird, bis die erste Flüssigkeit A tropfgestrahlt wird.

**14.** Tintenstrahl-Aufzeichnungsverfahren nach Anspruch 8, weiterhin umfassend, nach dem Tropfstrahlen der ersten Flüssigkeit A, das Belichten des Bildes mit aktiver Energie, zum Polymerisieren des Polymerisierungsmaterials oder Vernetzen des Vernetzungsmaterials.

## Revendications

**1.** Jeu d'encres pour l'enregistrement par jet d'encre comprenant au moins un premier liquide A pour former une image et au moins un second liquide B dont la composition diffère de celle du premier liquide A,
dans lequel :

au moins le premier liquide A contient un matériau de polymérisation ou de réticulation,
au moins l'un parmi le premier liquide A et le second liquide B contient un initiateur de polymérisation de type sel de triarylsulfonium ayant un ou plusieurs squelettes aryle substitués par un groupe accepteur d'électron,
le premier liquide A contient un colorant, et
le second liquide B ne contient pas de colorant.

**2.** Jeu d'encres selon la revendication 1, dans lequel la somme totale des constantes de Hammett des substituants liés au squelette aryle de l'initiateur de polymérisation de type sel de triarylsulfonium est supérieure à 0,46.

**3.** Jeu d'encres selon la revendication 1, dans lequel le second liquide B contient un tensioactif.

4. Jeu d'encres selon la revendication 1, dans lequel le second liquide B contient au moins 50 % en masse d'un solvant lipophile sur base de la masse totale du second liquide B.

5. Jeu d'encres selon la revendication 4, dans lequel le solvant lipophile est un solvant organique ayant un point d'ébullition de plus de 100 ˚C.

6. Jeu d'encres selon la revendication 1, dans lequel l'initiateur de polymérisation de type sel de triarylsulfonium est contenu dans au moins l'un parmi le premier liquide A et le second liquide B en une quantité de 0,5 à 30 % en masse sur base de la teneur totale en substances solides du liquide.

7. Jeu d'encres selon la revendication 1, dans lequel la valeur des ps du second liquide B est de 35 ou inférieure, et la différence entre la valeur des ps du premier liquide A et celle du second liquide B est de 10 ou inférieure.

8. Procédé d'enregistrement à jet d'encre comprenant l'application du second liquide B d'un jeu d'encres tel que défini dans la revendication 1 sur une région identique à , ou plus large qu'une région d'une image devant être formée en utilisant le premier liquide A, et puis en projetant sous forme de gouttes le premier liquide A sur le second liquide B pour former l'image.

9. Procédé d'enregistrement à jet d'encre selon la revendication 8, comprenant la projection sous forme de gouttes d'une première gouttelette de liquide a1 et d'une gouttelette suivante de liquide a2 du premier liquide A de telle sorte que les gouttelettes a1 et a2 aient une portion chevauchante.

10. Procédé d'enregistrement à jet d'encre selon la revendication 9, dans lequel le rapport de chevauchement de la portion chevauchante est de 10 % à 90 %.

11. Procédé d'enregistrement à jet d'encre selon la revendication 8, dans lequel le premier liquide A est projeté sous forme de gouttes 5 ps à 400 ms après l'application du second liquide B.

12. Procédé d'enregistrement à jet d'encre selon la revendication 8, dans lequel la taille des gouttelettes du liquide A projeté sous forme de gouttes est de 0,1 à 100 pl.

13. Procédé d'enregistrement à jet d'encre selon la revendication 8, dans lequel le second liquide B est maintenu sous une forme liquide jusqu'à ce que le premier liquide A soit projeté sous forme de gouttes.

14. Procédé d'enregistrement à jet d'encre selon la revendication 8, comprenant en outre, après projection sous forme de gouttes du premier liquide A, l'exposition de l'image à de l'énergie active pour polymériser le matériau de polymérisation ou réticuler le matériau de réticulation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63060783 A
- JP 8174997 A
- JP 3478495 B
- JP 8218018 A
- JP 3642152 B
- JP 2000135781 A
- WO 02081439 A
- EP 1113005 A
- JP 47006416 B
- JP 47003981 B
- JP 47022326 B
- JP 47023664 B
- JP 57030704 A
- JP 60026483 B
- JP 60026403 B
- JP 62081345 A
- JP 1034242 B
- US 4318791 A
- EP 0284561 A1
- JP 2211452 A
- JP 61194062 A
- JP 2009597 B
- JP 2009596 B
- JP 63061950 B
- JP 59042864 B
- EP 104143 A
- US 4837124 A
- JP 2150848 A
- JP 2096514 A
- EP 370693 A
- EP 233567 A
- EP 297443 A
- EP 297442 A
- EP 279210 A
- EP 422570 A
- US 3902144 A
- US 4933377 A
- US 4760013 A
- US 4734444 A
- US 283382 A
- US 4743528 A
- JP 63138345 A
- JP 63142345 A
- JP 63142346 A
- JP 46042363 B
- JP 52147277 B
- JP 52014278 B
- JP 52014279 B
- JP 4537377 B
- JP 4486516 B
- US 3567453 A
- US 4343891 A
- EP 109772 A
- EP 109773 A
- JP 63143537 A
- JP 59152396 A
- JP 61151197 A
- JP 63041484 A
- JP 2000249 A
- JP 2004705 A
- JP 1304453 A
- JP 1152109 A
- EP 0290750 A
- EP 046083 A
- EP 156153 A
- EP 271851 A
- EP 0388343 A
- US 3901710 A
- US 4181531 A
- JP 60198538 A
- JP 53133022 A
- EP 0199672 A
- EP 84515 A
- EP 199672 A
- EP 044115 A
- EP 0101122 A
- US 4618564 A
- US 4371605 A
- US 4431774 A
- JP 6418143 A
- JP 2245756 A
- JP 4365048 A
- JP 62006223 B
- JP 63014340 B
- JP 59174831 A
- GB 1388492 A
- JP 53133428 A
- DE 3337024
- JP 62058241 A
- JP 5281728 A
- DE 2641100
- DE 3333450
- DE 3021590
- DE 3021599
- JP 62173463 A
- JP 62183457 A
- JP 6009714 A
- JP 2001031892 A

- JP 2001040068 A
- JP 2001055507 A
- JP 2001310938 A
- JP 2001310937 A
- JP 2001220526 A
- JP 2003341217 A
- JP 2002012607 A
- JP 2002188025 A
- JP 2003026978 A
- JP 2003342503 A
- JP 4420189 A
- JP 51082102 A
- JP 52134692 A
- JP 59138205 A
- JP 60084305 A
- JP 62018537 A
- JP 6433104 A
- JP 53000702 A
- JP 55500806 B
- JP 5142772 A
- JP 56075643 A
- JP 48042965 B
- JP 55034414 B
- JP 6308727 A
- JP 6250387 A
- JP 8065779 A
- US 2322027 A
- US 2533514 A
- US 2772163 A
- US 2835579 A
- US 3594171 A
- US 3676137 A
- US 3689271 A
- US 3700454 A
- US 3748141 A
- US 3764336 A
- US 3765897 A
- US 3912515 A
- US 3936303 A
- US 4004928 A
- US 4080209 A
- US 4127413 A
- US 4193802 A
- US 4207393 A
- US 4220711 A
- US 4239851 A
- US 4278757 A
- US 4353979 A
- US 4363873 A
- US 4430421 A
- US 4430422 A
- US 4464464 A
- US 4483918 A
- US 4540657 A
- US 4684606 A
- US 4728599 A
- US 4745049 A
- US 4935321 A
- US 5013639 A
- EP 276319 A
- EP 286253 A
- EP 289820 A
- EP 309158 A
- EP 309159 A
- EP 309160 A
- EP 509311 A
- EP 510576 A
- EP 147009 A
- EP 157147 A
- EP 159573 A
- EP 225240 A
- GB 2091124 A
- JP 48047335 A
- JP 50026530 A
- JP 51025133 A
- JP 51026036 A
- JP 51027921 A
- JP 51027922 A
- JP 51149028 A
- JP 52046816 A
- JP 53001520 A
- JP 53001521 A
- JP 53015127 A
- JP 53146622 A
- JP 54091325 A
- JP 54106228 A
- JP 54118246 A
- JP 55059464 A
- JP 56064333 A
- JP 56081836 A
- JP 59204041 A
- JP 61084641 A
- JP 62118345 A
- JP 62247364 A
- JP 63167357 A
- JP 63214744 A
- JP 63301941 A
- JP 649452 A
- JP 649454 A
- JP 6468745 A
- JP 1101543 A
- JP 1102454 A
- JP 2000792 A
- JP 2004239 A
- JP 2043541 A
- JP 4029237 A
- JP 4030165 A
- JP 4232946 A
- JP 4346338 A
- JP 2001181549 A

**Non-patent literature cited in the description**


- *J. Amer. Chem. Soc,* 1990, vol. 112 (16
- *J. Org. Chem. pp,* 1988, 6004-6015
- **BRUCE M ; MONROE et al.** *Chemical Revue,* 1993, vol. 93, 435
- **R. S. DAVIDSON.** *Journal of Photochemistry and biology A: Chemistry,* 1993, vol. 73, 81
- **J. P. FAUSSIER.** Photoinitiated Polymerization-Theory and Application. *Rapra Review vol. 9, Report, Rapra Technology,* 1998, vol. 9
- **M. TSUNOOKA et al.** *Prog. Polym. Sci.,* 1996, vol. 21 (1
- Organic Materials for Imaging. Bun-Shin, 1993, 187-192
- **F. D. SAEVA.** *Topics in Current Chemistry,* 1990, vol. 156, 59
- **G.G. MASLAK.** *Topics in Current Chemistry,* 1993, vol. 168, 1
- **H.B. SHUSTER et al.** *JACS,* 1990, vol. 112, 6329
- **I. D. F. EATON et al.** *JACS,* 1980, vol. 102, 3298
- **J. P. FOUASSIER ; J. F. RABEK.** *RADIATION CURING IN POLYMER SCIENCE AND TECHNOLOGY,* 1993, 77-117
- **WAKABAYASHI et al.** *Bull. Chem. Soc. Japan,* 1969, vol. 42, 2924
- **F. C. SCHAEFER et al.** *J. Org. Chem.,* 1964, vol. 29, 1527
- **M. R. SANDER et al.** *Journal of Polymer Society,* 1972, vol. 10, 3173